# EUROPEAN PATENT APPLICATION

(11) **EP 2 036 951 A1**
(43) Date of publication of application: **18.03.2009**
(21) Application number: 07790196.5
(22) Date of filing: 21.06.2007
(51) Int. Cl.: C08L 81/02, G02B 1/04

(54) **POLYMERIZABLE COMPOSITION, RESIN USING THE SAME, OPTICAL COMPONENT AND LENS**

(30) Priority: 23.06.2006 JP 2006174091; 29.03.2007 JP 2007088368
(71) Applicant: Mitsui Chemicals, Inc., Tokyo 105-7117 (JP)
(72) Inventor: USUGI, Shinichi, Sodegaura-shi, Chiba 2990265 (JP); NAKAMURA, Mitsuo, Sodegaura-shi, Chiba 2990265 (JP); NARUSE, Hiroshi, Sodegaura-shi, Chiba 2990265 (JP); OTSUJI, Atsuo, Tokyo 1057117 (JP); KOHGO, Osamu, Omuta- shi, Fukuoka; 8368610 (JP); HAYASHI, Hidetoshi, Omuta-shi, Fukuoka 8368610 (JP); KOBAYASHI, Seiichi, Omuta-shi, Fukuoka 8368610 (JP)
(74) Representative: Stuart, Ian Alexander
(86) International application number: PCT/JP2007/000670
(87) International publication number: WO 2007/148439

(57) **Abstract**

Disclosed is a polymerizable composition containing a compound represented by the general formula (1) below and a bluing agent,
wherein, in the general formula (1) below, M represents a metal atom; X₁ and X₂ each independently represent a sulfur atom or an oxygen atom; R₁ represents a divalent organic group; m represents 0 or an integer of not less than 1; p represents an integer of not less than 1 but not more than n; n represents the valence of the metal atom M; Ys independently represent an inorganic or organic residue, and when n-p is not less than 2, Ys may combine together to form a ring containing the metal atom M.

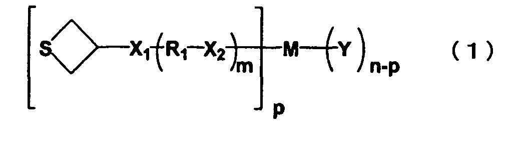

## Description

### TECHNICAL FIELD

The present invention relates to a polymerizable composition, a resin obtained by polymerizing the polymerizable composition, optical component composed of the resin and a lens.

### BACKGROUND ART

Since an inorganic glass has excellent general properties such as excellent transparency and low optical anisotropy, the inorganic glass has been widely used in many fields as a transparent material. However, the inorganic glass has drawbacks such that it is heavy and easily broken, and has bad productivity when producing a product by molding and processing. As a result, a transparent organic polymer material (optical resin) has been used as a material in place of the inorganic glass. As the optical component obtained from such an optical resin, there are exemplified, for example, a spectacle lens for vision correction, and a plastic lens such as a camera lens of a digital camera and the like. The optical members have been put to practical use and have come into use. In particular, for the purpose of use in a spectacle lens for vision correction, the organic polymer material is lightweight and hardly broken, and can be dyed for granting great fashionability, as compared to the lens made of an inorganic glass. Making good use of such merits, the organic polymer material has been widely used.

In the past, a crosslinking type resin obtained by casting polymerization of diethylene glycol bisallylcarbonate as an optical resin used for a spectacle lens under heating (hereinafter commonly referred to as a DAC resin) has been put to practical use. The crosslinking type resin has merits such that transparency and heat resistance are excellent, and the chromatic aberration is low. Due to such merits, it has been used the most for a general-purpose plastic spectacle lens for vision correction. However, there are problems such that wearing comfort and fashionability are worsened and the like since the central or peripheral thickness (edge thickness) of the plastic lens becomes large because of the low refractive index (1.50). Therefore, a resin for a plastic lens with a high refractive index capable of solving these problems has been demanded and developed accordingly.

In such a trend, highly superior characteristics have been achieved such that polythiourethane comprising a sulfur atom obtained by casting polymerization of a diisocyanate compound with a polythiol compound is excellent in its transparency and impact resistance, while attaining a high refractive index (1.6 to 1.7) and having relatively low chromatic aberration. Such polythiourethane has been used for the purpose of a high-quality plastic spectacle lens for vision correction in which the thickness is thin and its weight is light.

On the other hand, in a trend to pursue an optical resin having a much higher refractive index, there have been proposed several resins such as a transparent resin obtained by polymerization of a compound having an episulfide group in Patent Documents 1 and 2 or a compound having a thietane group in Patent Document 3, a resin obtained by polymerization of a Se-containing compound in Patent Documents 3 and 4, and the like. However, there have been demanded further improvements respectively in view of mechanical properties for the transparent resin obtained by polymerization of a compound having an episulfide group, the polymerization ability of the compound having a thietane group, and the safety of the resin obtained by polymerization of a metal-containing compound such as Se or the like. In recent years, there has been demanded an optical resin having required general properties (transparency, thermal properties, mechanical properties and the like) as a plastic lens, while attaining a much higher refractive index, for example, exceeding 1.7. The development of such an optical resin has been made. Under these circumstances, a metal-containing thietane compound has been newly found and an optical resin having a high refractive index of exceeding 1.7 has been proposed in Patent Document 5.

It has been demanded that such an optical resin is excellent in transparency with a high refractive index. However, the resin is generally yellow colored in some cases. For example, there is an object of improving the color tone for the optical resin with a high refractive index of exceeding 1.7. In response to the object, there has been proposed a method involving adding a bluing agent to the episulfide compound and the improvement effect of the prescribed color tone has been obtained in Patent Document 6.

Patent Document 1: Japanese Patent Laid-open No. 1997-110979
Patent Document 2: Japanese Patent Laid-open No. 1999-322930
Patent Document 3: Japanese Patent Laid-open No. 2003-327583
Patent Document 4: Japanese Patent Laid-open No. 1999-140046
Patent Document 5: International Publication Pamphlet No. 2005/095490
Patent Document 6: Japanese Patent Laid-open No. 2001-166101

### DISCLOSURE OF THE INVENTION

### PROBLEMS TO BE SOLVED BY THE INVENTION

However, it was generally difficult to regulate or suppress the color tone of an optical resin using a bluing agent because miscibility or compatibility between the bluing agent and the resin was not good or the like. For example, because of the interaction between a component in the optical resin and the bluing agent, the color tone was changed so that an effect by the color tone of the bluing agent in use was difficult to be obtained in some cases.

The present invention is to provide a polymerizable composition which gives a resin excellent in the refractive index attaining a very high refractive index (ne) of exceeding 1.7 and transparency while having general properties (transparency, thermal properties, mechanical properties and the like) required for optical components such as plastic lenses or the like.

### MEANS FOR SOLVING THE PROBLEMS

In order to solve the above problems, the present inventors have conducted an extensive study on the previously proposed metal-containing thietane compound and as a result, the resin obtained by polymerizing the metal-containing thietane compound with a bluing agent suppresses yellowing of the optical resin, while a resin excellent in transparency and having a reduced yellowness index is obtained. Thus, the present invention has been completed.
That is, the present invention is specified by the following matters:
[1] a polymerizable composition containing a compound represented by the general formula (1) below having one or more thietane groups and a metal atoms in a molecule, and a bluing agent,

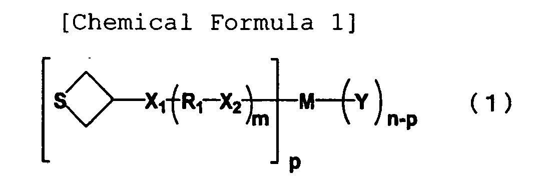

wherein, in the above general formula (1), M represents a metal atom; X₁ and X₂ each independently represent a sulfur atom or an oxygen atom; R₁ represents a divalent organic group; m represents 0 or an integer of not less than 1; p represents an integer of not less than 1 but not more than n; n represents the valence of the metal atom M; Ys each independently represent an inorganic or organic residue; and when n-p is not less than 2, Ys may combine together to form a ring containing the metal atom M;
[2] the polymerizable composition as set forth in [1], further containing a thiol compound;
[3] the polymerizable composition as set forth in [2], further containing an epoxy compound and/or an episulfide compound;
[4] the polymerizable composition as set forth in [3], wherein the total amount of the thiol compound, the epoxy compound and the episulfide compound is not less than 1 but not more than 50 weight parts based on the total 100 weight parts of the compound represented by the general formula (1), the thiol compound, the epoxy compound and the episulfide compound;
[5] the polymerizable composition as set forth in [1], wherein the bluing agent is a dye;
[6] the polymerizable composition as set forth in [5], wherein the bluing agent is a dye containing one or two or more dyes selected from blue based dyes and violet based dyes;
[7] the polymerizable composition as set forth in [6], wherein the content of the bluing agent is in the range of 0.001 to 500 ppm based on the total weight of a polymerizable compound contained in the polymerizable composition;
[8] the polymerizable composition as set forth in [1], wherein the metal atom is any of atoms belonging to Groups 4, 8, 10, 11, 12, 13, 14 and 15 on the periodic table in the longer form;
[9] the polymerizable composition as set forth in [8], wherein the metal atom is any of atoms belonging to Groups 4, 12, 13 and 14 on the periodic table in the longer form;
[10] the polymerizable composition as set forth in [9], wherein the metal atom is a Sn atom;
[11] the polymerizable composition as set forth in [1], wherein m is 0;
[12] the polymerizable composition as set forth in [11], wherein X₁ is a sulfur atom;
[13] the polymerizable composition as set forth in [12], wherein n is p;
[14] the polymerizable composition as set forth in [13], wherein the metal atom is a Sn atom;
[15] the polymerizable composition as set forth in [14], further containing a thiol compound;
[16] the polymerizable composition as set forth in [15], further containing an epoxy compound and/or an episulfide compound;
[17] a method for producing a resin comprising a step of subjecting the polymerizable composition as set forth in [1] to casting polymerization;
[18] a resin obtained by polymerizing the polymerizable composition as set forth in [1];
[19] an optical component composed of the resin as set forth in [18]; and
[20] a lens composed of the resin as set forth in [18].

### EFFECT OF THE INVENTION

The resin obtained by polymerizing the polymerizable composition of the present invention is excellent in transparency, has a reduced yellowness index and has a high refractive index (ne) of exceeding 1.7. For example, the resin is useful as a resin used for an optical component such as a plastic lens or the like.

### BEST MODE FOR CARRYING OUT THE INVENTION

The present invention will be described in more detail below.

The present invention relates to a polymerizable composition containing a compound represented by the general formula (1) below and a bluing agent.
Each component will be explained in detail below by using specific examples, but the present invention is not restricted to the following exemplified compounds. Further, for each component, in the present invention, the exemplified compounds may be used singly, or a plurality of compounds may be used in combination.

Firstly, the general formula (1) will be mentioned. Incidentally, the polymerizable composition of the present invention is a compound represented by the general formula (1) below as a compound represented by the general formula (1) below, and a plurality of different compounds may be used in combination.

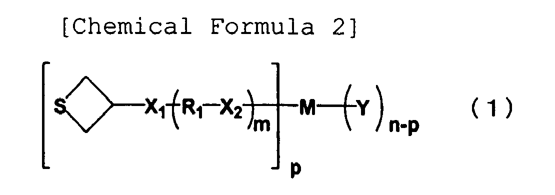

wherein, in the above general formula (1), M represents a metal atom; X₁ and X₂ each independently represent a sulfur atom or an oxygen atom; R₁ represents a divalent organic group; m represents 0 or an integer of not less than 1; p represents an integer of not less than 1 but not more than n; n represents the valence of the metal atom M; Ys each independently represent an inorganic or organic residue; and when n-p is not less than 2, Ys may combine together to form a ring containing the metal atom M.

Firstly, M in the above general formula (1) will be explained.
In the above general formula (1), M represents a metal atom.
Examples of M include elements belonging to Group 11 such as a Cu atom, an Au atom, an Ag atom and the like on the periodic table in the longer form (hereinafter, the same); elements belonging to Group 12 such as a Zn atom and the like; elements belonging to Group 13 such as an A1 atom and the like; elements belonging to Group 4 such as a Zr atom, a Ti atom and the like; elements belonging to Group 14 such as a Sn atom, a Si atom, a Ge atom, a Pb atom and the like; elements belonging to Group 15 such as a Sb atom, a Bi atom and the like; and elements belonging to Group 8 or 10 such as a Fe atom, a Pt atom and the like.

M is preferably elements belonging to Group 14 such as a Sn atom, a Si atom, a Ge atom, a Pb atom and the like; elements belonging to Group 4 such as a Zr atom, a Ti atom and the like; elements belonging to Group 13 such as an Al atom and the like; or elements belonging to Group 12 such as a Zn atom and the like, further preferably elements belonging to Group 14 such as a Sn atom, a Si atom, a Ge atom and the like; or elements belonging to Group 4 such as a Zr atom, a Ti atom and the like, and further specifically a Sn atom.

Next, in the above general formula (1), a group bonded to M containing a thietanyl group will be described. In the above general formula (1), X₁ and X₂ each independently represent a sulfur atom or an oxygen atom. Considering the desired effect of the present invention that is a high refractive index, as X₁ and X₂, a sulfur atom is more preferable.

In the above general formula (1), R₁ represents a divalent organic group.
Examples of such a divalent organic group include a chained or cyclic aliphatic group, an aromatic group and an aromatic-aliphatic group, and preferable examples thereof include a chained aliphatic group having 1 to 20 carbon atoms, a cyclic aliphatic group having 3 to 20 carbon atoms, an aromatic group having 5 to 20 carbon atoms and an aromatic-aliphatic group having 6 to 20 carbon atoms.

More specifically, in R₁, this divalent organic group is a chained or cyclic aliphatic group, an aromatic group or an aromatic-aliphatic group, and preferably a substituted or unsubstituted chained or cyclic aliphatic group having 1 to 20 carbon atoms such as a methylene group, an ethylene group, a 1,2-dichloroethylene group, a trimethylene group, a tetramethylene group, a pentamethylene group, a cyclopentylene group, a hexamethylene group, a cyclohexylene group, a heptamethylene group, an octamethylene group, a nonamethylene group, a decamethylene group, an undecamethylene group, a dodecamethylene group, a tridecamethylene group, a tetradecamethylene group, a pentadecamethylene group and the like; a substituted or unsubstituted aromatic group having 5 to 20 carbon atoms such as a phenylene group, a chlorophenylene group, a naphthylene group, an indenylene group, an anthracenylene group, a fluorenylene group and the like; and a substituted or unsubstituted aromatic-aliphatic group having 6 to 20 carbon atoms such as a -C₆H₄-CH₂- group, a -CH₂-C₆H₄-CH₂- group, a -CH₂-C₆H₃ (Cl) -CH₂- group, a -C₁₀H₆-CH₂- group, a -CH₂-C₁₀H₆-CH₂- group, a -CH₂CH₂-C₆H₄-CH₂CH₂- group and the like.

R₁ is more preferably a substituted or unsubstituted chained or cyclic aliphatic group having 1 to 6 carbon atoms such as a methylene group, an ethylene group, a 1,2-dichloroethylene group, a trimethylene group, a cyclopentylene group, a cyclohexylene group and the like;
a substituted or unsubstituted aromatic group having 5 to 15 carbon atoms such as a phenylene group, a chlorophenylene group, a naphthylene group, an indenylene group, an anthracenylene group, a fluorenylene group and the like; and
a substituted or unsubstituted aromatic-aliphatic group having 6 to 15 carbon atoms such as a -C₆H₄-CH₂- group, a -CH₂-C₆H₄-CH₂- group, a -CH₂-C₆H₃ (Cl) -CH₂- group, a -C₁₀H₆-CH₂- group, a -CH₂-C₁₀H₆-CH₂-group, a -CH₂CH₂-C₆H₄-CH₂CH₂- group and the like.

Such a divalent organic group may contain a hetero atom other than a carbon atom and a hydrogen atom in the group. Examples of the hetero atom include an oxygen atom or a sulfur atom. However, in consideration of the desired effect of the present invention, preferably used is a sulfur atom.

In the above general formula (1), m represents 0 or an integer of not less than 1.
m is preferably an integer of 0 to 4, more preferably an integer of 0 to 2 and further preferably an integer of 0 or 1. Further more preferably, m is 0 and X₁ is a sulfur atom. At this time, the above general formula (1) is represented by the following general formula (12),

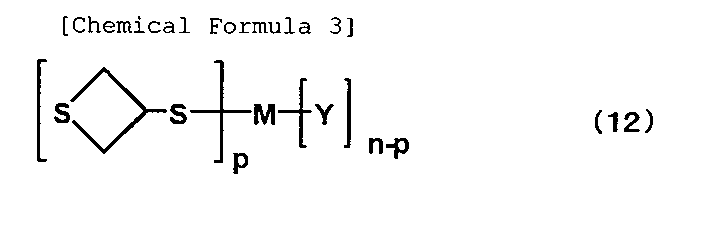

wherein, in the above general formula (12), M, Y, p and n each represent the same as M, Y, p and n in the above general formula (1).

Incidentally, in the above general formula (12), n is preferably p, and n is further preferably p and M is Sn.

Next, in the above general formula (1), a -(Y)ₙ₋ₚ group to be bonded to M will be described.
In the above general formula (1), n represents the valence of the metal atom M.

In the above general formula (1), p represents an integer of not less than 1 but not more than n.
p is preferably n, n-1 or n-2, and more preferably n or n-1.

In the above general formula (1), Ys each independently represent an inorganic or organic residue.
When a compound represented by the above general formula (1) contains a plurality of Ys, a plurality of Ys each independently represent an inorganic or organic residue. That is, a plurality of Ys may be the same groups or different groups. Further specifically, a plurality of Ys may be all different, some of a plurality of Ys may be the common groups, or all of a plurality of Ys may be the same.

The inorganic or organic residue constituting Y is not particularly limited, but examples thereof include a hydrogen atom, a halogen atom, a hydroxyl group, a thiol group, a substituted or unsubstituted alkyl group, a substituted or unsubstituted aryl group, a substituted or unsubstituted aralkyl group, a substituted or unsubstituted alkoxy group, a substituted or unsubstituted alkylthio group, a substituted or unsubstituted aryloxy group, and a substituted or unsubstituted arylthio group.

Among these, a halogen atom, a substituted or unsubstituted alkyl group, a substituted or unsubstituted aryl group, a substituted or unsubstituted aralkyl group, a substituted or unsubstituted alkoxy (alkyloxy) group, a substituted or unsubstituted alkylthio group, a substituted or unsubstituted aryloxy group, and a substituted or unsubstituted arylthio group will be described below.

Concrete examples of the halogen atom include a fluorine atom, a chlorine atom, a bromine atom and an iodine atom.
Concrete examples of the substituted or unsubstituted alkyl group include a straight chained alkyl group having 1 to 10 carbon atoms in total such as a methyl group, an ethyl group, an n-propyl group, an n-butyl group, an n-pentyl group, an n-hexyl group and the like;
a branched alkyl group having 3 to 10 carbon atoms in total such as an iso-propyl group, an isobutyl group, a sec-butyl group, an isopentyl group, a sec-pentyl group, a 1-methylpentyl group, a 2-methylpentyl group, a 3-methylpentyl group, a 4-methylpentyl group, a 1-ethylbutyl group, a 2-ethylbutyl group, a 1-methylhexyl group, a 2-methylhexyl group, a 3-methylhexyl group, a 4-methylhexyl group, a 5-methylhexyl group, a 1-ethylpentyl group, a 2-ethylpentyl group, a 3-ethylpentyl group, a 1-n-propylbutyl group, a 1-iso-propylbutyl group, a 1-iso-propyl-2-methylpropyl group, a 1-methylheptyl group, a 2-methylheptyl group, a 3-methylheptyl group, a 4-methylheptyl group, a 5-methylheptyl group, a 6-methylheptyl group, a 1-ethylhexyl group, a 2-ethylhexyl group, a 3-ethylhexyl group, a 4-ethylhexyl group, a 1-n-propylpentyl group, a 2-n-propylpentyl group, a 1-iso-propylpentyl group, a 2-iso-propylpentyl group, a 1-n-butylbutyl group, a 1-iso-butylbutyl group, a 1-sec-butylbutyl group, a 1-tert-butylbutyl group, a 2-tert-butylbutyl group, a tert-butyl group, a tert-pentyl group, a 1,1-dimethylbutyl group, a 1,2-dimethylbutyl group, a 1,3-dimethylbutyl group, a 2,3-dimethylbutyl group, a 1-ethyl-2-methylpropyl group, a 1,1-dimethylpentyl group, a 1,2-dimethylpentyl group, a 1,3-dimethylpentyl group, a 1,4-dimethylpentyl group, a 2,2-dimethylpentyl group, a 2,3-dimethylpentyl group, a 2,4-dimethylpentyl group, a 3,3-dimethylpentyl group, a 3,4-dimethylpentyl group, a 1-ethyl-1-methylbutyl group, a 1-ethyl-2-methylbutyl group, a 1-ethyl-3-methylbutyl group, a 2-ethyl-1-methylbutyl group, a 2-ethyl-3-methylbutyl group, a 1,1-dimethylhexyl group, a 1,2-dimethylhexyl group, a 1,3-dimethylhexyl group, a 1,4-dimethylhexyl group, a 1,5-dimethylhexyl group, a 2,2-dimethylhexyl group, a 2,3-dimethylhexyl group, a 2,4-dimethylhexyl group, a 2,5-dimethylhexyl group, a 3,3-dimethylhexyl group, a 3,4-dimethylhexyl group, a 3,5-dimethylhexyl group, a 4,4-dimethylhexyl group, a 4,5-dimethylhexyl group, a 1-ethyl-2-methylpentyl group, a 1-ethyl-3-methylpentyl group, a 1-ethyl-4-methylpentyl group, a 2-ethyl-1-methylpentyl group, a 2-ethyl-2-methylpentyl group, a 2-ethyl-3-methylpentyl group, a 2-ethyl-4-methylpentyl group, a 3-ethyl-1-methylpentyl group, a 3-ethyl-2-methylpentyl group, a 3-ethyl-3-methylpentyl group, a 3-ethyl-4-methylpentyl group, a 1-n-propyl-1-methylbutyl group, a 1-n-propyl-2-methylbutyl group, a 1-n-propyl-3-methylbutyl group, a 1-iso-propyl-1-methylbutyl group, a 1-iso-propyl-2-methylbutyl group, a 1-iso-propyl-3-methylbutyl group, a 1,1-diethylbutyl group, a 1,2-diethylbutyl group, a 1,1,2-trimethylpropyl group, a 1,2,2-trimethylpropyl group, a 1,1,2-trimethylbutyl group, a 1,1,3-trimethylbutyl group, a 1,2,3-trimethylbutyl group, a 1,2,2-trimethylbutyl group, a 1,3,3-trimethylbutyl group, a 2,3,3-trimethylbutyl group, a 1,1,2-trimethylpentyl group, a 1,1,3-trimethylpentyl group, a 1,1,4-trimethylpentyl group, a 1,2,2-trimethylpentyl group, a 1,2,3-trimethylpentyl group, a 1,2,4-trimethylpentyl group, a 1,3,4-trimethylpentyl group, a 2,2,3-trimethylpentyl group, a 2,2,4-trimethylpentyl group, a 2,3,4-trimethylpentyl group, a 1,3,3-trimethylpentyl group, a 2,3,3-trimethylpentyl group, a 3,3,4-trimethylpentyl group, a 1,4,4-trimethylpentyl group, a 2,4,4-trimethylpentyl group, a 3,4,4-trimethylpentyl group, a 1-ethyl-1,2-dimethylbutyl group, a 1-ethyl-1,3-dimethylbutyl group, a 1-ethyl-2,3-dimethylbutyl group, a 2-ethyl-1,1-dimethylbutyl group, a 2-ethyl-1,2-dimethylbutyl group, a 2-ethyl-1,3-dimethylbutyl group, a 2-ethyl-2,3-dimethylbutyl group and the like; and
a saturated cyclic alkyl group having 5 to 10 carbon atoms in total such as a cyclopentyl group, a cyclohexyl group, a methylcyclopentyl group, a methoxycyclopentyl group, a methoxycyclohexyl group, a methylcyclohexyl group, a 1,2-dimethylcyclohexyl group, a 1,3-dimethylcyclohexyl group, a 1,4-dimethylcyclohexyl group, an ethylcyclohexyl group and the like.

Concrete examples of the substituted or unsubstituted aryl group include aromatic hydrocarbons having not more than 20 carbon atoms in total such as a phenyl group, a naphthyl group, an anthranyl group, a cyclopentadienyl group and the like;
an alkyl-substituted aryl group having not more than 20 carbon atoms in total such as a 2-methylphenyl group, a 3-methylphenyl group, a 4-methylphenyl group, a 2-ethylphenyl group, a propylphenyl group, a butylphenyl group, a hexylphenyl group, a cyclohexylphenyl group, an octylphenyl group, a 2-methyl-1-naphthyl group, a 3-methyl-1-naphthyl group, a 4-methyl-1-naphthyl group, a 5-methyl-1-naphthyl group, a 6-methyl-1-naphthyl group, a 7-methyl-1-naphthyl group, a 8-methyl-1-naphthyl group, a 1-methyl-2-naphthyl group, a 3-methyl-2-naphthyl group, a 4-methyl-2-naphthyl group, a 5-methyl-2-naphthyl group, a 6-methyl-2-naphthyl group, a 7-methyl-2-naphthyl group, a 8-methyl-2-naphthyl group, a 2-ethyl-1-naphthyl group, a 2,3-dimethylphenyl group, a 2,4-dimethylphenyl group, a 2,5-dimethylphenyl group, a 2,6-dimethylphenyl group, a 3,4-dimethylphenyl group, a 3,5-dimethylphenyl group, a 3,6-dimethylphenyl group, a 2,3,4-trimethylphenyl group, a 2,3,5-trimethylphenyl group, a 2,3,6-trimethylphenyl group, a 2,4,5-trimethylphenyl group, a 2,4,6-trimethylphenyl group, a 3,4,5-trimethylphenyl group and the like;
a monoalkoxyaryl group having not more than 20 carbon atoms in total wherein a substituted or unsubstituted alkyloxy group having not more than 10 carbon atoms is substituted, such as a 2-methoxyphenyl group, a 3-methoxyphenyl group, a 4-methoxyphenyl group, a 2-ethoxyphenyl group, a propoxyphenyl group, a butoxyphenyl group, a hexyloxyphenyl group, a cyclohexyloxyphenyl group, an octyloxyphenyl group, a 2-methoxy-1-naphthyl group, a 3-methoxy-1-naphthyl group, a 4-methoxy-1-naphthyl group, a 5-methoxy-1-naphthyl group, a 6-methoxy-1-naphthyl group, a 7-methoxy-1-naphthyl group, a 8-methoxy-1-naphthyl group, a 1-methoxy-2-naphthyl group, a 3-methoxy-2-naphthyl group, a 4-methoxy-2-naphthyl group, a 5-methoxy-2-naphthyl group, a 6-methoxy-2-naphthyl group, a 7-methoxy-2-naphthyl group, a 8-methoxy-2-naphthyl group, a 2-ethoxy-1-naphthyl group and the like;
a dialkoxyaryl group having not more than 20 carbon atoms in total wherein a substituted or unsubstituted alkyloxy group having not more than 10 carbon atoms is substituted, such as a 2,3-dimethoxyphenyl group, a 2,4-dimethoxyphenyl group, a 2,5-dimethoxyphenyl group, a 2,6-dimethoxyphenyl group, a 3,4-dimethoxyphenyl group, a 3,5-dimethoxyphenyl group, a 3,6-dimethoxyphenyl group, a 4,5-dimethoxy-1-naphthyl group, a 4,7-dimethoxy-1-naphthyl group, a 4,8-dimethoxy-1-naphthyl group, a 5,8-dimethoxy-1-naphthyl group, a 5,8-dimethoxy-2-naphthyl group and the like;
a trialkoxyaryl group having not more than 20 carbon atoms in total wherein a substituted or unsubstituted alkyloxy group having not more than 10 carbon atoms is substituted, such as a 2,3,4-trimethoxyphenyl group, a 2,3,5-trimethoxyphenyl group, a 2,3,6-trimethoxyphenyl group, a 2,4,5-trimethoxyphenyl group, a 2,4,6-trimethoxyphenyl group, a 3,4,5-trimethoxyphenyl group and the like; and
an aryl group having not more than 20 carbon atoms in total wherein a halogen atom is substituted, such as a chlorophenyl group, a dichlorophenyl group, a trichlorophenyl group, a bromophenyl group, a dibromophenyl group, an iodophenyl group, a fluorophenyl group, a chloronaphthyl group, a bromonaphthyl group, a difluorophenyl group, a trifluorophenyl group, a tetrafluorophenyl group, a pentafluorophenyl group and the like.

Concrete examples of the substituted or unsubstituted aralkyl group include an aralkyl group having not more than 12 carbon atoms in total such as a benzyl group, a phenethyl group, a phenylpropyl group, a naphthylethyl group and the like; or a methyl group, an ethyl group and a propyl group having an aryl group cited in the concrete examples of the substituted or unsubstituted aryl group beforehand in a side chain.

Concrete examples of the substituted or unsubstituted alkyloxy group include a straight chained or branched alkoxy group having 1 to 10 carbon atoms in total such as a methoxy group, an ethoxy group, an n-propoxy group, an iso-propoxy group, an n-butoxy group, an iso-butoxy group, a tert-butoxy group, an n-pentyloxy group, an iso-pentyloxy group, an n-hexyloxy group, an iso-hexyloxy group, a 2-ethylhexyloxy group, a 3,5,5-trimethylhexyloxy group, an n-heptyloxy group, an n-octyloxy group, an n-nonyloxy group and the like;
a cycloalkoxy group having 5 to 10 carbon atoms in total such as a cyclopentyloxy group, a cyclohexyloxy group and the like;
an alkoxyalkoxy group having 2 to 10 carbon atoms in total such as a methoxymethoxy group, an ethoxymethoxy group, an ethoxyethoxy group, an n-propoxymethoxy group, an iso-propoxymethoxy group, an n-propoxyethoxy group, an iso-propoxyethoxy group, an n-butoxyethoxy group, an iso-butoxyethoxy group, a tert-butoxyethoxy group, an n-pentyloxyethoxy group, an iso-pentyloxyethoxy group, an n-hexyloxyethoxy group, an iso-hexyloxyethoxy group, an n-heptyloxyethoxy group and the like; and
an aralkyloxy group such as a benzyloxy group and the like.

Concrete examples of the substituted or unsubstituted alkylthio group include a straight chained or branched alkylthio group having 1 to 10 carbon atoms in total such as a methylthio group, an ethylthio group, an n-propylthio group, an iso-propylthio group, an n-butylthio group, an iso-butylthio group, a sec-butylthio group, a t-butylthio group, an n-pentylthio group, an iso-pentylthio group, an n-hexylthio group, an iso-hexylthio group, a 2-ethylhexylthio group, a 3,5,5-trimethylhexylthio group, an n-heptylthio group, an n-octylthio group, an n-nonylthio group and the like;
a cycloalkylthio group having 5 to 10 carbon atoms in total such as a cyclopentylthio group, a cyclohexylthio group and the like;
an alkoxyalkylthio group having 2 to 10 carbon atoms in total such as a methoxyethylthio group, an ethoxyethylthio group, an n-propoxyethylthio group, an iso-propoxyethylthio group, an n-butoxyethylthio group, an iso-butoxyethylthio group, a tert-butoxyethylthio group, an n-pentyloxyethylthio group, an iso-pentyloxyethylthio group, an n-hexyloxyethylthio group, an iso-hexyloxyethylthio group, an n-heptyloxyethylthio group and the like;
an aralkylthio group such as a benzylthio group and the like; and
an alkylthioalkylthio group having 2 to 10 carbon atoms in total such as a methylthioethylthio group, an ethylthioethylthio group, an n-propylthioethylthio group, an iso-propylthioethylthio group, an n-butylthioethylthio group, an iso-butylthioethylthio group, a tert-butylthioethylthio group, an n-pentylthioethylthio group, an iso-pentylthioethylthio group, an n-hexylthioethylthio group, an iso-hexylthioethylthio group, an n-heptylthioethylthio group and the like.

Concrete examples of the substituted or unsubstituted aryloxy group include an unsubstituted or alkyl-substituted aryloxy group having not more than 20 carbon atoms in total such as a phenyloxy group, a naphthyloxy group, an anthranyloxy group, a 2-methylphenyloxy group, a 3-methylphenyloxy group, a 4-methylphenyloxy group, a 2-ethylphenyloxy group, a propylphenyloxy group, a butylphenyloxy group, a hexylphenyloxy group, a cyclohexylphenyloxy group, an octylphenyloxy group, a 2-methyl-1-naphthyloxy group, a 3-methyl-1-naphthyloxy group, a 4-methyl-1-naphthyloxy group, a 5-methyl-1-naphthyloxy group, a 6-methyl-1-naphthyloxy group, a 7-methyl-1-naphthyloxy group, a 8-methyl-1-naphthyloxy group, a 1-methyl-2-naphthyloxy group, a 3-methyl-2-naphthyloxy group, a 4-methyl-2-naphthyloxy group, a 5-methyl-2-naphthyloxy group, a 6-methyl-2-naphthyloxy group, a 7-methyl-2-naphthyloxy group, a 8-methyl-2-naphthyloxy group, a 2-ethyl-1-naphthyloxy group, a 2,3-dimethylphenyloxy group, a 2,4-dimethylphenyloxy group, a 2,5-dimethylphenyloxy group, a 2,6-dimethylphenyloxy group, a 3,4-dimethylphenyloxy group, a 3,5-dimethylphenyloxy group, a 3,6-dimethylphenyloxy group, a 2,3,4-trimethylphenyloxy group, a 2,3,5-trimethylphenyloxy group, a 2,3,6-trimethylphenyloxy group, a 2,4,5-trimethylphenyloxy group, a 2,4,6-trimethylphenyloxy group, a 3,4,5-trimethylphenyloxy group and the like;
a monoalkoxyaryloxy group having not more than 20 carbon atoms in total wherein a substituted or unsubstituted alkyloxy group having not more than 10 carbon atoms is substituted, such as a 2-methoxyphenyloxy group, a 3-methoxyphenyloxy group, a 4-methoxyphenyloxy group, a 2-ethoxyphenyloxy group, a propoxyphenyloxy group, a butoxyphenyloxy group, a hexyloxyphenyloxy group, a cyclohexyloxyphenyloxy group, an octyloxyphenyloxy group, a 2-methoxy-1-naphthyloxy group, a 3-methoxy-1-naphthyloxy group, a 4-methoxy-1-naphthyloxy group, a 5-methoxy-1-naphthyloxy group, a 6-methoxy-1-naphthyloxy group, a 7-methoxy-1-naphthyloxy group, a 8-methoxy-1-naphthyloxy group, a 1-methoxy-2-naphthyloxy group, a 3-methoxy-2-naphthyloxy group, a 4-methoxy-2-naphthyloxy group, a 5-methoxy-2-naphthyloxy group, a 6-methoxy-2-naphthyloxy group, a 7-methoxy-2-naphthyloxy group, a 8-methoxy-2-naphthyloxy group, a 2-ethoxy-1-naphthyloxy group and the like;
a dialkoxyaryloxy group having not more than 20 carbon atoms in total wherein a substituted or unsubstituted alkyloxy group having not more than 10 carbon atoms is substituted, such as a 2,3-dimethoxyphenyloxy group, a 2,4-dimethoxyphenyloxy group, a 2,5-dimethoxyphenyloxy group, a 2,6-dimethoxyphenyloxy group, a 3,4-dimethoxyphenyloxy group, a 3,5-dimethoxyphenyloxy group, a 3,6-dimethoxyphenyloxy group, a 4,5-dimethoxy-1-naphthyloxy group, a 4,7-dimethoxy-1-naphthyloxy group, a 4,8-dimethoxy-1-naphthyloxy group, a 5,8-dimethoxy-1-naphthyloxy group, a 5,8-dimethoxy-2-naphthyloxy group and the like;
a trialkoxyaryloxy group having not more than 20 carbon atoms in total wherein a substituted or unsubstituted alkyloxy group having not more than 10 carbon atoms is substituted, such as a 2,3,4-trimethoxyphenyloxy group, a 2,3,5-trimethoxyphenyloxy group, a 2,3,6-trimethoxyphenyloxy group, a 2,4,5-trimethoxyphenyloxy group, a 2,4,6-trimethoxyphenyloxy group, a 3,4,5-trimethoxyphenyloxy group and the like; and
an aryloxy group having not more than 20 carbon atoms in total wherein a halogen atom is substituted, such as a chlorophenyloxy group, a dichlorophenyloxy group, a trichlorophenyloxy group, a bromophenyloxy group, a dibromophenyloxy group, an iodophenyloxy group, a fluorophenyloxy group, a chloronaphthyloxy group, a bromonaphthyloxy group, a difluorophenyloxy group, a trifluorophenyloxy group, a tetrafluorophenyloxy group, a pentafluorophenyloxy group and the like.

Concrete examples of the substituted or unsubstituted arylthio group include an unsubstituted or alkyl-substituted arylthio group having not more than 20 carbon atoms in total such as a phenylthio group, a naphthylthio group, an anthranylthio group, a 2-methylphenylthio group, a 3-methylphenylthio group, a 4-methylphenylthio group, a 2-ethylphenylthio group, a propylphenylthio group, a butylphenylthio group, a hexylphenylthio group, a cyclohexylphenylthio group, an octylphenylthio group, a 2-methyl-1-naphthylthio group, a 3-methyl-1-naphthylthio group, a 4-methyl-1-naphthylthio group, a 5-methyl-1-naphthylthio group, a 6-methyl-1-naphthylthio group, a 7-methyl-1-naphthylthio group, a 8-methyl-1-naphthylthio group, a 1-methyl-2-naphthylthio group, a 3-methyl-2-naphthylthio group, a 4-methyl-2-naphthylthio group, a 5-methyl-2-naphthylthio group, a 6-methyl-2-naphthylthio group, a 7-methyl-2-naphthylthio group, a 8-methyl-2-naphthylthio group, a 2-ethyl-1-naphthylthio group, a 2,3-dimethylphenylthio group, a 2,4-dimethylphenylthio group, a 2,5-dimethylphenylthio group, a 2,6-dimethylphenylthio group, a 3,4-dimethylphenylthio group, a 3,5-dimethylphenylthio group, a 3, 6-dimethylphenylthio group, a 2,3,4-trimethylphenylthio group, a 2,3,5-trimethylphenylthio group, a 2,3,6-trimethylphenylthio group, a 2,4,5-trimethylphenylthio group, a 2,4,6-trimethylphenylthio group, a 3,4,5-trimethylphenylthio group and the like;
a monoalkoxyarylthio group having not more than 20 carbon atoms in total wherein a substituted or unsubstituted alkyloxy group having not more than 10 carbon atoms is substituted, such as a 2-methoxyphenylthio group, a 3-methoxyphenylthio group, a 4-methoxyphenylthio group, a 2-ethoxyphenylthio group, a propoxyphenylthio group, a butoxyphenylthio group, a hexyloxyphenylthio group, a cyclohexyloxyphenylthio group, an octyloxyphenylthio group, a 2-methoxy-1-naphthylthio group, a 3-methoxy-1-naphthylthio group, a 4-methoxy-1-naphthylthio group, a 5-methoxy-1-naphthylthio group, a 6-methoxy-1-naphthylthio group, a 7-methoxy-1-naphthylthio group, a 8-methoxy-1-naphthylthio group, a 1-methoxy-2-naphthylthio group, a 3-methoxy-2-naphthylthio group, a 4-methoxy-2-naphthylthio group, a 5-methoxy-2-naphthylthio group, a 6-methoxy-2-naphthylthio group, a 7-methoxy-2-naphthylthio group, a 8-methoxy-2-naphthylthio group, a 2-ethoxy-1-naphthylthio group and the like;
a dialkoxyarylthio group having not more than 20 carbon atoms in total wherein a substituted or unsubstituted alkyloxy group having not more than 10 carbon atoms is substituted, such as a 2,3-dimethoxyphenylthio group, a 2,4-dimethoxyphenylthio group, a 2,5-dimethoxyphenylthio group, a 2, 6-dimethoxyphenylthio group, a 3,4-dimethoxyphenylthio group, a 3,5-dimethoxyphenylthio group, a 3,6-dimethoxyphenylthio group, a 4,5-dimethoxy-1-naphthylthio group, a 4,7-dimethoxy-1-naphthylthio group, a 4,8-dimethoxy-1-naphthylthio group, a 5,8-dimethoxy-1-naphthylthio group, a 5,8-dimethoxy-2-naphthylthio group and the like;
a trialkoxyarylthio group having not more than 20 carbon atoms in total wherein a substituted or unsubstituted alkyloxy group having not more than 10 carbon atoms is substituted, such as a 2,3,4-trimethoxyphenylthio group, a 2,3,5-trimethoxyphenylthio group, a 2,3,6-trimethoxyphenylthio group, a 2,4,5-trimethoxyphenylthio group, a 2,4,6-trimethoxyphenylthio group, a 3,4,5-trimethoxyphenylthio group and the like; and
an arylthio group having not more than 20 carbon atoms in total wherein a halogen atom is substituted, such as a chlorophenylthio group, a dichlorophenylthio group, a trichlorophenylthio group, a bromophenylthio group, a dibromophenylthio group, an iodophenylthio group, a fluorophenylthio group, a chloronaphthylthio group, a bromonaphthylthio group, a difluorophenylthio group, a trifluorophenylthio group, a tetrafluorophenylthio group, a pentafluorophenylthio group and the like. Ys are not restricted thereto.

In such Y, preferable examples are as follows.
As a preferable example, for example, a hydrogen atom can be cited.

Furthermore, of preferable examples of Y, as the halogen atom, there can be exemplified a chlorine atom, a bromine atom and an iodine atom.
Preferable examples of the substituted or unsubstituted alkyl group include a straight chained alkyl group having 1 to 6 carbon atoms in total such as a methyl group, an ethyl group, an n-propyl group, an n-butyl group, an n-pentyl group, an n-hexyl group and the like;
a branched alkyl group having 3 to 6 carbon atoms in total such as an iso-propyl group, an isobutyl group, a sec-butyl group, an isopentyl group, a sec-pentyl group, a 1-methylpentyl group, a 2-methylpentyl group, a 3-methylpentyl group, a 4-methylpentyl group, a 1-ethylbutyl group, a 2-ethylbutyl group, a tert-butyl group, a tert-pentyl group, a 1,1-dimethylbutyl group, a 1,2-dimethylbutyl group, a 1,3-dimethylbutyl group, a 2,3-dimethylbutyl group and the like; and
a saturated cyclic alkyl group having 5 or 6 carbon atoms in total such as a cyclopentyl group, a cyclohexyl group and the like.

Preferable examples of the substituted or unsubstituted aryl group include aromatic hydrocarbons having not more than 12 carbon atoms in total such as a phenyl group, a naphthyl group, a cyclopentadienyl group and the like;
an alkyl-substituted aryl group having not more than 12 carbon atoms in total such as a 2-methylphenyl group, a 3-methylphenyl group, a 4-methylphenyl group, a 2-ethylphenyl group, a propylphenyl group, a butylphenyl group, a 2,3-dimethylphenyl group, a 2,4-dimethylphenyl group, a 2,5-dimethylphenyl group, a 2,6-dimethylphenyl group, a 3,4-dimethylphenyl group, a 3,5-dimethylphenyl group, a 3,6-dimethylphenyl group, a 2,3,4-trimethylphenyl group, a 2,3,5-trimethylphenyl group, a 2,3,6-trimethylphenyl group, a 2,4,5-trimethylphenyl group, a 2,4,6-trimethylphenyl group, a 3,4,5-trimethylphenyl group and the like;
a monoalkoxyaryl group having not more than 12 carbon atoms in total wherein a substituted or unsubstituted alkyloxy group having not more than 6 carbon atoms is substituted, such as a 2-methoxyphenyl group, a 3-methoxyphenyl group, a 4-methoxyphenyl group, a 2-ethoxyphenyl group, a propoxyphenyl group, a butoxyphenyl group and the like;
a dialkoxyaryl group having not more than 12 carbon atoms in total wherein a substituted or unsubstituted alkyloxy group having not more than 6 carbon atoms is substituted, such as a 2,3-dimethoxyphenyl group, a 2,4-dimethoxyphenyl group, a 2,5-dimethoxyphenyl group, a 2,6-dimethoxyphenyl group, a 3,4-dimethoxyphenyl group, a 3,5-dimethoxyphenyl group, a 3,6-dimethoxyphenyl group and the like; and
an aryl group having not more than 12 carbon atoms in total
wherein a halogen atom is substituted, such as a chlorophenyl group, a dichlorophenyl group, a trichlorophenyl group, a bromophenyl group, a dibromophenyl group, an iodophenyl group, a fluorophenyl group, a chloronaphthyl group, a bromonaphthyl group, a difluorophenyl group, a trifluorophenyl group, a tetrafluorophenyl group, a pentafluorophenyl group and the like.

Preferable examples of the substituted or unsubstituted aralkyl group include an aralkyl group having not more than 12 carbon atoms in total such as a benzyl group, a phenethyl group, a phenylpropyl group and the like.

Preferable examples of the substituted or unsubstituted alkyloxy group include a straight chained or branched alkoxy group having 1 to 6 carbon atoms in total such as a methoxy group, an ethoxy group, an n-propoxy group, an iso-propoxy group, an n-butoxy group, an iso-butoxy group, a tert-butoxy group, an n-pentyloxy group, an iso-pentyloxy group, an n-hexyloxy group, an iso-hexyloxy group and the like;
a cycloalkoxy group having 5 or 6 carbon atoms in total such as a cyclopentyloxy group, a cyclohexyloxy group and the like; and
an alkoxyalkoxy group having 2 to 6 carbon atoms in total such as a methoxymethoxy group, an ethoxymethoxy group, an ethoxyethoxy group, an n-propoxymethoxy group, an iso-propoxymethoxy group, an n-propoxyethoxy group, an iso-propoxyethoxy group, an n-butoxyethoxy group, an iso-butoxyethoxy group, a tert-butoxyethoxy group and the like.

Preferable examples of the substituted or unsubstituted alkylthio group include a straight chained or branched alkylthio group having 1 to 6 carbon atoms in total such as a methylthio group, an ethylthio group, an n-propylthio group, an iso-propylthio group, an n-butylthio group, an iso-butylthio group, a sec-butylthio group, a t-butylthio group, an n-pentylthio group, an iso-pentylthio group, an n-hexylthio group, an iso-hexylthio group and the like;
a cycloalkylthio group having 5 or 6 carbon atoms in total such as a cyclopentylthio group, a cyclohexylthio group and the like;
an alkoxyalkylthio group having 2 to 6 carbon atoms in total such as a methoxyethylthio group, an ethoxyethylthio group, an n-propoxyethylthio group, an iso-propoxyethylthio group, an n-butoxyethylthio group, an iso-butoxyethylthio group, a tert-butoxyethylthio group and the like; and
an alkylthioalkylthio group having 2 to 6 carbon atoms in total such as a methylthioethylthio group, an ethylthioethylthio group, an n-propylthioethylthio group, an iso-propylthioethylthio group, an n-butylthioethylthio group, an iso-butylthioethylthio group, a tert-butylthioethylthio group and the like.

Preferable examples of the substituted or unsubstituted aryloxy group include an unsubstituted or alkyl-substituted aryloxy group having not more than 12 carbon atoms in total such as a phenyloxy group, a naphthyloxy group, a 2-methylphenyloxy group, a 3-methylphenyloxy group, a 4-methylphenyloxy group, a 2-ethylphenyloxy group, a propylphenyloxy group, a butylphenyloxy group, a hexylphenyloxy group, a cyclohexylphenyloxy group, a 2,4-dimethylphenyloxy group, a 2,5-dimethylphenyloxy group, a 2,6-dimethylphenyloxy group, a 3,4-dimethylphenyloxy group, a 3,5-dimethylphenyloxy group, a 3,6-dimethylphenyloxy group, a 2,3,4-trimethylphenyloxy group, a 2,3,5-trimethylphenyloxy group, a 2,3,6-trimethylphenyloxy group, a 2,4,5-trimethylphenyloxy group, a 2,4,6-trimethylphenyloxy group, a 3,4,5-trimethylphenyloxy group and the like;
a monoalkoxyaryloxy group having not more than 12 carbon atoms in total wherein a substituted or unsubstituted alkyloxy group having not more than 6 carbon atoms is substituted, such as a 2-methoxyphenyloxy group, a 3-methoxyphenyloxy group, a 4-methoxyphenyloxy group, a 2-ethoxyphenyloxy group, a propoxyphenyloxy group, a butoxyphenyloxy group, a hexyloxyphenyloxy group, a cyclohexyloxyphenyloxy group and the like;
a dialkoxyaryloxy group having not more than 12 carbon atoms in total wherein a substituted or unsubstituted alkyloxy group having not more than 6 carbon atoms is substituted, such as a 2,3-dimethoxyphenyloxy group, a 2,4-dimethoxyphenyloxy group, a 2,5-dimethoxyphenyloxy group, a 2,6-dimethoxyphenyloxy group, a 3,4-dimethoxyphenyloxy group, a 3,5-dimethoxyphenyloxy group, a 3,6-dimethoxyphenyloxy group and the like; and
an aryloxy group having not more than 12 carbon atoms in total wherein a halogen atom is substituted, such as a chlorophenyloxy group, a dichlorophenyloxy group, a trichlorophenyloxy group, a bromophenyloxy group, a dibromophenyloxy group, an iodophenyloxy group, a fluorophenyloxy group, a chloronaphthyloxy group, a bromonaphthyloxy group, a difluorophenyloxy group, a trifluorophenyloxy group, a tetrafluorophenyloxy group, a pentafluorophenyloxy group and the like.

Preferable examples of the substituted or unsubstituted arylthio group include an unsubstituted or alkyl-substituted arylthio group having not more than 12 carbon atoms in total such as a phenylthio group, a naphthylthio group, a 2-methylphenylthio group, a 3-methylphenylthio group, a 4-methylphenylthio group, a 2-ethylphenylthio group, a propylphenylthio group, a butylphenylthio group, a hexylphenylthio group, a cyclohexylphenylthio group, a 2,4-dimethylphenylthio group, a 2,5-dimethylphenylthio group, a 2,6-dimethylphenylthio group, a 3,4-dimethylphenylthio group, a 3,5-dimethylphenylthio group, a 3,6-dimethylphenylthio group, a 2,3,4-trimethylphenylthio group, a 2,3,5-trimethylphenylthio group, a 2,3,6-trimethylphenylthio group, a 2,4,5-trimethylphenylthio group, a 2,4,6-trimethylphenylthio group, a 3,4,5-trimethylphenylthio group and the like;
a monoalkoxyarylthio group having not more than 12 carbon atoms in total wherein a substituted or unsubstituted alkyloxy group having not more than 6 carbon atoms is substituted, such as a 2-methoxyphenylthio group, a 3-methoxyphenylthio group, a 4-methoxyphenylthio group, a 2-ethoxyphenylthio group, a propoxyphenylthio group, a butoxyphenylthio group, a hexyloxyphenylthio group, a cyclohexyloxyphenylthio group and the like;
a dialkoxyarylthio group having not more than 12 carbon atoms in total wherein a substituted or unsubstituted alkyloxy group having not more than 6 carbon atoms is substituted, such as a 2,3-dimethoxyphenylthio group, a 2,4-dimethoxyphenylthio group, a 2,5-dimethoxyphenylthio group, a 2,6-dimethoxyphenylthio group, a 3,4-dimethoxyphenylthio group, a 3,5-dimethoxyphenylthio group, a 3,6-dimethoxyphenylthio group, a 4,5-dimethoxy-1-naphthylthio group, a 4,7-dimethoxy-1-naphthylthio group, a 4,8-dimethoxy-1-naphthylthio group, a 5,8-dimethoxy-1-naphthylthio group, a 5,8-dimethoxy-2-naphthylthio group and the like; and
an arylthio group having not more than 12 carbon atoms in total wherein a halogen atom is substituted, such as a chlorophenylthio group, a dichlorophenylthio group, a trichlorophenylthio group, a bromophenylthio group, a dibromophenylthio group, an iodophenylthio group, a fluorophenylthio group, a chloronaphthylthio group, a bromonaphthylthio group, a difluorophenylthio group, a trifluorophenylthio group, a tetrafluorophenylthio group, a pentafluorophenylthio group and the like.

More preferable examples of Y are as follows.
As a more preferable example of Y, for example, a hydrogen atom can be cited.
Furthermore, as the halogen atom, there can be exemplified, for example, a chlorine atom and a bromine atom.

More preferable examples of the substituted or unsubstituted alkyl group include a straight chained or branched alkyl group having 1 to 3 carbon atoms in total such as a methyl group, an ethyl group, an iso-propyl group and the like.

More preferable examples of the substituted or unsubstituted aryl group include aromatic hydrocarbons having not more than 12 carbon atoms in total such as a phenyl group, a naphthyl group, a cyclopentadienyl group and the like;
an alkyl-substituted aryl group having not more than 9 carbon atoms in total such as a 2-methylphenyl group, a 3-methylphenyl group, a 4-methylphenyl group, a 2-ethylphenyl group, a propylphenyl group, a 2,3-dimethylphenyl group, a 2,4-dimethylphenyl group, a 2,5-dimethylphenyl group, a 2,6-dimethylphenyl group, a 3,4-dimethylphenyl group, a 3, 5-dimethylphenyl group, a 3, 6-dimethylphenyl group and the like;
a monoalkoxyaryl group having not more than 9 carbon atoms in total wherein a substituted or unsubstituted alkyloxy group having not more than 3 carbon atoms is substituted, such as a 2-methoxyphenyl group, a 3-methoxyphenyl group, a 4-methoxyphenyl group, a 2-ethoxyphenyl group, a propoxyphenyl group and the like; and
an aryl group having not more than 12 carbon atoms in total wherein a halogen atom is substituted, such as a chlorophenyl group, a dichlorophenyl group, a trichlorophenyl group, a bromophenyl group, a dibromophenyl group, a chloronaphthyl group, a bromonaphthyl group and the like.

More preferable examples of the substituted or unsubstituted aralkyl group include an aralkyl group having not more than 9 carbon atoms in total such as a benzyl group, a phenethyl group, a phenylpropyl group and the like.

More preferable examples of the substituted or unsubstituted alkyloxy group include a straight chained or branched alkoxy group having 1 to 3 carbon atoms in total such as a methoxy group, an ethoxy group, an iso-propoxy group and the like; and
a cycloalkoxy group having 5 or 6 carbon atoms in total such as a cyclopentyloxy group, a cyclohexyloxy group and the like.

More preferable examples of the substituted or unsubstituted alkylthio group include a straight chained or branched alkylthio group having 1 to 3 carbon atoms in total such as a methylthio group, an ethylthio group, an n-propylthio group, an iso-propylthio group and the like;
a cycloalkylthio group having 5 or 6 carbon atoms in total such as a cyclopentylthio group, a cyclohexylthio group and the like; and
an alkylthioalkylthio group having 2 to 6 carbon atoms in total such as a methylthioethylthio group, an ethylthioethylthio group, an n-propylthioethylthio group, an iso-propylthioethylthio group, an n-butylthioethylthio group, an iso-butylthioethylthio group, a tert-butylthioethylthio group and the like.

More preferable examples of the substituted or unsubstituted aryloxy group include an unsubstituted or alkyl-substituted aryloxy group having not more than 9 carbon atoms in total such as a phenyloxy group, a naphthyloxy group, a 2-methylphenyloxy group, a 3-methylphenyloxy group, a 4-methylphenyloxy group, a 2-ethylphenyloxy group, a propylphenyloxy group, a 2,4-dimethylphenyloxy group, a 2,5-dimethylphenyloxy group, a 2,6-dimethylphenyloxy group, a 3,4-dimethylphenyloxy group, a 3,5-dimethylphenyloxy group, a 3,6-dimethylphenyloxy group and the like;
a monoalkoxyaryloxy group having not more than 9 carbon atoms in total wherein a substituted or unsubstituted alkyloxy group having not more than 3 carbon atoms is substituted, such as a 2-methoxyphenyloxy group, a 3-methoxyphenyloxy group, a 4-methoxyphenyloxy group, a 2-ethoxyphenyloxy group, a propoxyphenyloxy group and the like; and
an aryloxy group having not more than 12 carbon atoms in total wherein a halogen atom is substituted, such as a chlorophenyloxy group, a dichlorophenyloxy group, a trichlorophenyloxy group, a bromophenyloxy group, a dibromophenyloxy group, a chloronaphthyloxy group, a bromonaphthyloxy group and the like.

More preferable examples of the substituted or unsubstituted arylthio group include an unsubstituted or alkyl-substituted arylthio group having not more than 9 carbon atoms in total such as a phenylthio group, a 2-methylphenylthio group, a 3-methylphenylthio group, a 4-methylphenylthio group, a 2-ethylphenylthio group, a propylphenylthio group, a
2,4-dimethylphenylthio group, a 2,5-dimethylphenylthio group, a 2,6-dimethylphenylthio group, a 3,4-dimethylphenylthio group, a 3,5-dimethylphenylthio group, a 3,6-dimethylphenylthio group and the like;
a monoalkoxyarylthio group having not more than 9 carbon atoms in total wherein a substituted or unsubstituted alkyloxy group having not more than 3 carbon atoms is substituted, such as a 2-methoxyphenylthio group, a 3-methoxyphenylthio group, a 4-methoxyphenylthio group, a 2-ethoxyphenylthio group, a propoxyphenylthio group and the like; and
an arylthio group having not more than 12 carbon atoms in total wherein a halogen atom is substituted, such as a chlorophenylthio group, a dichlorophenylthio group, a trichlorophenylthio group, a bromophenylthio group, a dibromophenylthio group, a chloronaphthylthio group, a bromonaphthylthio group and the like.

Furthermore, when n-p is an integer of not less than 2, Ys may combine together to form a cyclic structure via a metal atom M. That is, a plurality of Ys may combine together to form a ring containing the metal atom M.

Concrete examples of the compound represented by the above general formula (1) are illustrated in the following Tables 1 to 17, but are not restricted thereto. In Tables 1 to 17, concrete examples of the compound represented by the above general formula (1) are illustrated. Incidentally, in Tables 1 to 17, CMPD. No. refers to the compound No.

Further, in Tables 1 to 17, Y₁, Y₂ and Y₃ represent Y when the total number of Ys to be bonded to M is not more than 3, that is, when n-p is not more than 3. Specifically, when n-p is 1, Y is only Y₁. When n-p is 2, the compound contains Y₁ and Y₂ as Y which may be the same groups or difference groups. Furthermore, when n-p is 3, the compound contains Y₁, Y₂ and Y₃ as Y which may each be the same groups or different groups.
Meanwhile, in the Tables, when n-p is 2, in a compound in which one group is described from Y₁ through Y₂, two Ys are bonded to each other to form a ring containing the metal atom M.

**[Table 1]**

| CMPD. No. | M | n | p | n-p | m | X₁ | X₂ | R₁ | Y₁ | Y₂ | Y₃ |
|---|---|---|---|---|---|---|---|---|---|---|---|
| 1-1 | Sn | 4 | 4 | 0 | 0 | S | - | - | - | - | - |
| 1-2 | Sn | 4 | 4 | 0 | 0 | O | - | - | - | - | - |
| 1-3 | Sn | 4 | 4 | 0 | 1 | S | S | CH₂ | - | - | - |
| 1-4 | Sn | 4 | 4 | 0 | 1 | O | S | CH₂ | - | - | - |
| 1-5 | Sn | 4 | 4 | 0 | 1 | S | O | CH₂ | - | - | - |
| 1-6 | Sn | 4 | 4 | 0 | 1 | O | O | CH₂ | - | - | - |
| 1-7 | Sn | 4 | 4 | 0 | 1 | S | S | C₂H₄ | - | - | - |
| 1-8 | Sn | 4 | 4 | 0 | 1 | O | S | C₂H₄ | - | - | - |
| 1-9 | Sn | 4 | 4 | 0 | 1 | S | S | C₂H₄ | - | - | - |
| 1-10 | Sn | 4 | 4 | 0 | 1 | O | O | C₂H₄ | - | - | - |
| 1-11 | Sn | 4 | 4 | 0 | 1 | S | S | 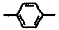 | - | - | - |
| 1-12 | Sn | 4 | 4 | 0 | 1 | O | S | 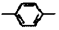 | - | - | - |
| 1-13 | Sn | 4 | 4 | 0 | 1 | S | O | 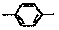 | - | - | - |
| 1-14 | Sn | 4 | 4 | 0 | 1 | O | O | 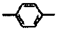 | - | - | - |
| 1-15 | Sn | 4 | 4 | 0 | 1 | S | S | 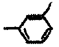 | - | - | - |
| 1-16 | Sn | 4 | 4 | 0 | 1 | O | S | 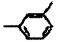 | - | - | - |
| 1-17 | Sn | 4 | 4 | 0 | 1 | S | O | 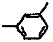 | - | - | - |

**[Table 2]**

| CMPD. No. | M | n | p | n-p | m | X₁ | X₂ | R₁ | Y₁ | Y₂ | Y₃ |
|---|---|---|---|---|---|---|---|---|---|---|---|
| 1-18 | Sn | 4 | 4 | 0 | 1 | O | O | 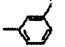 | - | - | - |
| 1-19 | Sn | 4 | 4 | 0 | 1 | S | S | 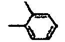 | - | - | - |
| 1-20 | Sn | 4 | 4 | 0 | 1 | O | S | 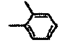 | - | - | - |
| 1-21 | Sn | 4 | 4 | 0 | 1 | S | O | 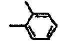 | - | - | - |
| 1-22 | Sn | 4 | 4 | 0 | 1 | O | O | 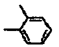 | - | - | - |
| 1-23 | Sn | 4 | 4 | 0 | 1 | S | S | 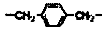 | - | - | - |
| 1-24 | Sn | 4 | 4 | 0 | 1 | O | S | 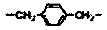 | - | - | - |
| 1-25 | Sn | 4 | 4 | 0 | 1 | S | O | 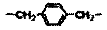 | - | - | - |
| 1-26 | Sn | 4 | 4 | 0 | 1 | O | O | 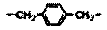 | - | - | - |
| 1-27 | Sn | 4 | 4 | 0 | 1 | S | S | 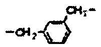 | - | - | - |
| 1-28 | Sn | 4 | 4 | 0 | 1 | O | S | 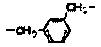 | - | - | - |
| 1-29 | Sn | 4 | 4 | 0 | 1 | S | O | 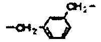 | - | - | - |
| 1-30 | Sn | 4 | 4 | 0 | 1 | O | O | 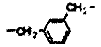 | - | - | - |

**[Table 3]**

| CMPD. No. | M | n | p | n-p | m | X₁ | X₂ | R₁ | Y₁ | Y₂ | Y₃ |
|---|---|---|---|---|---|---|---|---|---|---|---|
| 1-31 | Sn | 4 | 4 | 0 | 1 | S | S | 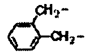 | - | - | - |
| 1-32 | Sn | 4 | 4 | 0 | 1 | O | S | 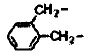 | - | - | - |
| 1-33 | Sn | 4 | 4 | 0 | 1 | S | O | 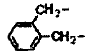 | - | - | - |
| 1-34 | Sn | 4 | 4 | 0 | 1 | O | O | 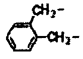 | - | - | - |
| 1-35 | Sn | 4 | 3 | 1 | 0 | S | - | - | CH₃ | - | - |
| 1-36 | Sn | 4 | 3 | 1 | 0 | O | - | - | CH₃ | - | - |
| 1-37 | Sn | 4 | 3 | 1 | 0 | S | - | - | C₂H₅ | - | - |
| 1-38 | Sn | 4 | 3 | 1 | 0 | O | - | - | C₂H₅ | - | - |
| 1-39 | Sn | 4 | 3 | 1 | 0 | S | - | - | C₃H₇ | - | - |
| 1-40 | Sn | 4 | 3 | 1 | 0 | O | - | - | C₃H₇ | - | - |
| 1-41 | Sn | 4 | 3 | 1 | 0 | S | - | - | C₄H₉ | - | - |
| 1-42 | Sn | 4 | 3 | 1 | 0 | O | - | - | C₄H₉ | - | - |
| 1-43 | Sn | 4 | 3 | 1 | 0 | S | - | - | C₆H₅ | - | - |
| 1-44 | Sn | 4 | 3 | 1 | 0 | O | - | - | C₆H₅ | - | - |
| 1-45 | Sn | 4 | 2 | 2 | 0 | S | - | - | CH₃ | CH₃ | - |
| 1-46 | Sn | 4 | 2 | 2 | 0 | O | - | - | CH₃ | CH₃ | - |
| 1-47 | Sn | 4 | 2 | 2 | 0 | S | - | - | C₂H₅ | C₂H₅ | - |
| 1-48 | Sn | 4 | 2 | 2 | 0 | O | - | - | C₂H₅ | C₂H₅ | - |
| 1-49 | Sn | 4 | 2 | 2 | 0 | S | - | - | C₃H₇ | C₃H₇ | - |
| 1-50 | Sn | 4 | 2 | 2 | 0 | O | - | - | C₃H₇ | C₃H₇ | - |

**[Table 4]**

| CMPD. No. | M | n | p | n-p | m | X₁ | X₂ | R₁ | Y₁ | Y₂ | Y₃ |
|---|---|---|---|---|---|---|---|---|---|---|---|
| 1-51 | Sn | 4 | 2 | 2 | 0 | S | - | - | C₄H₉ | C₄H₉ | - |
| 1-52 | Sn | 4 | 2 | 2 | 0 | 0 | - | - | C₄H₉ | C₄H₉ | - |
| 1-53 | Sn | 4 | 2 | 2 | 0 | S | - | - | C₆H₅ | C₆H₅ | - |
| 1-54 | Sn | 4 | 2 | 2 | 0 | O | - | - | C₆H₅ | C₆H₅ | - |
| 1-55 | Sn | 4 | 1 | 3 | 0 | S | - | - | CH₃ | CH₃ | CH₃ |
| 1-56 | Sn | 4 | 1 | 3 | 0 | O | - | - | CH₃ | CH₃ | CH₃ |
| 1-57 | Sn | 4 | 1 | 3 | 0 | S | - | - | C₂H₅ | C₂H₅ | C₂H₅ |
| 1-58 | Sn | 4 | 1 | 3 | 0 | O | - | - | C₂H₅ | C₂H₅ | C₂H₅ |
| 1-59 | Sn | 4 | 1 | 3 | 0 | S | - | - | C₃H₇ | C₃H₇ | C₃H₇ |
| 1-60 | Sn | 4 | 1 | 3 | 0 | O | - | - | C₃H₇ | C₃H₇ | C₃H₇ |
| 1-61 | Sn | 4 | 1 | 3 | 0 | S | - | - | C₄H₉ | C₄H₉ | C₄H₉ |
| 1-62 | Sn | 4 | 1 | 3 | 0 | O | - | - | C₄H₉ | C₄H₉ | C₄H₉ |
| 1-63 | Sn | 4 | 1 | 3 | 0 | S | - | - | C₆H₅ | C₆H₅ | C₆H₅ |
| 1-64 | Sn | 4 | 1 | 3 | 0 | O | - | - | C₆H₅ | C₆H₅ | C₆H₅ |
| 1-65 | Sn | 4 | 3 | 1 | 0 | S | - | - | SCH₃ | - | - |
| 1-66 | Sn | 4 | 3 | 1 | 0 | O | - | - | SCH₃ | - | - |
| 1-67 | Sn | 4 | 3 | 1 | 0 | S | - | - | SC₂H₅ | - | - |
| 1-68 | Sn | 4 | 3 | 1 | 0 | O | - | - | SC₂H₅ | - | - |
| 1-69 | Sn | 4 | 3 | 1 | 0 | S | - | - | SC₆H₅ | - | - |
| 1-70 | Sn | 4 | 3 | 1 | 0 | O | - | - | SC₆H₅ | - | - |
| 1-71 | Sn | 4 | 2 | 2 | 0 | S | - | - | SC₂H₄S | | - |
| 1-72 | Sn | 4 | 2 | 2 | 0 | O | - | - | SC₂H₄S | | - |
| 1-73 | Sn | 4 | 2 | 2 | 0 | S | - | - | SC₃H₆S | | - |

**[Table 5]**

| CMPD. No. | M | n | p | n-p | m | X₁ | X₂ | R₁ | Y₁ | Y₂ | Y₃ |
|---|---|---|---|---|---|---|---|---|---|---|---|
| 1-74 | Sn | 4 | 2 | 2 | 0 | O | - | - | SC₃H₆S | | - |
| 1-75 | Sn | 4 | 2 | 2 | 0 | S | - | - | SC₂H₄SC₂H₄S | | - |
| 1-76 | Sn | 4 | 2 | 2 | 0 | O | - | - | SC₂H₄SC₂H4S | | - |
| 1-77 | Sn | 4 | 3 | 1 | 1 | S | S | CH₂ | CH₃ | - | - |
| 1-78 | Sn | 4 | 3 | 1 | 1 | O | S | CH₂ | CH₃ | - | - |
| 1-79 | Sn | 4 | 3 | 1 | 1 | S | O | CH₂ | CH₃ | - | - |
| 1-80 | Sn | 4 | 3 | 1 | 1 | O | O | CH₂ | CH₃ | - | - |
| 1-81 | Sn | 4 | 3 | 1 | 1 | S | S | C₂H₄ | CH₃ | - | - |
| 1-82 | Sn | 4 | 3 | 1 | 1 | O | S | C₂H₄ | CH₃ | - | - |
| 1-83 | Sn | 4 | 3 | 1 | 1 | S | O | C₂H₄ | CH₃ | - | - |
| 1-84 | Sn | 4 | 3 | 1 | 1 | O | O | C₂H₄ | CH₃ | - | - |
| 1-85 | Sn | 4 | 3 | 1 | 1 | S | S | 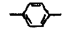 | CH₃ | - | - |
| 1-86 | Sn | 4 | 3 | 1 | 1 | O | S | 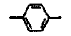 | CH₃ | - | - |
| 1-87 | Sn | 4 | 3 | 1 | 1 | S | O | 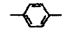 | CH₃ | - | - |
| 1-88 | Sn | 4 | 3 | 1 | 1 | O | O | 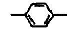 | CH₃ | - | - |
| 1-89 | Sn | 4 | 3 | 1 | 1 | S | S | 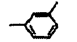 | CH₃ | - | - |
| 1-90 | Sn | 4 | 3 | 1 | 1 | O | S | 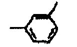 | CH₃ | - | - |
| 1-91 | Sn | 4 | 3 | 1 | 1 | S | O | 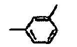 | CH₃ | - | - |

**[Table 6]**

| CMPD. No. | M | n | p | n-p | m | X₁ | X₂ | R₁ | Y₁ | Y₂ | Y₃ |
|---|---|---|---|---|---|---|---|---|---|---|---|
| 1-92 | Sn | 4 | 3 | 1 | 1 | O | O | 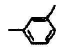 | CH₃ | - | - |
| 1-93 | Sn | 4 | 3 | 1 | 1 | S | S | 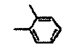 | CH₃ | - | - |
| 1-94 | Sn | 4 | 3 | 1 | 1 | O | S | 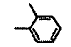 | CH₃ | - | - |
| 1-95 | Sn | 4 | 3 | 1 | 1 | S | O | 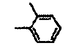 | CH₃ | - | - |
| 1-96 | Sn | 4 | 3 | 1 | 1 | O | O | 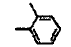 | CH₃ | - | - |
| 1-97 | Sn | 4 | 3 | 1 | 1 | S | S | 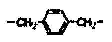 | CH₃ | - | - |
| 1-98 | Sn | 4 | 3 | 1 | 1 | O | S | 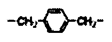 | CH₃ | - | - |
| 1-99 | Sn | 4 | 3 | 1 | 1 | S | O | 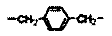 | CH₃ | - | - |
| 1-100 | Sn | 4 | 3 | 1 | 1 | O | O | 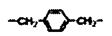 | CH₃ | - | - |
| 1-101 | Sn | 4 | 3 | 1 | 1 | S | S | 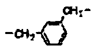 | CH₃ | - | - |
| 1-102 | Sn | 4 | 3 | 1 | 1 | O | S | 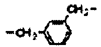 | CH₃ | - | - |
| 1-103 | Sn | 4 | 3 | 1 | 1 | S | O | 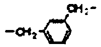 | CH₃ | - | - |
| 1-104 | Sn | 4 | 3 | 1 | 1 | O | O | 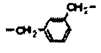 | CH₃ | - | - |

**[Table 7]**

| CMPD. No. | M | n | p | n-p | m | X₁ | X₂ | R₁ | Y₁ | Y₂ | Y₃ |
|---|---|---|---|---|---|---|---|---|---|---|---|
| 1-105 | Sn | 4 | 3 | 1 | 1 | S | S | 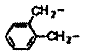 | CH₃ | - | - |
| 1-106 | Sn | 4 | 3 | 1 | 1 | O | S | 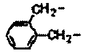 | CH₃ | - | - |
| 1-107 | Sn | 4 | 3 | 1 | 1 | S | O | 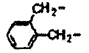 | CH₃ | - | - |
| 1-108 | Sn | 4 | 3 | 1 | 1 | O | O | 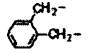 | CH₃ | - | - |
| 1-109 | Sn | 4 | 3 | 1 | 1 | S | S | CH₂ | C₆H₅ | - | - |
| 1-110 | Sn | 4 | 3 | 1 | 1 | O | S | CH₂ | C₆H₅ | - | - |
| 1-111 | Sn | 4 | 3 | 1 | 1 | S | O | CH₂ | C₆H₅ | - | - |
| 1-112 | Sn | 4 | 3 | 1 | 1 | O | O | CH₂ | C₆H₅ | - | - |
| 1-113 | Sn | 4 | 3 | 1 | 1 | S | S | C₂H₄ | C₆H₅ | - | - |
| 1-114 | Sn | 4 | 3 | 1 | 1 | O | S | C₂H₄ | C₆H₅ | - | - |
| 1-115 | Sn | 4 | 3 | 1 | 1 | S | O | C₂H₄ | C₆H₅ | - | - |
| 1-116 | Sn | 4 | 3 | 1 | 1 | O | O | C₂H₄ | C₆H₅ | - | - |
| 1-117 | Sn | 4 | 3 | 1 | 1 | S | S | 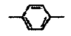 | C₆H₅ | - | - |
| 1-118 | Sn | 4 | 3 | 1 | 1 | O | S | 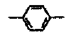 | C₆H₅ | - | - |
| 1-119 | Sn | 4 | 3 | 1 | 1 | S | O | 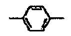 | C₆H₅ | - | - |
| 1-120 | Sn | 4 | 3 | 1 | 1 | O | O | 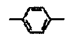 | C₆H₅ | - | - |

**[Table 8]**

| CMPD. No. | M | n | p | n-p | m | X₁ | X₂ | R₁ | Y₁ | Y₂ | Y₃ |
|---|---|---|---|---|---|---|---|---|---|---|---|
| 1-121 | Sn | 4 | 3 | 1 | 1 | S | S | 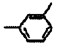 | C₆H₅ | - | - |
| 1-122 | Sn | 4 | 3 | 1 | 1 | O | S | 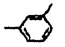 | C₆H₅ | - | - |
| 1-123 | Sn | 4 | 3 | 1 | 1 | S | O | 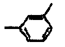 | C₆H₅ - | - | - |
| 1-124 | Sn | 4 | 3 | 1 | 1 | O | O | 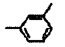 | C₆H₅ | - | - |
| 1-125 | Sn | 4 | 3 | 1 | 1 | S | S | 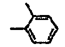 | C₆H₅ | - | - |
| 1-126 | Sn | 4 | 3 | 1 | 1 | O | S | 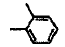 | C₆H₅ | - | - |
| 1-127 | Sn | 4 | 3 | 1 | 1 | S | O | 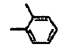 | C₆H₅ | - | - |
| 1-128 | Sn | 4 | 3 | 1 | 1 | O | O | 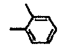 | C₆H₅ | - | - |
| 1-129 | Sn | 4 | 3 | 1 | 1 | S | S | 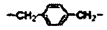 | C₆H₅ | - | - |
| 1-130 | Sn | 4 | 3 | 1 | 1 | O | S | 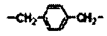 | C₆H₅ | - | - |
| 1-131 | Sn | 4 | 3 | 1 | 1 | S | O | 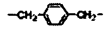 | C₆H₅ | - | - |
| 1-132 | Sn | 4 | 3 | 1 | 1 | O | O | 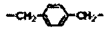 | C₆H₅ | - | - |
| 1-133 | Sn | 4 | 3 | 1 | 1 | S | S | 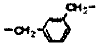 | C₆H₅ | - | - |

**[Table 9]**

| CMPD. No. | M | n | p | n-p | m | X₁ | X₂ | R₁ | Y₁ | Y₂ | Y₃ |
|---|---|---|---|---|---|---|---|---|---|---|---|
| 1-134 | Sn | 4 | 3 | 1 | 1 | O | S | 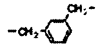 | C₆H₅ | - | - |
| 1-135 | Sn | 4 | 3 | 1 | 1 | S | O | 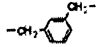 | C₆H₅ | - | - |
| 1-136 | Sn | 4 | 3 | 1 | 1 | O | O | 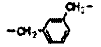 | C₆H₅ | - | - |
| 1-137 | Sn | 4 | 3 | 1 | 1 | S | S | 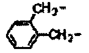 | C₆H₅ | - | - |
| 1-138 | Sn | 4 | 3 | 1 | 1 | O | S | 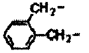 | C₆H₅ | - | - |
| 1-139 | Sn | 4 | 3 | 1 | 1 | S | O | 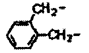 | C₆H₅ | - | - |
| 1-140 | Sn | 4 | 3 | 1 | 1 | O | O | 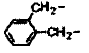 | C₆H₅ | - | - |
| 1-141 | Si | 4 | 4 | O | O | S | - | - | - | - | - |
| 1-142 | Si | 4 | 4 | O | O | O | - | - | - | - | - |
| 1-143 | Si | 4 | 4 | O | 1 | S | S | CH₂ | - | - | - |
| 1-144 | Si | 4 | 4 | O | 1 | O | S | CH₂ | - | - | - |
| 1-145 | Si | 4 | 4 | O | 1 | S | O | CH₂ | - | - | - |
| 1-146 | Si | 4 | 4 | O | 1 | O | O | CH₂ | - | - | - |
| 1-147 | Si | 4 | 4 | O | 1 | S | S | C₂H₄ | - | - | - |
| 1-148 | Si | 4 | 4 | O | 1 | O | S | C₂H₄ | - | - | - |
| 1-149 | Si | 4 | 4 | O | 1 | S | O | C₂H₄ | - | - | - |
| 1-150 | Si | 4 | 4 | O | 1 | O | O | C₂H₄ | - | - | - |

**[Table 10]**

| CMPD. No. | M | n | p | n-p | m | X₁ | X₂ | R₁ | Y₁ | Y₂ | Y₃ |
|---|---|---|---|---|---|---|---|---|---|---|---|
| 1-151 | Si | 4 | 4 | 0 | 1 | S | S | 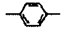 | - | - | - |
| 1-152 | Si | 4 | 4 | 0 | 1 | O | S | 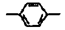 | - | - | - |
| 1-153 | Si | 4 | 4 | 0 | 1 | S | O | 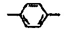 | - | - | - |
| 1-154 | Si | 4 | 4 | 0 | 1 | O | O | 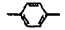 | - | - | - |
| 1-155 | Si | 4 | 4 | 0 | 1 | S | S | 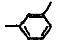 | - | - | - |
| 1-156 | Si | 4 | 4 | 0 | 1 | O | S | 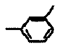 | - | - | - |
| 1-157 | Si | 4 | 4 | 0 | 1 | S | O | 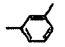 | - | - | - |
| 1-158 | Si | 4 | 4 | 0 | 1 | O | O | 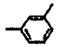 | - | - | - |
| 1-159 | Si | 4 | 4 | 0 | 1 | S | S | 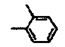 | - | - | - |
| 1-160 | Si | 4 | 4 | 0 | 1 | O | S | 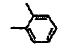 | - | - | - |
| 1-161 | Si | 4 | 4 | 0 | 1 | S | O | 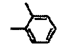 | - | - | - |
| 1-162 | Si | 4 | 4 | 0 | 1 | O | O | 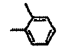 | - | - | - |
| 1-163 | Si | 4 | 4 | 0 | 1 | S | S | 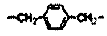 | - | - | - |

**[Table 11]**

| CMPD. No. | M | n | p | n-p | m | X₁ | X₂ | R₁ | Y₁ | Y₂ | Y₃ |
|---|---|---|---|---|---|---|---|---|---|---|---|
| 1-164 | Si | 4 | 4 | 0 | 1 | O | S | 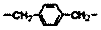 | - | - | - |
| 1-165 | Si | 4 | 4 | 0 | 1 | S | O | 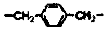 | - | - | - |
| 1-166 | Si | 4 | 4 | 0 | 1 | O | O | 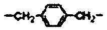 | - | - | - |
| 1-167 | Si | 4 | 4 | 0 | 1 | S | S | 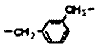 | - | - | - |
| 1-168 | Si | 4 | 4 | 0 | 1 | O | S | 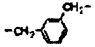 | - | - | - |
| 1-169 | Si | 4 | 4 | 0 | 1 | S | O | 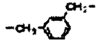 | - | - | - |
| 1-170 | Si | 4 | 4 | 0 | 1 | O | O | 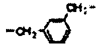 | - | - | - |
| 1-171 | Si | 4 | 4 | 0 | 1 | S | S | 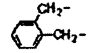 | - | - | - |
| 1-172 | Si | 4 | 4 | 0 | 1 | O | S | 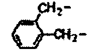 | - | - | - |
| 1-173 | Si | 4 | 4 | 0 | 1 | S | O | 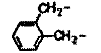 | - | - | - |
| 1-174 | Si | 4 | 4 | 0 | 1 | O | O | 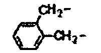 | - | - | - |
| 1-175 | Si | 4 | 3 | 1 | 0 | S | - | - | CH₃ | - | - |
| 1-176 | Si | 4 | 3 | 1 | 0 | O | - | - | CH₃ | - | - |
| 1-177 | Si | 4 | 3 | 1 | 0 | S | - | - | C₂H₅ | - | - |

**[Table 12]**

| CMPD. No. | M | n | p | n-p | m | X₁ | X₂ | R₁ | Y₁ | Y₂ | Y₃ |
|---|---|---|---|---|---|---|---|---|---|---|---|
| 1-178 | Si | 4 | 3 | 1 | 0 | O | - | - | C₂H₅ | - | - |
| 1-179 | Si | 4 | 3 | 1 | 0 | S | - | - | C₆H₅ | - | - |
| 1-180 | Si | 4 | 3 | 1 | 0 | O | - | - | C₆H₅ | - | - |
| 1-181 | Si | 4 | 2 | 2 | 0 | S | - | - | CH₃ | CH₃ | - |
| 1-182 | Si | 4 | 2 | 2 | 0 | O | - | - | CH₃ | CH₃ | - |
| 1-183 | Si | 4 | 2 | 2 | 0 | S | - | - | C₆H₅ | C₆H₅ | - |
| 1-184 | Si | 4 | 2 | 2 | 0 | O | - | - | C₆H₅ | C₆H₅ | - |
| 1-185 | Si | 4 | 1 | 3 | 0 | S | - | - | C₆H₅ | C₆H₅ | C₆H₅ |
| 1-186 | Si | 4 | 1 | 3 | 0 | O | - | - | C₆H₅ | C₆H₅ | C₆H₅ |
| 1-187 | Si | 4 | 2 | 2 | 0 | S | - | - | SC₂H₄S | | - |
| 1-188 | Si | 4 | 2 | 2 | 0 | O | - | - | SC₂H₄S | | - |
| 1-189 | Si | 4 | 2 | 2 | 0 | S | - | - | SC₃H₆S | | - |
| 1-190 | Si | 4 | 2 | 2 | 0 | O | - | - | SC₃H₆S | | - |
| 1-191 | Si | 4 | 2 | 2 | 0 | S | - | - | SC₂H₄SC₂H₄S | | - |
| 1-192 | Si | 4 | 2 | 2 | 0 | O | - | - | SC₂H₄SC₂H₄S | | - |
| 1-193 | Ge | 4 | 4 | 0 | 0 | S | - | - | - | - | - |
| 1-194 | Ge | 4 | 4 | 0 | 0 | O | - | - | - | - | - |
| 1-195 | Ge | 4 | 4 | 0 | 1 | S | S | CH₂ | - | - | - |
| 1-196 | Ge | 4 | 4 | 0 | 1 | O | S | CH₂ | - | - | - |
| 1-197 | Ge | 4 | 4 | 0 | 1 | S | O | CH₂ | - | - | - |
| 1-198 | Ge | 4 | 4 | 0 | 1 | O | O | CH₂ | - | - | - |
| 1-199 | Ge | 4 | 4 | 0 | 1 | S | S | C₂H₄ | - | - | - |
| 1-200 | Ge | 4 | 4 | 0 | 1 | O | S | C₂H₄ | - | - | - |

**[Table 13]**

| CMPD. No. | M | n | p | n-p | m | X₁ | X₂ | R₁ | Y₁ | Y₂ | Y₃ |
|---|---|---|---|---|---|---|---|---|---|---|---|
| 1-201 | Ge | 4 | 4 | 0 | 1 | S | O | C₂H₄ | - | - | - |
| 1-202 | Ge | 4 | 4 | 0 | 1 | O | O | C₂H₄ | - | - | - |
| 1-203 | Ge | 4 | 4 | 0 | 1 | S | S | 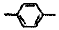 | - | - | - |
| 1-204 | Ge | 4 | 4 | 0 | 1 | O | S | 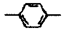 | - | - | - |
| 1-205 | Ge | 4 | 4 | 0 | 1 | S | O | 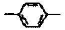 | - | - | - |
| 1-206 | Ge | 4 | 4 | 0 | 1 | O | O | 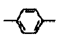 | - | - | - |
| 1-207 | Ge | 4 | 4 | 0 | 1 | S | S | 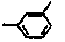 | - | - | - |
| 1-208 | Ge | 4 | 4 | 0 | 1 | O | S | 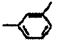 | - | - | - |
| 1-209 | Ge | 4 | 4 | 0 | 1 | S | O | 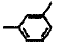 | - | - | - |
| 1-210 | Ge | 4 | 4 | 0 | 1 | O | O | 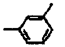 | - | - | - |
| 1-211 | Ge | 4 | 4 | 0 | 1 | S | S | 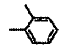 | - | - | - |
| 1-212 | Ge | 4 | 4 | 0 | 1 | O | S | 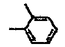 | - | - | - |
| 1-213 | Ge | 4 | 4 | 0 | 1 | S | O | 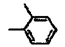 | - | - | - |
| 1-214 | Ge | 4 | 4 | 0 | 1 | o | O | 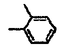 | - | - | - |

**[Table 14]**

| CMPD. No. | M | n | p | n-p | m | X₁ | X₂ | R₁ | Y₁ | Y₂ | Y₃ |
|---|---|---|---|---|---|---|---|---|---|---|---|
| 1-215 | Ge | 4 | 4 | 0 | 1 | S | S | 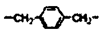 | - | - | - |
| 1-216 | Ge | 4 | 4 | 0 | 1 | O | S | 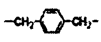 | - | - | - |
| 1-217 | Ge | 4 | 4 | 0 | 1 | S | O | 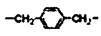 | - | - | - |
| 1-218 | Ge | 4 | 4 | 0 | 1 | O | O | 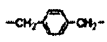 | - | - | - |
| 1-219 | Ge | 4 | 4 | 0 | 1 | S | S | 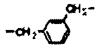 | - | - | - |
| 1-220 | Ge | 4 | 4 | 0 | 1 | O | S | 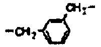 | - | - | - |
| 1-221 | Ge | 4 | 4 | 0 | 1 | S | O | 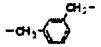 | - | - | - |
| 1-222 | Ge | 4 | 4 | 0 | 1 | O | O | 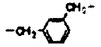 | - | - | - |
| 1-223 | Ge | 4 | 4 | 0 | 1 | S | S | 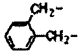 | - | - | - |
| 1-224 | Ge | 4 | 4 | 0 | 1 | O | S | 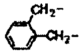 | - | - | - |
| 1-225 | Ge | 4 | 4 | 0 | 1 | S | O | 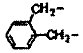 | - | - | - |
| 1-226 | Ge | 4 | 4 | 0 | 1 | O | O | 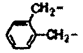 | - | - | - |
| 1-227 | Ge | 4 | 3 | 1 | 0 | S | - | - | CH₃ | - | - |
| 1-228 | Ge | 4 | 3 | 1 | 0 | o | - | - | CH₃ | - | - |

**[Table 15]**

| CMPD. No. | M | n | p | n-p | m | X₁ | X₂ | R₁ | Y₁ | Y₂ | Y₃ |
|---|---|---|---|---|---|---|---|---|---|---|---|
| 1-229 | Ge | 4 | 3 | 1 | 0 | S | - | - | C₂H₅ | - | - |
| 1-230 | Ge | 4 | 3 | 1 | 0 | O | - | - | C₂H₅ | - | - |
| 1-231 | Ge | 4 | 3 | 1 | 0 | S | - | - | C₆H₅ | - | - |
| 1-232 | Ge | 4 | 3 | 1 | 0 | O | - | - | C₆H₅ | - | - |
| 1-233 | Ge | 4 | 2 | 2 | 0 | S | - | - | CH₃ | CH₃ | - |
| 1-239 | Ge | 4 | 2 | 2 | 0 | O | - | - | CH₃ | CH₃ | - |
| 1-235 | Ge | 4 | 2 | 2 | 0 | S | - | - | C₆H₅ | C₆H₅ | - |
| 1-236 | Ge | 4 | 2 | 2 | 0 | O | - | - | C₆H₅ | C₆H₅ | - |
| 1-237 | Ge | 4 | 1 | 3 | 0 | S | - | - | C₆H₅ | C₆Hₛ | C₆H₅ |
| 1-238 | Ge | 4 | 1 | 3 | 0 | O | - | - | C₆H₅ | C₆H₅ | C₆H₅ |
| 1-239 | Ge | 4 | 2 | 2 | 0 | S | - | - | SC₂H₄S | | - |
| 1-240 | Ge | 4 | 2 | 2 | 0 | O | - | - | SC₂H₄S | | - |
| 1-291 | Ge | 4 | 2 | 2 | 0 | S | - | - | SC₃H₆S | | - |
| 1-242 | Ge | 4 | 2 | 2 | 0 | O | - | - | SC₃H₆S | | - |
| 1-243 | Ge | 4 | 2 | 2 | 0 | S | - | - | SC₂H₄SC₂H₄S | | - |
| 1-244 | Ge | 4 | 2 | 2 | 0 | O | - | - | SC₂H₄SC₂H₄S | | - |
| 1-245 | Zn | 2 | 2 | 0 | 0 | S | - | - | - | - | - |
| 1-246 | Zn | 2 | 2 | 0 | 0 | O | - | - | - | - | - |
| 1-247 | Zr | 4 | 4 | 0 | 0 | S | - | - | - | - | - |
| 1-248 | Zr | 4 | 4 | 0 | 0 | O | - | - | - | - | - |
| 1-249 | Zr | 4 | 2 | 2 | 0 | S | - | - | cyclopentadienyl | cyclopentadienyl | - |
| 1-250 | Zr | 4 | 2 | 2 | 0 | O | - | - | cyclopentadienyl | cyclopentadienyl | - |
| 1-251 | Zr | 4 | 4 | 0 | 1 | S | S | CH₂ | - | - | - |

**[Table 16]**

| CMPD. No. | M | n | p | n-p | m | X₁ | X₂ | R₁ | Y₁ | Y₂ | Y₃ |
|---|---|---|---|---|---|---|---|---|---|---|---|
| 1-252 | Zr | 4 | 4 | 0 | 1 | O | S | CH₂ | - | - | - |
| 1-253 | Zr | 4 | 4 | 0 | 1 | S | 0 | CH₂ | - | - | - |
| 1-254 | Zr | 4 | 4 | 0 | 1 | O | O | CH₂ | - | - | - |
| 1-255 | Zr | 4 | 4 | 0 | 1 | S | S | C₂H₄ | - | - | - |
| 1-256 | Zr | 4 | 4 | 0 | 1 | O | S | C₂H₄ | - | - | - |
| 1-257 | Zr | 4 | 4 | 0 | 1 | S | O | C₂H₄ | - | - | - |
| 1-258 | Zr | 4 | 4 | 0 | 1 | O | O | C₂H₄ | - | - | - |
| 1-259 | Zr | 4 | 2 | 2 | 1 | S | S | CH₂ | cyclopentadienyl | cyclopentadienyl | - |
| 1-260 | Zr | 4 | 2 | 2 | 1 | O | S | CH₂ | cyclopentadienyl | cyclopentadienyl | - |
| 1-261 | Zr | 4 | 2 | 2 | 1 | S | O | CH₂ | cyclopentadienyl | cyclopentadienyl | - |
| 1-262 | Zr | 4 | 2 | 2 | 1 | O | O | CH₂ | cyclopentadienyl | cyclopentadienyl | - |
| 1-263 | Zr | 4 | 2 | 2 | 1 | S | S | C₂H₄ | cyclopentadienyl | cyclopentadienyl | - |
| 1-264 | Zr | 4 | 2 | 2 | 1 | O | S | C₂H₄ | cyclopentadienyl | cyclopentadienyl | - |
| 1-265 | Zr | 4 | 2 | 2 | 1 | S | O | C₂H₄ | cyclopentadienyl | cyclopentadienyl | - |
| 1-266 | Zr | 4 | 2 | 2 | 1 | O | O | C₂H₄ | cyclopentadienyl | cyclopentadienyl | - |
| 1-267 | Ti | 4 | 4 | 0 | 0 | S | - | - | - | - | - |
| 1-268 | Ti | 4 | 4 | 0 | 0 | O | - | - | - | - | - |
| 1-269 | Ti | 4 | 2 | 2 | 0 | S | - | - | cyclopentadienyl | cyclopentadienyl | - |
| 1-270 | Ti | 4 | 2 | 2 | 0 | O | - | - | cyclopentadienyl | cyclopentadienyl | - |
| 1-271 | Ti | 4 | 4 | 0 | 1 | S | S | CH₂ | - | - | - |
| 1-272 | Ti | 4 | 4 | 0 | 1 | O | S | CH₂ | - | - | - |
| 1-273 | Ti | 4 | 4 | 0 | 1 | S | O | CH₂ | - | - | - |
| 1-274 | Ti | 4 | 4 | 0 | 1 | O | O | CH₂ | - | - | - |
| 1-275 | Ti | 4 | 4 | 0 | 1 | S | S | C₂H₄ | - | - | - |

**[Table 17]**

| CMPD. No. | M | n | p | n-p | m | X₁ | X₂ | R₁ | Y₁ | Y₂ | Y₃ |
|---|---|---|---|---|---|---|---|---|---|---|---|
| 1-276 | Ti | 4 | 4 | 0 | 1 | O | S | C₂H₄ | - | - | - |
| 1-277 | Ti | 4 | 4 | 0 | 1 | S | O | C₂H₄ | - | - | - |
| 1-278 | Ti | 4 | 4 | 0 | 1 | O | O | C₂H₄ | - | - | - |
| 1-279 | Ti | 4 | 2 | 2 | 1 | S | S | CH₂ | cyclopentadienyl | cyclopentadienyl | - |
| 1-280 | Ti | 4 | 2 | 2 | 1 | O | S | CH₂ | cyclopentadienyl | cyclopentadienyl | - |
| 1-281 | Ti | 4 | 2 | 2 | 1 | S | O | CH₂ | cyclopentadienyl | cyclopentadienyl | - |
| 1-282 | Ti | 4 | 2 | 2 | 1 | O | O | CH₂ | cyclopentadienyl | cyclopentadienyl | - |
| 1-283 | Ti | 4 | 2 | 2 | 1 | S | S | C₂H₄ | cyclopentadienyl | cyclopentadienyl | - |
| 1-284 | Ti | 4 | 2 | 2 | 1 | O | S | C₂H₄ | cyclopentadienyl | cyclopentadienyl | - |
| 1-285 | Ti | 4 | 2 | 2 | 1 | S | O | C₂H₄ | cyclopentadienyl | cyclopentadienyl | - |
| 1-286 | Ti | 4 | 2 | 2 | 1 | O | O | C₂H₄ | cyclopentadienyl | cyclopentadienyl | - |
| 1-287 | Pb | 4 | 4 | 0 | 0 | S | - | - | - | - | - |
| 1-288 | Pb | 4 | 4 | 0 | 0 | O | - | - | - | - | - |
| 1-289 | Al | 3 | 3 | 0 | 0 | S | - | - | - | - | - |
| 1-290 | Al | 3 | 3 | 0 | 0 | O | - | - | - | - | - |
| 1-291 | Al | 3 | 2 | 1 | 0 | S | - | - | SCH₃ | - | - |
| 1-292 | Al | 3 | 2 | 1 | 0 | O | - | - | SCH₃ | - | - |
| 1-293 | Al | 3 | 2 | 1 | 0 | S | - | - | SC₂H₅ | - | - |
| 1-294 | Al | 3 | 2 | 1 | 0 | O | - | - | SC₂H₅ | - | - |
| 1-295 | Al | 3 | 2 | 1 | 0 | S | - | - | SC₆H₅ | - | - |
| 1-296 | Al | 3 | 2 | 1 | 0 | O | - | - | SC₆H₅ | - | - |
| 1-297 | Al | 3 | 1 | 2 | 0 | S | - | - | SC₂H₄S | | - |
| 1-298 | Al | 3 | 1 | 2 | 0 | O | - | - | SC₂H₄S | | - |
| 1-299 | Al | 3 | 1 | 2 | 0 | S | - | - | SC₂H₄SC₂H₄S | | - |
| 1-300 | Al | 3 | 1 | 2 | 0 | O | - | - | SC₂H₄SC₂H₄S | | - |

Among the compounds illustrated in Tables 1 to 17, specifically, the compounds in which, in the above general formula (1), m is 0 are used.
Further specifically, the compounds in which m is 0 and X₁ is a sulfur atom are used. Among the compounds illustrated in Tables 1 to 17, examples of such compounds include CMPD. Nos. 1-1, 1-35, 1-37, 1-39, 1-41, 1-43, 1-45, 1-47, 1-49, 1-51, 1-53, 1-55, 1-57, 1-59, 1-61, 1-63, 1-65, 1-67, 1-69, 1-71, 1-73, 1-75, 1-141, 1-175, 1-177, 1-179, 1-181, 1-183, 1-185, 1-187, 1-189, 1-191, 1-193, 1-227, 1-229, 1-231, 1-233, 1-235, 1-237, 1-239, 1-241, 1-243, 1-245, 1-247, 1-249, 1-267, 1-269, 1-287, 1-289, 1-291, 1-293, 1-295, 1-297 and 1-299.

Furthermore, in the above general formula (1), as one of preferable examples, there can be exemplified a compound in which n is p, and further preferably, a compound in which n is p, m is 0 and X₁ is a sulfur atom. Among the compounds illustrated in Tables 1 to 17, examples of such compounds include CMPD. Nos. 1-1, 1-141, 1-193, 1-245, 1-247, 1-267, 1-287 and 1-289. Further preferably, a metal atom M is any of elements belonging to Groups 4, 12, 13 and 14 on the periodic table in the longer form, and further more preferably, a metal atom M is a Sn atom.

Further, in the above general formula (1), when n-p is not less than 2, that is, when the compound represented by the above general formula (1) contains two or more Ys in a molecule, examples thereof include compounds represented by the following formula. In the following compound, all three Ys are different groups,

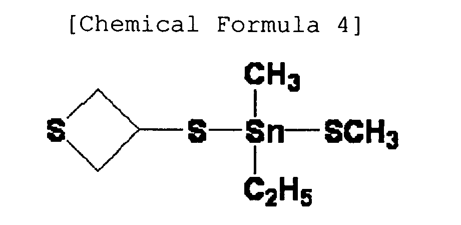

A method for producing a compound represented by the above general formula (1) will be described below.
The compound represented by the above general formula (1) is typically produced by the reaction of a halide of the metal atom M represented by the following general formula (2) with a hydroxy compound or a thiol compound having a thietane group represented by the following general formula (3),

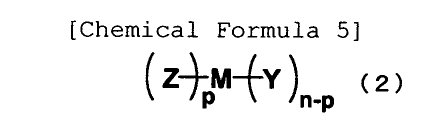

wherein, in the above general formula (2), M, n, p and Y each represent the same as M, n, p and Y in the above general formula (1); and Z represents a halogen atom,

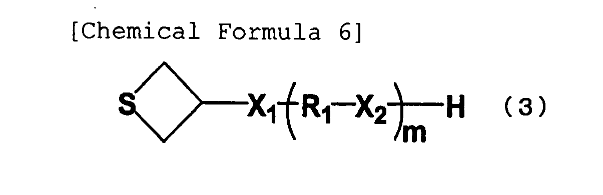

wherein, in the above general formula (3), X₁, X₂, R₁ and m are each the same as X₁, X₂, R₁ and m in the above general formula (1).

The compound represented by the above general formula (2) is available as an industrial raw material or a research reagent.
Furthermore, the compound represented by the above general formula (3) is known in the art, and is prepared by a method as described, for example, in Patent Document 3 (Japanese Patent Laid-Open No. 2003-327583).

The reaction of a halide of the metal atom M represented by the above general formula (2) and a hydroxy compound or a thiol compound having a thietane group represented by the above general formula (3) may be carried out without a solvent or in the presence of a solvent which is inactive to the reaction.

The solvents are not particularly limited as long as they are inactive to the reaction. Examples thereof include hydrocarbon solvents such as petroleum ether, hexane, benzene, toluene, xylene, mesitylene and the like; ether solvents such as diethyl ether, tetrahydrofuran, diethylene glycol dimethyl ether and the like; ketone solvents such as acetone, methyl ethyl ketone, methyl isobutyl ketone and the like; ester solvents such as ethyl acetate, butyl acetate, amyl acetate and the like; chlorine-containing solvents such as methylene chloride, chloroform, chlorobenzene, dichlorobenzene and the like; polar aprotic solvents such as N,N-dimethylformamide, N,N-dimethylacetamide, N,N-dimethylimidazolidinone, dimethyl sulfoxide and the like; sulfur-containing solvents such as tetrahydrothiophene, thiophene, sulfolane, trimethylene sulfide, diethyl sulfide, di-n-propyl sulfide, di-t-butyl sulfide, 3-mercaptothietane, bis(2-mercaptoethyl)sulfide and the like; water and the like.

The temperature for the reaction of the compound represented by the above general formula (2) with the compound represented by the above general formula (3) is not particularly limited, but it is usually in the range of -78 to 200 degrees centigrade and preferably in the range of -78 to 100 degrees centigrade.

Meanwhile, the reaction time is affected by the reaction temperature, but it is usually from several minutes to 100 hours.

The amount of the compound represented by the above general formula (2) and the compound represented by the above general formula (3) used in the reaction of the compound represented by the above general formula (2) with the compound represented by the above general formula (3) is not particularly limited, but the amount of the compound represented by the above general formula (3) is usually from 0.01 to 100 mole, preferably from 0.1 to 50 mole and more preferably from 0.5 to 20 mole, based on 1 mole of the halogen atom contained in the compound represented by the above general formula (2).

When carrying out the reaction of the compound represented by the above general formula (2) with the compound represented by the above general formula (3), it is preferable to use a basic compound as a capturing agent of the generated halogenated hydrogen for effectively carrying out the reaction.
Examples of the basic compound include inorganic bases such as sodium hydroxide, potassium hydroxide, lithium hydroxide, sodium carbonate, potassium carbonate, lithium carbonate, sodium bicarbonate, potassium bicarbonate, lithium bicarbonate, magnesium hydroxide, calcium hydroxide and the like; and organic bases such as pyridine, triethylamine, dimethylaniline, diethylaniline, 1,8-diazabicyclo[5,4,0]-7-undecene and the like.

Hereinafter, a bluing agent will be described.
A bluing agent has an absorption band in a wavelength range of from orange to yellow of a visible light region, and has a function of adjusting the color tone of a resin. The bluing agent contains, further specifically, a substance exhibiting from blue to purple.

The bluing agent used for the polymerizable composition of the present invention is not particularly limited, and concrete examples thereof include a dye, a fluorescent whiteness enhancer, a fluorescent pigment, an inorganic pigment and the like. A bluing agent is appropriately selected from those which can be used as a bluing agent in association with physical properties, resin color tone or the like required for a lens. Among these, preferably used is a dye from the viewpoints of its solubility into the polymerizable composition and transparency of the obtained resin.

The amount of the bluing agent used is different depending on the kind of the monomer, existence of use of various additives, the kind and amount of the additive in use, polymerization method, and polymerization conditions, but it is generally from 0.001 to 500 ppm, preferably from 0.005 to 100 ppm, and further preferably from 0.01 to 10 ppm, based on the total amount of the monomer, that is, the total weight of the polymerizable compound contained in the polymerizable composition. When the amount of the bluing agent added is excessively high, the whole lens becomes excessively blue in some cases; therefore, it is not preferable. When it is excessively small, the improvement effect of the color tone is not fully exhibited in some cases; therefore, it is not preferable either.

A method of adding these bluing agents is not particularly limited, and it is preferable that the bluing agent is added to a monomer in advance. As its method, there can be adopted various methods such as a method involving dissolving it in a monomer or a method involving preparing a master solution containing a bluing agent of a high concentration, diluting with a monomer or other additive using the master solution and adding.

The bluing agent used for the present invention is preferably a dye containing one or two or more dyes selected from blue based dyes and violet based dyes, but a dye of other color may be mixed and used depending on the situation. For example, a gray based dye, a brown based dye, a red based dye or an orange based dye can also be used in addition to the blue based dye and violet based dye. Concrete examples of the combination of such bluing agents include the combination of a blue based dye and a red based dye, the combination of a violet based dye and a red based dye, and the like.

From the viewpoint of the absorption wavelength, a dye having a maximum absorption wavelength of from 520 to 600 nm is preferable, and a dye having a maximum absorption wavelength of from 540 to 580 nm is further preferable.

Concrete examples of the dye include PS Blue RR, PS Violet RC, PET Blue 2000, PS Brilliant Red HEY, MLP RED V-1 (product names each of DyStar Japan Ltd.) and the like.

A fluorescent whiteness enhancer having good miscibility with a resin is preferable. Examples thereof include UVITEX (registered trademark) OB, UVITEX OB-P (product names, products of Nihon Ciba-Geigy K.K.), MIKEPHOR YO, MIKEPHOR ETN conc., MIKEPHOR ETR conc., MIKEPHOREB conc. (product names, products of Miike Paint Co., Ltd.), KAYCALL E, KAYCALL C, KAYCALL PAN (product names, products of Nippon Soda Co., Ltd.), WHITEX (registered trademark) ERN conc. (product name, a product of Sumitomo Chemical Co., Ltd.), MIKAWHITE (registered trademark) ATN conc., MIKAWHITE MTN conc., MIKAWHITE KTN conc., MIKAWHITE ACR (product names, products of Nippon Kayaku Co., Ltd.), Hakkol (registered trademark) PSR, Hakkol CHP-B, Hakkol PY-1800, Hakkol PY-2000, Hakkol HK, Hakkol S-703 (product names, products of Hakkol Chemical Co., Ltd.), ILUMINAR (registered trademark) EX conc., ILUMINAR CK conc. (product names, products of Showakakou Co., Ltd.), Nikkafluor RP conc., Nikkafluor BP conc., Nikkafluor SB conc. and Nikkafluor OB conc. (product names, products of Nikka Chemical Co., Ltd.).

A fluorescent pigment having good miscibility with a resin is preferable. For example, there can be used an inorganic fluorescent pigment obtained by adding a trace heavy metal or a trace rare earth metal as an activator to an oxide or a sulfide, such as magnesium, calcium, barium, strontium, aluminum, zinc, cadmium and the like, an organic fluorescent pigment such as Lumogen Colors, Thioflavine, Rhodamine B, Rhodamine 6G, fluorescein dye and the like, and those obtained by dissolving the above-mentioned pigments to an organic resin for pulverization. Concrete examples include pigments such as Lumogen Color (a product of BASF): 1,5-dianilinoanthracene (Lumogen·Yellow), Dianthylene (Lumogen·Sea blue), Saclicyl aldazine (Lumogen·Yellow orange), 1,4-bis(β-cyano-β-carboethoxyvinyl)benzene (Lumogen·Bright green), 2-anilino-4-(2,5-dichloro-benzoylamino)1,9-anthra-pyrimidine (Lumogen·Reddish orange) and the like.

An inorganic pigment preferably has an average particle diameter of not more than 10 micron (µm). For example, there can be used a blue based pigment or a violet based pigment such as cobalt blue, cobalt violet or the like. Concrete examples include ST-1218 Violet, ST-5254 Blue, ST-5307 Violet (product names, products of Dainichiseika & Chemicals Mfg. Co., Ltd.) and the like.

These bluing agents may be used singly or used in combination of two or more kinds thereof.

Among these bluing agents, a dye type bluing agent is preferably used generally because its solubility into the monomer is high, transparency of the obtained resin and the lens composed of the obtained resin is also high.

The polymerizable composition of the present invention may further contain a thiol compound. Furthermore, at this time, in the compound represented by the above general formula (1), m may be 0 and X₁ may be a sulfur atom. Further, at this time, m may be 0, X₁ may be a sulfur atom, n may be p and M may be a Sn atom.
Hereinafter, the thiol compound will be described.

The thiol compound used in the present invention is a compound containing one or more thiol groups (SH group) in a molecule. As the thiol compound, there can be used, for example, a compound having any structure as long as it is miscible with the compound represented by the above general formula (1).

As the thiol compound, concrete examples of a monofunctional (monovalent) thiol compound include aliphatic mercaptan compounds such as methyl mercaptan, ethyl mercaptan, propyl mercaptan, butyl mercaptan, octyl mercaptan, dodecyl mercaptan, tert-dodecyl mercaptan, hexadecyl mercaptan, octadecyl mercaptan, cyclohexyl mercaptan, benzyl mercaptan, ethylphenyl mercaptan, 2-mercaptomethyl-1,3-dithiolane, 2-mercaptomethyl-1,4-dithiane, 1-mercapto-2,3-epithiopropane, 1-mercaptomethylthio-2,3-epithiopropane, 1-mercaptoethylthio-2,3-epithiopropane, 3-mercaptothietane, 2-mercaptothietane, 3-mercaptomethylthiothietane, 2-mercaptomethylthiothietane, 3-mercaptoethylthiothietane, 2-mercaptoethylthiothietane and the like; aromatic mercaptan compounds such as thiophenol, mercaptotoluene, and the like; and compounds having a hydroxyl group in addition to a mercapto group such as 2-mercaptoethanol, 3-mercapto-1,2-propanediol and the like.

Examples of a polyfunctional thiol (polythiol) compound include aliphatic polythiol compounds such as 1,1-methanedithiol, 1,2-ethanedithiol, 1,1-propanedithiol, 1,2-propanedithiol, 1,3-propanedithiol, 2,2-propanedithiol, 1,6-hexanedithiol, 1,2,3-propanetrithiol, 1,1-cyclohexanedithiol, 1,2-cyclohexanedithiol, 2,2-dimethylpropane-1,3-dithiol, 3,4-dimethoxybutane-1,2-dithiol, 2-methylcyclohexane-2,3-dithiol, 1,1-bis(mercaptomethyl)cyclohexane, thiomalic acid bis(2-mercaptoethyl ester), 2,3-dimercapto-1-propanol (2-mercaptoacetate), 2,3-dimercapto-1-propanol (3-mercaptoproprionate), diethylene glycol bis(2-mercaptoacetate), diethylene glycol bis(3-mercaptopropionate), 1,2-dimercaptopropyl methyl ether, 2,3-dimercaptopropyl methyl ether, 2,2-bis(mercaptomethyl)-1,3-propanedithiol, bis(2-mercaptoethyl) ether, ethylene glycol bis(2-mercaptoacetate), ethylene glycol bis(3-mercaptopropionate), trimethylolpropane bis(2-mercaptoacetate), trimethylolpropane bis(3-mercaptopropionate), pentaerythritol tetrakis(2-mercaptoacetate), pentaerythritol tetrakis(3-mercaptopropionate), tetrakis(mercaptomethyl)methane, 1,1,1,1-tetrakis(mercaptomethyl)methane and the like;
aromatic polythiol compounds such as 1,2-dimercaptobenzene, 1,3-dimercaptobenzene, 1,4-dimercaptobenzene, 1,2-bis(mercaptomethyl)benzene, 1,3-bis(mercaptomethyl)benzene, 1,4-bis(mercaptomethyl)benzene, 1,2-bis(mercaptoethyl)benzene, 1,3-bis(mercaptoethyl)benzene, 1,4-bis(mercaptoethyl)benzene, 1,2,3-trimercaptobenzene, 1,2,4-trimercaptobenzene, 1,3,5-trimercaptobenzene, 1,2,3-tris(mercaptomethyl)benzene, 1,2,4-tris(mercaptomethyl)benzene, 1,3,5-tris(mercaptomethyl)benzene, 1,2,3-tris(mercaptoethyl)benzene, 1,2,4-tris(mercaptoethyl)benzene, 1,3,5-tris(mercaptoethyl)benzene, 2,5-toluenedithiol, 3,4-toluenedithiol, 1,3-di(p-methoxyphenyl)propane-2,2-dithiol, 1,3-diphenylpropane-2,2-dithiol, phenylmethane-1,1-dithiol, 2,4-di(p-mercaptophenyl)pentane, and the like;
aromatic polythiol compounds each having a sulfur atom other than a mercapto group, such as 1,2-bis(mercaptoethylthio)benzene, 1,3-bis(mercaptoethylthio)benzene, 1,4-bis(mercaptoethylthio)benzene, 1,2,3-tris(mercaptomethylthio)benzene, 1,2,4-tris(mercaptomethylthio)benzene, 1,3,5-tris(mercaptomethylthio)benzene, 1,2,3-tris(mercaptoethylthio)benzene, 1,2,4-tris(mercaptoethylthio)benzene, 1,3,5-tris(mercaptoethylthio)benzene and the like, nuclear alkylated products thereof;
aliphatic polythiol compounds each having a sulfur group other than a mercapto group, such as bis(mercaptomethyl) sulfide, bis(mercaptomethyl) disulfide, bis(mercaptoethyl) sulfide, bis(mercaptoethyl) disulfide, bis(mercaptopropyl) sulfide, bis(mercaptomethylthio)methane, bis(2-mercaptoethylthio)methane, bis(3-mercaptopropylthio)methane, 1,2-bis(mercaptomethylthio)ethane, 1,2-bis(2-mercaptoethylthio)ethane, 1,2-bis(3-mercaptopropyl)ethane, 1,3-bis(mercaptomethylthio)propane, 1,3-bis(2-mercaptoethylthio)propane, 1,3-bis(3-mercaptopropylthio)propane, 1,2,3-tris(mercaptomethylthio)propane, 1,2,3-tris(2-mercaptoethylthio)propane, 1,2,3-tris(3-mercaptopropylthio)propane, 1,2-bis[(2-mercaptoethyl)thio]-3-mercaptopropane, 4,8-dimercaptomethyl-1,11-dimercapto-3,6,9-trithiaundecane, 4,7-dimercaptomethyl-1,11-dimercapto-3,6,9-trithiaundecane, 5,7-dimercaptomethyl-1,11-dimercapto-3,6,9-trithiaundecane, tetrakis(mercaptomethylthiomethyl)methane, tetrakis(2-mercaptoethylthiomethyl)methane, tetrakis(3-mercaptopropylthiomethyl)methane, bis(2,3-dimercaptopropyl) sulfide, bis(1,3-dimercaptopropyl) sulfide, 2,5-dimercapto-1,4-dithiane, 2,5-bis(mercaptomethyl)-1,4-dithiane, 2,5-dimercaptomethyl-2,5-dimethyl-1,4-dithiane, bis(mercaptomethyl) disulfide, bis(mercaptoethyl) disulfide, bis(mercaptopropyl) disulfide, 4-mercaptomethyl-1,8-dimercapto-3,6-dithiaoctane and the like, thioglycolic acid and mercaptopropionic acid esters of these polythiol compounds,
aliphatic polythiol compounds each having a sulfur atom and an ester bond other than a mercapto group, such as hydroxymethylsulfide bis(2-mercaptoacetate), hydroxymethylsulfide bis(3-mercaptopropionate), hydroxyethylsulfide bis(2-mercaptoacetate), hydroxyethylsulfide bis(3-mercaptopropionate), hydroxypropylsulfide bis(2-mercaptoacetate), hydroxypropylsulfide bis(3-mercaptopropionate), hydroxymethyldisulfide bis(2-mercaptoacetate), hydroxymethyldisulfide bis(3-mercaptopropionate), hydroxyethyldisulfide bis(2-mercaptoacetate), hydroxyethyldisulfide bis(3-mercaptopropionate), hydroxypropyldisulfide bis(2-mercaptoacetate), hydroxypropyldisulfide bis(3-mercaptopropionate), 2-mercaptoethyl ether bis(2-mercaptoacetate), 2-mercaptoethyl ether bis(3-mercaptopropionate), 1,4-dithiane-2,5-diol bis(2-mercaptoacetate), 1,4-dithiane-2,5-diol bis(3-mercaptopropionate), thiodiglycolic acid bis(2-mercaptoethyl ester), thiodipropionic acid bis(2-mercaptoethyl ester), 4,4-thiodibutyric acid bis(2-mercaptoethyl ester), dithiodiglycolic acid bis(2-mercaptoethyl ester), dithiodipropionic acid bis(2-mercaptoethyl ester), 4,4-dithiodibutyric acid bis(2-mercaptoethyl ester), thiodiglycolic acid bis(2,3-dimercaptopropyl ester), thiodipropionic acid bis(2,3-dimercaptopropyl ester), dithioglycolic acid bis(2,3-dimercaptopropyl ester), dithiodipropionic acid bis(2,3-dimercaptopropyl ester) and the like;
heterocyclic compounds having a sulfur atom other than a mercapto group such as 3,4-thiophenedithiol, 2,5-dimercapto-1,3,4-thiadiazol and the like;
compounds containing a hydroxy group other than a mercapto group such as glycerin di(mercaptoacetate), 1-hydroxy-4-mercaptocyclohexane, 2,4-dimercaptophenol, 2-mercaptohydroquinone, 4-mercaptophenol, 3,4-dimercapto-2-propanol, 1,3-dimercapto-2-propanol, 2,3-dimercapto-1-propanol, 1,2-dimercapto-1,3-butanediol, pentaerythritol tris(3-mercaptopropionate), pentaerythritol mono(3-mercaptopropionate), pentaerythritol bis(3-mercaptopropionate), pentaerythritol tris(thioglycolate), dipentaerythritol pentakis(3-mercaptopropionate), hydroxymethyl-tris(mercaptoethylthiomethyl)methane, 1-hydroxyethylthio-3-mercaptoethylthiobenzene and the like;
1,1,3,3-tetrakis(mercaptomethylthio)propane, 1,1,2,2-tetrakis(mercaptomethylthio)ethane, 4,6-bis(mercaptomethylthio)-1,3-dithiane, 4,6-bis(mercaptomethylthio)-1,3-dithiacyclohexane, 1,1,5,5-tetrakis(mercaptomethylthio)-3-thiapentane, 1,1,6,6-tetrakis(mercaptomethylthio)-3,4-dithiahexane, 2,2-bis(mercaptomethylthio)ethanethiol, 2-(4,5-dimercapto-2-thiapentyl)-1,3-dithiacyclopentane, 2,2-bis(mercaptomethyl)-1,3-dithiacyclopentane, 2,5-bis(4,4-bis(mercaptomethylthio)-2-thiabutyl)-1,4-dithiane, 2,2-bis(mercaptomethylthio)-1,3-propanedithiol, 3-mercaptomethylthio-1,7-dimercapto-2,6-dithiaheptane, 3,6-bis(mercaptomethylthio)-1,9-dimercapto-2,5,8-trithianonane, 4,6-bis(mercaptomethylthio)-1,9-dimercapto-2,5,8-trithianonane, 3-mercaptomethylthio-1,6-dimercapto-2,5-dithiahexane, 2-(2,2-bis(mercaptomethylthio)ethyl)-1,3-dithietane, 1,1,9,9-tetrakis(mercaptomethylthio)-5-(3,3-bis(mercaptomethyl thio)-1-thiapropyl)3,7-dithianonane, tris(2,2-bis(mercaptomethylthio)ethyl)methane, tris(4,4-bis(mercaptomethylthio)-2-thiabutyl)methane, tetrakis(2,2-bis(mercaptomethylthio)ethyl)methane, tetrakis(4,4-bis(mercaptomethylthio)-2-thiabutyl)methane, 3,5,9,11-tetrakis(mercaptomethylthio)-1,13-dimercapto-2,6,8,12 -tetrathiatridecane, 3,5,9,11,15,17-hexakis(mercaptomethylthio)-1,19-dimercapto-2,6 ,8,12,14,18-hexathianonadecane, 9-(2,2-bis(mercaptomethylthio)ethyl)-3,5,13,15-tetrakis(mercap tomethylthio)-1,17-dimercapto-2,6,8,10,12,16-hexathiaheptadeca ne, 3,4,8,9-tetrakis(mercaptomethylthio)-1,11-dimercapto-2,5,7,10-tetrathiaundecane, 3,4,8,9,13,14-hexakis(mercaptomethylthio)-1,16-dimercapto-2,5, 7,10,12,15-hexathiahexadecane, 8-[bis(mercaptomethylthio)methyl]-3,4,12,13-tetrakis(mercaptom ethylthio)-1,15-dimercapto-2,5,7,9,11,14-hexathiapentadecane, 4,6-bis[3,5-bis(mercaptomethylthio)-7-mercapto-2,6-dithiahepty lthio]-1,3-dithiane, 4-[3,5-bis(mercaptomethylthio)-7-mercapto-2,6-dithiaheptylthio ]-6-mercaptomethylthio-1,3-dithiane, 1,1-bis[4-(6-mercaptomethylthio)-1,3-dithianylthio]-3,3-bis(me rcaptomethylthio)propane, 1,3-bis[4-(6-mercaptomethylthio)-1,3-dithianylthio]-1,3-bis(me rcaptomethylthio)propane, 1-[4-(6-mercaptomethylthio)-1,3-dithianylthio]-3-[2,2-bis(merc aptomethylthio)ethyl]-7,9-bis(mercaptomethylthio)-2,4,6,10-tet rathiaundecane, 1-[4-(6-mercaptomethylthio)-1,3-dithianylthio]-3-[2-(1,3-dithi etanyl)]methyl-7,9-bis(mercaptomethylthio)-2,4,6,10-tetrathiau ndecane, 1,5-bis[4-(6-mercaptomethylthio)-1,3-dithianylthio]-3-[2-(1,3-dithietanyl)]methyl-2,4-dithiapentane, 4,6-bis{3-[2-(1,3-dithietanyl)]methyl-5-mercapto-2,4-dithiapen tylthio}-1,3-dithiane, 4,6-bis[4-(6-mercaptomethylthio)-1,3-dithianylthio]-1,3-dithia ne, 4-[4-(6-mercaptomethylthio)-1,3-dithianylthio]-6-[4-(6-mercapt omethylthio)-1,3-dithianylthio]-1,3-dithiane, 3-[2-(1,3-dithietanyl)]methyl-7,9-bis(mercaptomethylthio)-1,11 -dimercapto-2,4,6,10-tetrathiaundecane, 9-[2-(1,3-dithietanyl)]methyl-3,5,13,15-tetrakis(mercaptomethy lthio)-1,17-dimercapto-2,6,8,10,12,16-hexathiaheptadecane, 3-[2-(1,3-dithietanyl)]methyl-7,9,13,15-tetrakis(mercaptomethy lthio)-1,17-dimercapto-2,4,6,10,12,16-hexathiaheptadecane, 3,7-bis[2-(1,3-dithietanyl)]methyl-1,9-dimercapto-2,4,6,8-tetr athianonane, 4-[3,4,8,9-tetrakis(mercaptomethylthio)-11-mercapto-2,5,7,10-t etrathiaundecyl]-5-mercaptomethylthio-1,3-dithiolane, 4,5-bis[3,4-bis(mercaptomethylthio)-6-mercapto-2,5-dithiahexyl thio]-1,3-dithiolane, 4-[3,4-bis(mercaptomethylthio)-6-mercapto-2,5-dithiahexylthio] -5-mercaptomethylthio-1,3-dithiolane, 4-[3-bis(mercaptomethylthio)methyl-5,6-bis(mercaptomethylthio) -8-mercapto-2,4,7-trithiaoctyl]-5-mercaptomethylthio-1,3-dithi olane, 2-{bis[3,4-bis(mercaptomethylthio)-6-mercapto-2,5-dithiahexylt hio]methyl}-1,3-dithietane, 2-[3,4-bis(mercaptomethylthio)-6-mercapto-2,5-dithiahexylthio] mercaptomethylthiomethyl-1,3-dithietane, 2-[3,4,8,9-tetrakis(mercaptomethylthio)-11-mercapto-2,5,7,10-t etrathiaundecylthio]mercaptomethylthiomethyl-1,3-dithietane, 2-[3-bis(mercaptomethylthio)methyl-5,6-bis(mercaptomethylthio) -8-mercapto-2,4,7-trithiaoctyl]mercaptomethylthiomethyl-1,3-di thietane, 4,5-bis{1-[2-(1,3-dithietanyl)]-3-mercapto-2-thiapropylthio}-1 ,3-dithiolane, 4-{1-[2-(1,3-dithietanyl)]-3-mercapto-2-thiapropylthio}-5-[1,2 -bis(mercaptomethylthio)-4-mercapto-3-thiabutylthio]-1,3-dithi olane, 2-{bis[4-(5-mercaptomethylthio-1,3-dithioranyl)thio]methyl}-1, 3-dithietane, 4-[4-(5-mercaptomethylthio-1,3-dithioranyl)thio]-5-{1-[2-(1,3-dithietanyl)]-3-mercapto-2-thiapropylthio}-1,3-dithiolane and compounds having dithioacetal or dithioketal skeleton such as their oligomer and the like;
tris(mercaptomethylthio)methane, tris(mercaptoethylthio)methane, 1,1,5,5-tetrakis(mercaptomethylthio)-2,4-dithiapentane, bis[4,4-bis(mercaptomethylthio)-1,3-dithiabutyl]-(mercaptometh ylthio)methane, tris[4,4-bis(mercaptomethylthio)-1,3-dithiabutyl]methane, 2,4,6-tris(mercaptomethylthio)-1,3,5-trithiacyclohexane, 2,4-bis(mercaptomethylthio)-1,3,5-trithiacyclohexane, 1,1,3,3-tetrakis(mercaptomethylthio)-2-thiapropane, bis(mercaptomethyl)methylthio-1,3,5-trithiacyclohexane, tris[(4-mercaptomethyl-2,5-dithiacyclohexyl-1-yl)methylthio]me thane, 2,4-bis(mercaptomethylthio)-1,3-dithiacyclopentane, 2-mercaptoethylthio-4-mercaptomethyl-1,3-dithiacyclopentane, 2-(2,3-dimercaptopropylthio)-1,3-dithiacyclopentane, 4-mercaptomethyl-2-(2,3-dimercaptopropylthio)-1,3-dithiacyclop entane, 4-mercaptomethyl-2-(1,3-dimercapto-2-propylthio)-1,3-dithiacyc lopentane, tris[2,2-bis(mercaptomethylthio)-1-thiaethyl]methane, tris[3,3-bis(mercaptomethylthio)-2-thiapropyl]methane, tris[4,4-bis(mercaptomethylthio)-3-thiabutyl]methane, 2,4,6-tris[3,3-bis(mercaptomethylthio)-2-thiapropyl]-1,3,5-tri thiacyclohexane, tetrakis[3,3-bis(mercaptomethylthio)-2-thiapropyl]methane and compounds having ortho trithioformic ester skeleton such as their oligomer and the like; and
3,3'-di(mercaptomethylthio)-1,5-dimercapto-2,4-dithiapentane, 2,2'-di(mercaptomethylthio)-1,3-dithiacyclopentane, 2,7-di(mercaptomethyl)-1,4,5,9-tetrathiaspiro[4,4]nonane, 3,9-dimercapto-1,5,7,11-tetrathiaspiro[5,5]undecane and compounds having ortho tetrathiocarbonate ester skeleton such as their oligomer, but are not restricted to these exemplified compounds alone. These exemplified compounds may be used singly, or two or more compounds may be used in combination.

Among these thiol compounds, in consideration of optical physical properties of the obtained resin, particularly Abbe's number, it is preferable to select aliphatic type thiol compounds rather than aromatic type thiol compounds. Furthermore, in consideration of optical physical properties, particularly the demand of refractive index, it is more preferable to select compounds each having a sulfur atom other than a thiol group such as a sulfide bond and/or a disulfide bond. In consideration of heat resistance of the obtained resin, it is particularly preferable to select one or more thiol compounds each having a polymerizable group such as an epithio group or a thietanyl group, or one or more compounds each having three or more thiol groups in order to enhance three-dimensional crosslinking property.

Meanwhile, from the viewpoint of improvement in a balance between the refractive index and mechanical properties, preferably used is a thiol compound having a thietane ring.

Preferable examples of thiol in view of the above include 1-mercapto-2,3-epithiopropane, 1-mercaptomethylthio-2,3-epithiopropane, 1-mercaptoethylthio-2,3-epithiopropane, 3-mercaptothietane, 2-mercaptothietane, 3-mercaptomethylthiothietane, 2-mercaptomethylthiothietane, 3-mercaptoethylthiothietane, 2-mercaptoethylthiothietane, 2,5-bis(mercaptomethyl)-1,4-dithiane, 4-mercaptomethyl-1,8-dimercapto-3,6-dithiaoctane, 4,8-dimercaptomethyl-1,11-dimercapto-3,6,9-trithiaundecane, 4,7-dimercaptomethyl-1,11-dimercapto-3,6,9-trithiaundecane, 5,7-dimercaptomethyl-1,11-dimercapto-3,6,9-trithiaundecane, 1,1,1,1-tetrakis(mercaptomethyl)methane, 1,1,3,3-tetrakis(mercaptomethylthio)propane, 1,1,2,2-tetrakis(mercaptomethylthio)ethane, 4,6-bis(mercaptomethylthio)-1,3-dithiane and 2-(2,2-bis(mercaptomethylthio)ethyl)-1,3-dithietane.

Further preferable examples thereof include 3-mercaptothietane, 4-mercaptomethyl-1,8-dimercapto-3,6-dithiaoctane, 4,8-dimercaptomethyl-1,11-dimercapto-3,6,9-trithiaundecane, 4,7-dimercaptomethyl-1,11-dimercapto-3,6,9-trithiaundecane, 5,7-dimercaptomethyl-1,11-dimercapto-3,6,9-trithiaundecane, 1,1,1,1-tetrakis(mercaptomethyl)methane, 1,1,3,3-tetrakis(mercaptomethylthio)propane, 1,1,2,2-tetrakis(mercaptomethylthio)ethane, 4,6-bis(mercaptomethylthio)-1,3-dithiane, 2-(2,2-bis(mercaptomethylthio)ethyl)-1,3-dithietane and 2,5-bis(mercaptomethyl)-1,4-dithiane. Furthermore, when a divalent thiol compound is selected, it is preferable to use thiol compounds each having a polymerizable group and/or tri- or higher valent thiol compounds in combination.

The thiol compound is, further specifically, one or more compounds selected from the group consisting of 3-mercaptothietane, 4-mercaptomethyl-1,8-dimercapto-3,6-dithiaoctane, 4,8-dimercaptomethyl-1,11-dimercapto-3,6,9-trithiaundecane and 2,5-bis(mercaptomethyl)-1,4-dithiane.
In addition, preferable examples of the combination of the thiol compound and a compound represented by the above general formula (1) include the following:
(i) combination in which, in the compound represented by the above general formula (1), n is p, m is 0, X₁ is a sulfur atom, and the thiol compound is one or more compounds selected from the group consisting of 3-mercaptothietane, 4-mercaptomethyl-1,8-dimercapto-3,6-dithiaoctane, 4,8-dimercaptomethyl-1,11-dimercapto-3,6,9-trithiaundecane and 2,5-bis(mercaptomethyl)-1,4-dithiane, and
(ii) combination in which, in the compound represented by the above general formula (1), the above metal atom is a Sn atom, and the thiol compound is one or more compounds selected from the group consisting of 3-mercaptothietane, 4-mercaptomethyl-1,8-dimercapto-3,6-dithiaoctane, 4,8-dimercaptomethyl-1,11-dimercapto-3,6,9-trithiaundecane and 2,5-bis(mercaptomethyl)-1,4-dithiane.

As the amount of these thiol compounds used, when the total amount of the compound represented by the above general formula (1) and the thiol compound is taken as 100 weight parts, and the amount of the thiol compound used is excessively small, improvement in the mechanical strength and yellowness index is low in some cases; therefore, it is not preferable. Furthermore, when the total amount of the compound represented by the above general formula (1) and the thiol compound is taken as 100 weight parts, and the amount of the thiol compound used is excessively high, heat resistance is remarkably lowered in some cases; therefore, it is not preferable.

Accordingly, the amount of the thiol compound is preferably from 1 to 50 weight parts when the total amount of the compound represented by the above general formula (1) and the thiol compound is taken as 100 weight parts. The amount of the thiol compound is more preferably from 1 to 25 weight parts when the total amount of the compound represented by the above general formula (1) and the thiol compound is taken as 100 weight parts.

The polymerizable composition of the present invention may further contain an epoxy compound and/or an episulfide compound. Further, at this time, in the compound represented by the above general formula (1), m may be 0, and X₁ may be a sulfur atom. Furthermore, at this time, m may be 0, X₁ may be a sulfur atom, n may be p, and M may be a Sn atom.

The epoxy compound and the episulfide compound each contain one or more epoxy groups and episulfide groups in a molecule. Further, as the epoxy compound and the episulfide compound, even a compound having any structure can be used as long as it is miscible, for example, with the compound represented by the above general formula (1). Preferably, a compound containing two or more epoxy groups and/or episulfide groups in total can be used.

Concrete examples of the epoxy compound include a phenol type epoxy compound obtained by the condensation reaction of a polyhydric phenol compound such as bisphenol A, bisphenol F or the like with an epihalohydrin compound (for example, bisphenol A glycidyl ether, bisphenol F glycidyl ether);
an alcohol type epoxy compound obtained by condensation of a polyhydric alcohol compound such as hydrogenated bisphenol A, hydrogenated bisphenol F, cyclohexane dimethanol or the like with an epihalohydrin compound (for example, hydrogenated bisphenol A glycidyl ether, hydrogenated bisphenol F glycidyl ether);
a glycidyl ester type epoxy compound obtained by condensation of a polyhydric organic acid compound such as 3,4-epoxycyclohexylmethyl-3',4'-epoxycyclohexane carboxylate, 1,2-hexahydrophthalic acid diglycidyl ester or the like with an epihalohydrin compound; and
an amine type epoxy compound obtained by condensation of primary and secondary amine compounds with an epihalohydrin compound. In addition, an aliphatic polyhydric epoxy compound such as vinylcyclohexene diepoxide including 4-vinyl-1-cyclohexane diepoxide or the like can be cited.

Concrete examples of the epoxy compound having a sulfide group and the epoxy compound having an ether group include chained aliphatic 2,3-epoxypropylthio compounds such as bis(2,3-epoxypropyl)sulfide, bis(2,3-epoxypropyl)disulfide, bis(2,3-epoxypropylthio)methane, 1,2-bis(2,3-epoxypropylthio)ethane, 1,2-bis(2,3-epoxypropylthio)propane, 1,3-bis(2,3-epoxypropylthio)propane, 1,3-bis(2,3-epoxypropylthio)-2-methylpropane, 1,4-bis(2,3-epoxypropylthio)butane, 1,4-bis(2,3-epoxypropylthio)-2-methylbutane, 1,3-bis(2,3-epoxypropylthio)butane, 1,5-bis(2,3-epoxypropylthio)pentane, 1,5-bis(2,3-epoxypropylthio)-2-methylpentane, 1,5-bis(2,3-epoxypropylthio)-3-thiapentane, 1,6-bis(2,3-epoxypropylthio)hexane, 1,6-bis(2,3-epoxypropylthio)-2-methylhexane, 3,8-bis(2,3-epoxypropylthio)-3,6-dithiaoctane, 1,2,3-tris(2,3-epoxypropylthio)propane, 2,2-bis(2,3-epoxypropylthio)-1,3-bis(2,3-epoxypropylthiomethyl )propane, 2,2-bis(2,3-epoxypropylthiomethyl)-1-(2,3-epoxypropylthio)buta ne, 1,5-bis(2,3-epoxypropylthio)-2-(2,3-epoxypropylthiomethyl)-3-t hiapentane, 1,5-bis(2,3-epoxypropylthio)-2,4-bis(2,3-epoxypropylthiomethyl )-3-thiapentane, 1-(2,3-epoxypropylthio)-2,2-bis(2,3-epoxypropylthiomethyl)-4-t hiahexane, 1,5,6-tris(2,3-epoxypropylthio)-4-(2,3-epoxypropylthiomethyl)-3-thiahexane, 1,8-bis(2,3-epoxypropylthio)-4-(2,3-epoxypropylthiomethyl)-3,6 -dithiaoctane, 1,8-bis(2,3-epoxypropylthio)-4,5-bis(2,3-epoxypropylthiomethyl )-3,6-dithiaoctane, 1,8-bis(2,3-epoxypropylthio)-4,4-bis(2,3-epoxypropylthiomethyl )-3,6-dithiaoctane, 1,8-bis(2,3-epoxypropylthio)-2,5-bis(2,3-epoxypropylthiomethyl )-3,6-dithiaoctane, 1,8-bis(2,3-epoxypropylthio)-2,4,5-tris(2,3-epoxypropylthiomet hyl)-3,6-dithiaoctane, 1,1,1-tris[[2-(2,3-epoxypropylthio)ethyl]thiomethyl]-2-(2,3-ep oxypropylthio)ethane, 1,1,2,2-tetrakis[[2-(2,3-epoxypropylthio)ethyl]thiomethyl]etha ne, 1,11-bis(2,3-epoxypropylthio)-4,8-bis(2,3-epoxypropylthiomethy 1)-3,6,9-trithiaundecane, 1,11-bis(2,3-epoxypropylthio)-4,7-bis(2,3-epoxypropylthiomethy 1)-3,6,9-trithiaundecane, 1,11-bis(2,3-epoxypropylthio)-5,7-bis(2,3-epoxypropylthiomethy 1)-3,6,9-trithiaundecane and the like;
cyclic aliphatic 2,3-epoxypropylthio compounds such as 1,3-bis(2,3-epoxypropylthio)cyclohexane, 1,4-bis(2,3-epoxypropylthio)cyclohexane, 1,3-bis(2,3-epoxypropylthiomethyl)cyclohexane, 1,4-bis(2,3-epoxypropylthiomethyl)cyclohexane, 2,5-bis(2,3-epoxypropylthiomethyl)-1,4-dithiane, 2,5-bis[[2-(2,3-epoxypropylthio)ethyl]thiomethyl]-1,4-dithiane, 2,5-bis(2,3-epoxypropylthiomethyl)-2,5-dimethyl-1,4-dithiane;
aromatic 2,3-epoxypropylthio compounds such as 1,2-bis(2,3-epoxypropylthio)benzene, 1,3-bis(2,3-epoxypropylthio)benzene, 1,4-bis(2,3-epoxypropylthio)benzene, 1,2-bis(2,3-epoxypropylthiomethyl)benzene, 1,3-bis(2,3-epoxypropylthiomethyl)benzene, 1,4-bis(2,3-epoxypropylthiomethyl)benzene, bis[4-(2,3-epoxypropylthio)phenyl]methane, 2,2-bis[4-(2,3-epoxypropylthio)phenyl]propane, bis[4-(2,3-epoxypropylthio)phenyl]sulfide, bis[4-(2,3-epoxypropylthio)phenyl]sulfone, 4,4'-bis(2,3-epoxypropylthio)biphenyl and the like;
monofunctional epoxy compounds such as ethylene oxide, propylene oxide, glycidol, epichlorohydrin and the like;
chained aliphatic 2,3-epoxypropyloxy compounds such as bis(2,3-epoxypropyl)ether, bis(2,3-epoxypropyloxy)methane, 1,2-bis(2,3-epoxypropyloxy)ethane, 1,2-bis(2,3-epoxypropyloxy)propane, 1,3-bis(2,3-epoxypropyloxy)propane, 1,3-bis(2,3-epoxypropyloxy)-2-methylpropane, 1,4-bis(2,3-epoxypropyloxy)butane, 1,4-bis(2,3-epoxypropyloxy)-2-methylbutane, 1,3-bis(2,3-epoxypropyloxy)butane, 1,5-bis(2,3-epoxypropyloxy)pentane, 1,5-bis(2,3-epoxypropyloxy)-2-methylpentane, 1,5-bis(2,3-epoxypropyloxy)-3-thiapentane, 1,6-bis(2,3-epoxypropyloxy)hexane, 1,6-bis(2,3-epoxypropyloxy)-2-methylhexane, 3,8-bis(2,3-epoxypropyloxy)-3,6-dithiaoctane, 1,2,3-tris(2,3-epoxypropyloxy)propane, 2,2-bis(2,3-epoxypropyloxy)-1,3-bis(2,3-epoxypropyloxymethyl)p ropane, 2,2-bis(2,3-epoxypropyloxymethyl)-1-(2,3-epoxypropyloxy)butane, 1,5-bis(2,3-epoxypropyloxy)-2-(2,3-epoxypropyloxymethyl)-3-thi apentane, 1,5-bis(2,3-epoxypropyloxy)-2,4-bis(2,3-epoxypropyloxymethyl)-3-thiapentane, 1-(2,3-epoxypropyloxy)-2,2-bis(2,3-epoxypropyloxymethyl)-4-thi ahexane, 1,5,6-tris(2,3-epoxypropyloxy)-4-(2,3-epoxypropyloxymethyl)-3-thiahexane, 1,8-bis(2,3-epoxypropyloxy)-4-(2,3-epoxypropyloxymethyl)-3,6-d ithiaoctane, 1,8-bis(2,3-epoxypropyloxy)-4,5-bis(2,3-epoxypropyloxymethyl)-3,6-dithiaoctane, 1,8-bis(2,3-epoxypropyloxy)-4,4-bis(2,3-epoxypropyloxymethyl)-3,6-dithiaoctane, 1,8-bis(2,3-epoxypropyloxy)-2,5-bis(2,3-epoxypropyloxymethyl)-3,6-dithiaoctane, 1,8-bis(2,3-epoxypropyloxy)-2,4,5-tris(2,3-epoxypropyloxymethy 1)-3,6-dithiaoctane, 1,1,1-tris[[2-(2,3-epoxypropyloxy)ethyl]thiomethyl]-2-(2,3-epo xypropyloxy)ethane, 1,1,2,2-tetrakis[[2-(2,3-epoxypropyloxy)ethyl]thiomethyl]ethan e, 1,11-bis(2,3-epoxypropyloxy)-4,8-bis(2,3-epoxypropyloxymethyl) -3,6,9-trithiaundecane, 1,11-bis(2,3-epoxypropyloxy)-4,7-bis(2,3-epoxypropyloxymethyl) -3,6,9-trithiaundecane, 1,11-bis(2,3-epoxypropyloxy)-5,7-bis(2,3-epoxypropyloxymethyl) -3,6,9-trithiaundecane and the like;
cyclic aliphatic 2,3-epoxypropyloxy compounds such as 1,3-bis(2,3-epoxypropyloxy)cyclohexane, 1,4-bis(2,3-epoxypropyloxy)cyclohexane, 1,3-bis(2,3-epoxypropyloxymethyl)cyclohexane, 1,4-bis(2,3-epoxypropyloxymethyl)cyclohexane, 2,5-bis(2,3-epoxypropyloxymethyl)-1,4-dithiane, 2,5-bis[[2-(2,3-epoxypropyloxy)ethyl]thiomethyl]-1,4-dithiane, 2,5-bis(2,3-epoxypropyloxymethyl)-2,5-dimethyl-1,4-dithiane and the like; and
aromatic 2,3-epoxypropyloxy compounds such as 1,2-bis(2,3-epoxypropyloxy)benzene, 1,3-bis(2,3-epoxypropyloxy)benzene, 1,4-bis(2,3-epoxypropyloxy)benzene, 1,2-bis(2,3-epoxypropyloxymethyl)benzene, 1,3-bis(2,3-epoxypropyloxymethyl)benzene, 1,4-bis(2,3-epoxypropyloxymethyl)benzene, bis[4-(2,3-epoxypropyloxy)phenyl]methane, 2,2-bis[4-(2,3-epoxypropyloxy)phenyl]propane, bis[4-(2,3-epoxypropyloxy)phenyl]sulfide, bis[4-(2,3-epoxypropyloxy)phenyl]sulfone, 4,4'-bis(2,3-epoxypropyloxy)biphenyl and the like, but are not restricted to these exemplified compounds alone.

Of these exemplified epoxy compounds, preferable examples include bis(2,3-epoxypropyl)disulfide;
4-vinyl-1-cyclohexane diepoxide;
a phenol type epoxy compound obtained by the condensation reaction of a polyhydric phenol compound such as bisphenol A, bisphenol F or the like with an epihalohydrin compound (for example, bisphenol A glycidyl ether, bisphenol F glycidyl ether);
an alcohol type epoxy compound obtained by condensation of a polyhydric alcohol compound such as hydrogenated bisphenol A, hydrogenated bisphenol F or the like with an epihalohydrin compound (for example, hydrogenated bisphenol A glycidyl ether, hydrogenated bisphenol F glycidyl ether);
a glycidyl ester type epoxy compound obtained by condensation of a polyhydric organic acid compound such as 3,4-epoxycyclohexylmethyl-3',4'-epoxycyclohexane carboxylate, 1,2-hexahydrophthalic acid diglycidyl ester or the like with an epihalohydrin compound; and an amine type epoxy compound obtained by condensation of primary and secondary amine compounds with an epihalohydrin compound. In addition, an aliphatic polyhydric epoxy compound such as vinylcyclohexene diepoxide or the like can be cited.
More preferable examples thereof include bis(2,3-epoxypropyl)disulfide, 1,3-bis(2,3-epoxypropyloxy)cyclohexane (that is, cyclohexane dimethanol diglycidyl ether), bisphenol A glycidyl ether and bisphenol F glycidyl ether. Further preferable examples include cyclohexane dimethanol diglycidyl ether and bisphenol F glycidyl ether.

Concrete examples of the episulfide compound include epithioethylthio compounds such as bis(1,2-epithioethyl) sulfide, bis(1,2-epithioethyl)disulfide, bis(epithioethylthio)methane, bis(epithioethylthio)benzene, bis[4-(epithioethylthio)phenyl]sulfide, bis[4-(epithioethylthio)phenyl]methane and the like;
chained aliphatic 2,3-epithiopropylthio compounds such as bis(2,3-epithiopropyl)sulfide, bis(2,3-epithiopropyl)disulfide, bis(2,3-epithiopropylthio)methane, 1,2-bis(2,3-epithiopropylthio)ethane, 1,2-bis(2,3-epithiopropylthio)propane, 1,3-bis(2,3-epithiopropylthio)propane, 1,3-bis(2,3-epithiopropylthio)-2-methylpropane, 1,4-bis(2,3-epithiopropylthio)butane, 1,4-bis(2,3-epithiopropylthio)-2-methylbutane, 1,3-bis(2,3-epithiopropylthio)butane, 1,5-bis(2,3-epithiopropylthio)pentane, 1,5-bis(2,3-epithiopropylthio)-2-methylpentane, 1,5-bis(2,3-epithiopropylthio)-3-thiapentane, 1,6-bis(2,3-epithiopropylthio)hexane, 1,6-bis(2,3-epithiopropylthio)-2-methylhexane, 3,8-bis(2,3-epithiopropylthio)-3,6-dithiaoctane, 1,2,3-tris(2,3-epithiopropylthio)propane, 2,2-bis(2,3-epithiopropylthio)-1,3-bis(2,3-epithiopropylthiome thyl)propane, 2,2-bis(2,3-epithiopropylthiomethyl)-1-(2,3-epithiopropylthio) butane, 1,5-bis(2,3-epithiopropylthio)-2-(2,3-epithiopropylthiomethyl) -3-thiapentane, 1,5-bis(2,3-epithiopropylthio)-2,4-bis(2,3-epithiopropylthiome thyl)-3-thiapentane, 1-(2,3-epithiopropylthio)-2,2-bis(2,3-epithiopropylthiomethyl) -4-thiahexane, 1,5,6-tris(2,3-epithiopropylthio)-4-(2,3-epithiopropylthiometh yl)-3-thiahexane, 1,8-bis(2,3-epithiopropylthio)-4-(2,3-epithiopropylthiomethyl) -3,6-dithiaoctane, 1,8-bis(2,3-epithiopropylthio)-4,5-bis(2,3-epithiopropylthiome thyl)-3,6-dithiaoctane, 1,8-bis(2,3-epithiopropylthio)-4,4-bis(2,3-epithiopropylthiome thyl)-3,6-dithiaoctane, 1,8-bis(2,3-epithiopropylthio)-2,5-bis(2,3-epithiopropylthiome thyl)-3,6-dithiaoctane, 1,8-bis(2,3-epithiopropylthio)-2,4,5-tris(2,3-epithiopropylthi omethyl)-3,6-dithiaoctane, 1,1,1-tris[(2-(2,3-epithiopropylthio)ethyl]thiomethyl]-2-(2,3-epithiopropylthio)ethane, 1,1,2,2-tetrakis[[2-(2,3-epithiopropylthio)ethyl]thiomethyl]et hane, 1,11-bis(2,3-epithiopropylthio)-4,8-bis(2,3-epithiopropylthiom ethyl)-3,6,9-trithiaundecane, 1,11-bis(2,3-epithiopropylthio)-4,7-bis(2,3-epithiopropylthiom ethyl)-3,6,9-trithiaundecane, 1,11-bis(2,3-epithiopropylthio)-5,7-bis(2,3-epithiopropylthiom ethyl)-3,6,9-trithiaundecane and the like;
cyclic aliphatic 2,3-epithiopropylthio compounds such as 1,3-bis(2,3-epithiopropylthio)cyclohexane, 1,4-bis(2,3-epithiopropylthio)cyclohexane, 1,3-bis(2,3-epithiopropylthiomethyl)cyclohexane, 1,4-bis(2,3-epithiopropylthiomethyl)cyclohexane, 2,5-bis(2,3-epithiopropylthiomethyl)-1,4-dithiane, 2,5-bis[[2-(2,3-epithiopropylthio)ethyl]thiomethyl]-1,4-dithia ne, 2,5-bis(2,3-epithiopropylthiomethyl)-2,5-dimethyl-1,4-dithiane and the like;
aromatic 2,3-epithiopropylthio compounds such as 1,2-bis(2,3-epithiopropylthio)benzene, 1,3-bis(2,3-epithiopropylthio)benzene, 1,4-bis(2,3-epithiopropylthio)benzene, 1,2-bis(2,3-epithiopropylthiomethyl)benzene, 1,3-bis(2,3-epithiopropylthiomethyl)benzene, 1,4-bis(2,3-epithiopropylthiomethyl)benzene, bis[4-(2,3-epithiopropylthio)phenyl]methane, 2,2-bis[4-(2,3-epithiopropylthio)phenyl]propane, bis[4-(2,3-epithiopropylthio)phenyl]sulfide, bis[4-(2,3-epithiopropylthio)phenyl]sulfone, 4,4'-bis(2,3-epithiopropylthio)biphenyl and the like;
monofunctional episulfide compounds (compounds each having one episulfide group) such as ethylene sulfide, propylene sulfide, mercaptopropylene sulfide, mercaptobutene sulfide, epithiochlorohydrin and the like;
chained aliphatic 2,3-epithiopropyloxy compounds such as bis(2,3-epithiopropyl)ether, bis(2,3-epithiopropyloxy)methane, 1,2-bis(2,3-epithiopropyloxy)ethane, 1,2-bis(2,3-epithiopropyloxy)propane, 1,3-bis(2,3-epithiopropyloxy)propane, 1,3-bis(2,3-epithiopropyloxy)-2-methylpropane, 1,4-bis(2,3-epithiopropyloxy)butane, 1,4-bis(2,3-epithiopropyloxy)-2-methylbutane, 1,3-bis(2,3-epithiopropyloxy)butane, 1,5-bis(2,3-epithiopropyloxy)pentane, 1,5-bis(2,3-epithiopropyloxy)-2-methylpentane, 1,5-bis(2,3-epithiopropyloxy)-3-thiapentane, 1,6-bis(2,3-epithiopropyloxy)hexane, 1,6-bis(2,3-epithiopropyloxy)-2-methylhexane, 3,8-bis(2,3-epithiopropyloxy)-3,6-dithiaoctane, 1,2,3-tris(2,3-epithiopropyloxy)propane, 2,2-bis(2,3-epithiopropyloxy)-1,3-bis(2,3-epithiopropyloxymeth yl)propane, 2,2-bis(2,3-epithiopropyloxymethyl)-1-(2,3-epithiopropyloxy)bu tane, 1,5-bis(2,3-epithiopropyloxy)-2-(2,3-epithiopropyloxymethyl)-3 -thiapentane, 1,5-bis(2,3-epithiopropyloxy)-2,4-bis(2,3-epithiopropyloxymeth yl)-3-thiapentane, 1-(2,3-epithiopropyloxy)-2,2-bis(2,3-epithiopropyloxymethyl)-4 -thiahexane, 1,5,6-tris(2,3-epithiopropyloxy)-4-(2,3-epithiopropyloxymethyl )-3-thiahexane, 1,8-bis(2,3-epithiopropyloxy)-4-(2,3-epithiopropyloxymethyl)-3 ,6-dithiaoctane, 1,8-bis(2,3-epithiopropyloxy)-4,5-bis(2,3-epithiopropyloxymeth yl)-3,6-dithiaoctane, 1,8-bis(2,3-epithiopropyloxy)-4,4-bis(2,3-epithiopropyloxymeth yl)-3,6-dithiaoctane, 1,8-bis(2,3-epithiopropyloxy)-2,5-bis(2,3-epithiopropyloxymeth yl)-3,6-dithiaoctane, 1,8-bis(2,3-epithiopropyloxy)-2,4,5-tris(2,3-epithiopropyloxym ethyl)-3,6-dithiaoctane, 1,1,1-tris[[2-(2,3-epithiopropyloxy)ethyl]thiomethyl]-2-(2,3-e pithiopropyloxy)ethane, 1,1,2,2-tetrakis[[2-(2,3-epithiopropyloxy)ethyl]thiomethyl]eth ane, 1,11-bis(2,3-epithiopropyloxy)-4,8-bis(2,3-epithiopropyloxymet hyl)-3,6,9-trithiaundecane, 1,11-bis(2,3-epithiopropyloxy)-4,7-bis(2,3-epithiopropyloxymet hyl)-3,6,9-trithiaundecane, 1,11-bis(2,3-epithiopropyloxy)-5,7-bis(2,3-epithiopropyloxymet hyl)-3,6,9-trithiaundecane and the like;
cyclic aliphatic 2,3-epithiopropyloxy compounds such as 1,3-bis(2,3-epithiopropyloxy)cyclohexane, 1,4-bis(2,3-epithiopropyloxy)cyclohexane, 1,3-bis(2,3-epithiopropyloxymethyl)cyclohexane, 1,4-bis(2,3-epithiopropyloxymethyl)cyclohexane, 2,5-bis(2,3-epithiopropyloxymethyl)-1,4-dithiane, 2,5-bis[[2-(2,3-epithiopropyloxy)ethyl]thiomethyl]-1,4-dithian e, 2,5-bis(2,3-epithiopropyloxymethyl)-2,5-dimethyl-1,4-dithiane and the like; and
aromatic 2,3-epithiopropyloxy compounds such as 1,2-bis(2,3-epithiopropyloxy)benzene, 1,3-bis(2,3-epithiopropyloxy)benzene, 1,4-bis(2,3-epithiopropyloxy)benzene, 1,2-bis(2,3-epithiopropyloxymethyl)benzene, 1,3-bis(2,3-epithiopropyloxymethyl)benzene, 1,4-bis(2,3-epithiopropyloxymethyl)benzene, bis[4-(2,3-epithiopropyloxy)phenyl]methane, 2,2-bis[4-(2,3-epithiopropyloxy)phenyl]propane, bis[4-(2,3-epithiopropyloxy)phenyl]sulfide, bis[4-(2,3-epithiopropyloxy)phenyl]sulfone, 4,4'-bis(2,3-epithiopropyloxy)biphenyl and the like, but are not restricted to these exemplified compounds alone.

Of these exemplified compounds, preferable examples of the compound include bis(1,2-epithioethyl)sulfide, bis(1,2-epithioethyl)disulfide, bis(2,3-epithiopropyl)sulfide, bis(2,3-epithiopropylthio)methane and bis(2,3-epithiopropyl)disulfide. More preferable examples thereof include bis(1,2-epithioethyl)sulfide, bis(1,2-epithioethyl)disulfide, bis(2,3-epithiopropyl)sulfide and bis(2,3-epithiopropyl)disulfide. Furthermore, further more preferable examples thereof include bis(2,3-epithiopropyl)sulfide and bis(2,3-epithiopropyl)disulfide.

The amount of the epoxy compound and/or the episulfide compound used is different depending on the structure or the amount of a compound in use. However, considering the refractive index of the obtained resin, it is preferably not more than 25 weight % based on the total weight of the polymerizable composition of the present invention. It is more preferably not more than 23 weight %, and further preferably no more than 20 weight %. Considering the color tone and mechanical strength of the obtained resin, it is preferably not less than 2.5 weight %. Furthermore, in the polymerizable composition, as the content of the thiol compound, the epoxy compound and the episulfide compound, it is preferable that the content of epoxide is small, and the content of the thiol compound and the episulfide compound is high based on the compound represented by the above general formula (1) from the viewpoint of the refractive index. Furthermore, from the viewpoint of the resin color tone, it is preferable that the content of the thiol compound is high.

Furthermore, in the polymerizable composition, the total amount of the thiol compound, the epoxy compound and the episulfide compound is, for example, from 1 to 50 weight parts based on the total 100 weight parts of the compound represented by the above general formula (1), the thiol compound, the epoxy compound and the episulfide compound.

Any one of the epoxy compound and/or the episulfide compound can be used or both compounds can be used in combination. The amount ratio is not particularly limited. Furthermore, a plurality of epoxy compounds or different epoxy compounds, or a plurality of episulfide compounds or different episulfide compounds can also be used together. However, in order to obtain a resin having a high refractive index, it is preferable to use episulfide compounds.

Furthermore, when a thiol compound and an epoxy compound and/or episulfide compound are used together, as the use amount ratio of the thiol compound and the epoxy compound and/or the episulfide compound, the functional group ratio of the thiol group in the thiol compound, and the epoxy group and/or episulfide group in the epoxy compound and/or episulfide compound (SH group/(epoxy group + episulfide group)) is preferably not less than 0.7, further preferably from 0.9 to 5 and more preferably from 0.9 to 3 from the viewpoint of the resin color tone. When the functional group ratio is extremely small, mechanical strength of the obtained resin is lowered in some cases; therefore, it is not preferable. When it is extremely high, heat resistance of the obtained resin is lowered in some cases; therefore, it is not preferable.

When the polymerizable composition further contains an epoxy compound and/or an episulfide compound, the content of the compound represented by the above general formula (1) occupied in the total weight of the polymerizable compound contained in the polymerizable composition of the present invention is not particularly limited, and it is usually not less than 10 weight %.

From the fact that a material with a high refractive index tends to be obtained as the content of the compound represented by the above general formula (1) is increased, the content is preferably not less than 30 weight %, more preferably not less than 50 weight % and further preferably not less than 70 weight %.

However, when the content of the compound represented by the above general formula (1) is excessively high, since the content of the thiol compound and the epoxy compound and/or episulfide compound is relatively lowered. From the viewpoint of improving the color tone of the resin and suppressing the decrease in the mechanical strength, the content of the compound represented by the above general formula (1) in the polymerizable composition is preferably not more than 95 weight %.

Meanwhile, when the thiol compound and the epoxy compound and/or the episulfide compound are used together, the content of the thiol compound is different depending on the structure of the compound in use and the structure or the use amount of the epoxy compound and/or the episulfide compound. However, since the compound represented by the above general formula (1) provides a resin having a high refractive index, addition of the thiol compound generally means the decrease in the refractive index of the obtained resin. Accordingly, in consideration of the refractive index of the obtained resin, the content is preferably not more than 35 weight %, more preferably not more than 30 weight % and further preferably not more than 25 weight %, based on the total amount of the polymerizable composition of the present invention. In view of the color tone, mechanical strength of the obtained resin, it is preferably not less than 2.5 weight %.

Further, the polymerizable composition of the present invention contains the compound represented by the above general formula (1) and a bluing agent as the essential components, and may further contain elemental sulfur. To add elemental sulfur further to the polymerizable composition of the present invention is one of preferred embodiments because further high refractive index can be achieved. At this time, as necessary, a polymerization catalyst may be further contained. Also, at this time, in the compound represented by the above general formula (1), m may be 0, and X₁ may be a sulfur atom.

Elemental sulfur used for the polymerizable composition in the present invention is inorganic sulfur, and as elemental sulfur used for the resin composition or a transparent resin using the composition in the present invention, its purity is preferably not less than 98%, more preferably not less than 99% and further preferably not less than 99.5%. In order to enhance the purity, it is preferable to remove the volatile component in some cases.

Furthermore, elemental sulfur may be good if it of a shape capable of being dissolved in the compound represented by the above general formula (1), but it is preferably in the form of a powder-like shape and further preferably in the form of a fine powder-like shape.

In the present invention, when a resin having a higher refractive index is obtained, for example, elemental sulfur may be added to the polymerizable composition containing a compound represented by the above general formula (1) and a bluing agent.

As the amount of sulfur added in the polymerizable composition, from the viewpoint of high refractive index, when the amount of elemental sulfur added is excessively small based on the total amount of the polymerizable composition of the present invention, the effect on improvement in a refractive index is small; therefore, it is not preferable in some cases. On the other hand, when the amount of elemental sulfur added is excessively large, it is not preferable in view of clouding in some cases. Accordingly, the amount of elemental sulfur added is preferably from 5 to 50 weight % based on the total amount of the polymerizable composition of the present invention. It is more preferably from 5 to 25 weight %.

As a method of mixing elemental sulfur in the polymerizable composition of the present invention, for example, preferably used is a method involving adding elemental sulfur to the polymerizable composition containing a compound represented by the above general formula (1) and a bluing agent, and then stirring the mixture for dissolving, but at this time, if necessary, raising the temperature. Further, elemental sulfur may be added to and dissolved in another polymerizable compound, a polymerizable catalyst or the like to be described below, may be all mixed under stirring in the same vessel at the same time, may be added and mixed step by step, or a plurality of components may be respectively mixed and then mixed again in the same vessel.

The polymerizable composition of the present invention may contain another polymerizable compound in addition to the compound represented by the above general formula (1) in the ranges in which the desired effect of the present invention is not impaired.

As such a polymerizable compound, various known polymerizable monomers or polymerizable oligomers can be cited. Examples thereof include (meth)acrylate ester compounds, vinyl compounds, oxetane compounds, thietane compounds and the like.

The content of other polymerizable compounds occupied in the total weight of the polymerizable compound contained in the polymerizable composition of the present invention is not particularly restricted, but it is usually not more than 90 weight %, preferably not more than 70 weight %, more preferably not more than 50 weight %, and the most preferably not more than 30 weight % from the viewpoint of obtaining high refractive index materials because the refractive index of the obtained resin usually tends to be lowered as the content of other polymerizable compounds is increased. Incidentally, when other polymerizable compounds are contained in the polymerizable composition of the present invention, the lower limit of the content of other polymerizable compounds is not particularly restricted.

In the present invention, since there is a compound for proceeding the polymerization reaction autocatalytically without requiring particularly a polymerization catalyst among the compounds represented by the above general formula (1), a polymerization catalyst is used if necessary.

In the present invention, a polymerization catalyst used as necessary can be usually cured by using a method employed when a known compound containing a thietane group is polymerized. In order to obtain a curable resin, the kind and amount of the polymerization catalyst or the like, and the kind and ratio of the monomer are different depending on the structure of the compound constituting the polymerizable composition, and cannot be indiscriminately limited. As the kind of the polymerization catalyst, there are usually used amines, phosphines, organic acids and its salts, ester, anhydrides, inorganic acids, quaternary ammonium salts, quaternary phosphonium salts, tertiary sulfonium salts, secondary iodonium salts, titanium based alkoxide, Lewis acids, radical polymerization catalysts, cationic polymerization catalysts and the like.

Concrete examples of the polymerization catalyst include aliphatic and aromatic tertiary amines such as triethylamine, tri-n-butylamine, tri-n-hexylamine, N,N-diisopropylethylamine, triethylenediamine, triphenylamine, N,N-dimethylethanolamine, N,N-diethylethanolamine, N,N-dibutylethanolamine, triethanolamine, N-ethyldiethanolamine, N,N-dimethylbenzylamine, N,N-diethylbenzylamine, tribenzylamine, N-methyldibenzylamine, N,N-dimethylcyclohexylamine, N,N-diethylcyclohexylamine, N,N-dimethylbutylamine, N-methyldicyclohexylamine, N,N-dicyclohexylmethylamine, N-methylmorpholine, N-isopropylmorpholine, pyridine, quinoline, N,N-dimethylaniline, N,N-diethylaniline, α-, β-, or γ-picoline, 2,2'-bipyridyl, 1,4-dimethylpiperazine, dicyandiamide, tetramethylethylene diamine, hexamethylenetetramine, 1,8-diazabicyclo(5,4,0)-7-undecene, 2,4,6-tris(N,N-dimethylaminomethyl)phenol and the like; phosphines such as trimethylphosphine, triethylphosphine, tri-n-propylphosphine, triisopropylphosphine, tri-n-butylphosphine, triphenylphosphine, tribenzylphosphine, 1,2-bis(diphenylphosphino)ethane, 1,2-bis(dimethylphosphino)ethane and the like; trihalogenoacetic acids and esters, anhydrides and salts thereof, such as trifluoroacetic acid, trichloroacetic acid, trifluoroacetic anhydride, ethyl trifluoroacetate, sodium trifluoroacetate and the like; p-toluenesulfonic acid; methanesulfonic acid; trihalogenomethanesulfonic acids and esters, anhydrides and salts thereof, such as trifluoromethanesulfonic acid, trifluoromethanesulfonic anhydride, ethyl trifluoromethanesulfonate, sodium trifluoromethanesulfonate and the like; inorganic acids such as hydrochloric acid, sulfuric acid, nitric acid, and the like; quaternary ammonium salts such as tetramethylammonium chloride, tetrabutylammonium chloride, tetrabutylammonium bromide and the like; quaternary phosphonium salts such as tetramethylphosphonium chloride, tetrabutylphosphonium chloride, tetrabutylphosphonium bromide and the like; tertiary sulfonium salts, such as trimethylsulfonium bromide, tributylsulfonium bromide, and the like; secondary iodonium salts such as diphenyliodonium bromide and the like; Lewis acids such as dimethyltin dichloride, dibutyltin dichloride, dibutyltin dilaurate, dibutyltin diacetate, tetrachlorotin, dibutyltin oxide, diacetoxytetrabutyldistannoxane, zinc chloride, acetylacetone zinc, aluminum chloride, aluminum fluoride, triphenyl aluminum, acetylacetone aluminum, isopropoxide aluminum, tetrachlorotitanium and complexes thereof, tetraiodotitanium, titanium based alkoxides such as dichlorotitanium diisopropoxide, titanium isopropoxide and the like, calcium acetate, boron trihalide compounds and complexes thereof, such as boron trifluoride complexes thereof such as boron trifluoride diethyl ether complex, boron trifluoride piperidine complex, boron trifluoride ethylamine complex, boron trifluoride acetic acid complex, boron trifluoride phosphoric acid complex, boron trifluoride t-butyl methyl ether complex, boron trifluoride dibutyl ether complex, boron trifluoride THF (tetrahydrofuran) complex, boron trifluoride methyl sulfide complex, boron trifluoride phenol complex and the like, boron trichloride and complexes thereof, and the like; radical polymerization catalysts such as 2,2'-azobis(2-cyclopropylpropionitrile), 2,2'-azobis(4-methoxy-2,4-dimethylvaleronitrile), 2,2'-azobis(2,4-dimethylvaleronitrile), t-butylperoxy-2-ethylhexanoate, n-butyl-4,4'-bis(t-butylperoxy)valerate, t-butylperoxybenzoate and the like; and cationic polymerization catalysts such as diphenyliodonium hexafluorophosphate, diphenyliodonium hexafluoroarsenate, diphenyliodonium hexafluoroantimony, triphenylsulfonium tetrafluoroborate, triphenylsulfonium hexafluorophosphate, triphenylsulfonium hexafluoroarsenate and the like, but are not restricted to these exemplified compounds alone.

The above-described polymerization catalysts may be used singly or used in combination of two or more kinds thereof. When two or more kinds of polymerization catalysts having different reactivities are used together in these polymerization catalysts, the monomer handling property, and the optical physical properties, color tone, transparency, and optical strain (stria) of the resultant resin are improved in some cases; therefore, it is preferable.

Of the above exemplified compounds as the polymerization catalyst, preferable examples include organotin compounds such as dimethyltin dichloride, dibutyltin dichloride, dibutyltin dilaurate, dibutyltin diacetate, tetrachlorotin, dibutyltin oxide, diacetoxytetrabutyldistannoxane and the like; trihalogenoacetic acids and esters, anhydrides and salts thereof, such as trifluoroacetic acid, trichloroacetic acid, trifluoroacetic anhydride, ethyl trifluoroacetate, sodium trifluoroacetate and the like; p-toluenesulfonic acid; methanesulfonic acid; trihalogenomethanesulfonic acids and esters, anhydrides and salts thereof, such as trifluoromethanesulfonic acid, trifluoromethanesulfonic anhydride, ethyl trifluoromethanesulfonate, sodium trifluoromethanesulfonate and the like; Lewis acids such as boron trihalide compounds and complexes thereof, such as boron trifluoride; boron trifluoride complexes such as boron trifluoride diethyl ether complex, boron trifluoride piperidine complex, boron trifluoride ethylamine complex, boron trifluoride acetic acid complex, boron trifluoride phosphoric acid complex, boron trifluoride t-butyl methyl ether complex, boron trifluoride dibutyl ether complex, boron trifluoride THF complex, boron trifluoride methyl sulfide complex, boron trifluoride phenol complex, and the like, boron trichloride and complexes thereof, and the like; and radical polymerization catalysts such as 2,2'-azobis(2-cyclopropylpropionitrile), 2,2'-azobis(4-methoxy-2,4-dimethylvaleronitrile), 2,2'-azobis(2,4-dimethylvaleronitrile), t-butylperoxy-2-ethylhexanoate, n-butyl-4,4'-bis(t-butylperoxy)valerate, t-butylperoxybenzoate and the like. More preferable examples include dimethyltin dichloride, trifluoromethanesulfonic acid and anhydrides thereof, esters, salts and boron trifluoride complexes; and radical polymerization catalysts such as 2,2'-azobis(2-cyclopropylpropionitrile), 2,2'-azobis(4-methoxy-2,4-dimethylvaleronitrile), 2,2'-azobis(2,4-dimethylvaleronitrile), t-butylperoxy-2-ethylhexanoate, n-butyl-4,4'-bis(t-butylperoxy)valerate, t-butylperoxybenzoate and the like.

The amount of the polymerization catalyst of the polymerizable composition in the present invention is in the range of 0.0001 to 10 weight %, preferably in the range of 0.001 to 10 weight %, more preferably in the range of 0.01 to 5 weight %, and the most preferably in the range of 0.01 to 1 weight %, based on the total weight of the polymerizable composition.

With the amount of polymerization catalyst added in the above range, a sufficiently cured resin can be produced, and a pot life can be surely maintained. Also, the obtained resin has good transparency and optical physical properties in some cases.

The polymerization catalyst may be added directly to the polymerizable composition or any of compounds, or may be dissolved or dispersed in another compound and then added. In some cases, the polymerization catalyst is preferably dissolved or dispersed in another compound and then added, for obtaining good results. Furthermore, the polymerization catalyst is preferably added in a nitrogen atmosphere or a dry gas atmosphere for obtaining good results in some cases. In order to improve the performance of the resultant resin, the amount of the unreactive functional groups remained in the resin is preferably not more than 0.5 weight % and more preferably not more than 0.4 weight %, based on the total weight of the resin.

The polymerizable composition according to the present invention is a polymerizable composition containing a compound represented by the above general formula (1) and a bluing agent.

For the purpose of following improvement of the resin obtained by curing the polymerizable composition or following improvement of handling ability thereof, it may be preferable to subject the polymerizable composition of the invention to means and operations that are generally used upon synthesizing organic compounds, such as purification or washing, thermal insulation, cold storage, filtration or depressurization treatment, or to add known compounds or the like as stabilizers or resin modifying agents. The improvement of the resin or the improvement of handling ability thereof includes further adjustment of the optical properties of the resin such as refractive index or Abbe number; the adjustment of various properties of the resin such as color, light resistance or weather resistance, heat resistance, impact resistance, hardness, specific gravity, linear expansion coefficient, polymerization shrinkage ratio, water absorbability, hygroscopicity, chemical resistance and viscoelasticity; the adjustment of transmittance or transparency; and the adjustment of the viscosity and handling ability of other storage or transportation method of the polymerizable composition. Examples of compounds added for improving stability such as long-term preservation stability, polymerization stability and thermal stability include a polymerization retardant, a polymerization inhibitor, a deoxidant, and an antioxidant.

Purification of the polymerizable composition is a means for improving the transparency of the resin produced by curing, improving the color tone or increasing the purity of the resin. As a method for purifying the polymerizable composition containing a compound represented by the above general formula (1) of the present invention, any known method, for example, recrystallization, column chromatography (a silica gel method, an activated carbon method, an ion-exchange resin method, or the like), extraction, or the like, may be performed with any timing as long as the transparency and color tone of the resin obtained by curing the purified composition are generally improved.

As a method for cleaning the polymerizable composition, a method for improving the transparency and color tone of the resin obtained by curing may be used with timing when or after the synthesized polymerizable composition is taken out. In this method, the composition is washed with a polar and/or nonpolar solvent to remove or reduce a resin transparency inhibitor, for example, an inorganic salt used for synthesizing the polymerizable composition or secondarily produced in synthesizing the composition, such as an ammonium salt or the like. Although the solvent used depends upon the polymerizable composition to be cleaned and the polarity of a solution containing the polymerizable composition, and cannot be indiscriminately limited, a solvent which can dissolve a component to be removed, and which is incompatible with the polymerizable composition to be cleaned and the solution containing the polymerizable composition is preferably used. The solvent may be used singly, or a mixture of at least two solvents may be used. Although the amount of a component to be removed depends upon the purpose and application, the amount is preferably as low as possible. The amount is usually not more than 5,000 ppm and more preferably not more than 1,000 ppm for obtaining good results in some cases.

As a hot insulation, cold insulation or filtration method for the polymerizable composition, a method for improving the transparency and color tone of the resin obtained by curing is generally used with timing when or after the synthesized polymerizable composition is taken out. In the hot insulation method, for example, when the polymerizable composition is crystallized to deteriorate handling property during storage, the polymerizable composition is melted by heating within a range causing no deterioration in the performance of the polymerizable composition and the resin obtained by curing the polymerizable composition. Although the heating temperature range and heat melting method depend upon the structure of the compound constituting the polymerizable composition to be handled and cannot be indiscriminately limited, the heating temperature is generally in a range of the solidification point + 50 degrees centigrade, and preferably the solidification point + 20 degrees centigrade. In this method, the composition may be melted by mechanically stirring with a stirring device or bubbling with an inert gas for moving an internal liquid. The cold insulation method is generally performed for improving the preservation stability of the polymerizable composition. However, for example, when the polymerizable composition has a high melting point, consideration may be given to the storage temperature for improving handling property after crystallization. Although the cold insulation temperature depends upon the structure and preservation stability of the compound constituting the polymerizable composition to be handled and cannot be indiscriminately limited, the polymerizable composition containing a compound represented by the above general formula (1) needs to be stored usually at not more than a temperature capable of maintaining its stability.

Meanwhile, the polymerizable composition used for optical applications is required to have extremely high transparency, and thus the polymerizable composition may be filtered with a filter having a small pore size. Although the pore size of the filter used herein is usually form 0.05 to 10 µm, the pore size is preferably from 0.05 to 5 µm and more preferably from 0.1 to 5 µm, in consideration of operationality and performance. In many cases, filtration of the polymerizable composition of the present invention produces good results without exception. Although a low filtration temperature near the solidification temperature produces more desirable results in some cases, filtration is preferably performed at a temperature causing no trouble in the filtration work when solidification proceeds during filtration.

The reduced-pressure treatment is a means for removing a solvent, dissolved gas and odor which deteriorate the performance of the resin generally produced by curing the polymerizable composition. Since a dissolved solvent generally decreases the refractive index of the resultant resin and deteriorates the heat resistance thereof, the dissolved solvent must be removed as much as possible. Although the allowable amount of the dissolved solvent depends upon the structure of the compound constituting the polymerizable composition to be handled and the structure of the dissolved solvent and cannot be indiscriminately limited, the allowable amount is usually preferably not more than 1%, and more preferably not more than 5, 000 ppm. The dissolved gas inhibits polymerization or causes the problem of mixing bubbles in the resultant resin, and is thus preferably removed. Particularly, a moisture gas such as water vapor or the like is preferably removed by bubbling with a dry gas. The amount of the dissolved gas can be set depending on the structure of the compound constituting the polymerizable composition, the physical properties, structure and kind of the dissolved gas.

As a method for producing the polymerizable composition of the present invention, typically, the compound represented by the above general formula (1), a bluing agent, and, as necessary, a thiol compound, and aforementioned various known polymerizable compounds are used together as desired, and, further as necessary, the above polymerization catalyst is added, and then mixed and dissolved.

When the composition of the present invention is formed by curing, various substances such as including a stabilizer, a resin modifier, a chain extender, a crosslinking agent and, light stabilizers including a HALS-based stabilizer, ultraviolet absorbers including a benzotriazole-based UV absorber, anti-oxidants including a hindered phenol-based anti-oxidant, anti-coloring agents, fillers, external mold release agents including a silicon-based agent, acidic phosphate esters, internal mold release agents including surfactants such as a quaternary ammonium salt, a quaternary phosphonium salt or the like, adhesion improvers and the like may be added, similarly to a known molding method depending on the purpose. Herein, the internal mold release agent also includes those exhibiting mold releasing effect among aforementioned various catalysts.

The amount of aforementioned various additives which can be added depends upon the kind, structure and effect of each additive and cannot be indiscriminately limited. However, it is usually in the range of 0.001 to 10 weight % and preferably in the range of 0.01 to 5 weight %, based on the total weight of the polymerizable composition.

Hereinafter, the resin in the present invention will be described.
The resin according to the present invention and the optical component composed of the resin are obtained by polymerization of the aforementioned polymerizable composition. Furthermore, a method for producing a resin according to the present invention involves a step of polymerizing the polymerizable compound according to the present invention. Such polymerization is suitably carried out according to various methods, known in the art, used when producing plastic lenses. However, in consideration of optical strain, preferably used is casting polymerization.

Namely, the polymerizable composition of the present invention produced by the above method is degassed under a reduced pressure or filtered off as required, and then the obtained polymerizable composition is poured into a mold, and the resultant is heated as required for carrying out polymerization. In this case, it is preferable to carry out polymerization by gradually heating from a low temperature to a high temperature.

The aforementioned mold is composed of, for example, two pieces of mirror surface-ground molds via a gasket made of polyethylene, an ethylene vinyl acetate copolymer, polyvinyl chloride and the like. Typical examples of the mold include, though not restricted to, combined molds such as glass and glass, glass and plastic plate, glass and metal plate, and the like. The mold may comprise two pieces of molds fixed by a tape such as a polyester adhesive tape or the like. In addition, a known method such as the mold release process may be performed for the mold, as needed.

When carrying out casting polymerization, the polymerization temperature is affected by the polymerization conditions such as the kind of polymerization initiator and the like, and is not limited. But, it is usually from -50 to 200 degrees centigrade, preferably from -20 to 170 degrees centigrade, and more preferably from 0 to 150 degrees centigrade.

The polymerization time is affected by the polymerization temperature, but it is usually from 0.01 to 200 hours and preferably from 0.05 to 100 hours. Polymerization can also be carried out in combination of several temperatures such as fixed temperature, temperature elevation, temperature dropping and the like as required.

Furthermore, the polymerizable composition of the present invention can also be polymerized by applying the active energy ray such as an electron beam, ultraviolet light, visible light or the like. At this time, a radical polymerization catalyst or a cationic polymerization catalyst for initiating polymerization by the active energy ray is used as required.

When the heat resistance of the resultant resin is excessively low, a problem of thermal deformation is likely to be occurred due to its daily use as eyeglass lenses in some cases. Also, conversely, when the heat resistance is excessively high, for example, tinting of the resin might be impossible in some cases. In consideration of dyeability, for the heat resistance of the resultant resin, Tg is preferably from 100 to 150 degrees centigrade.
Herein, Tg is measured by a TMA (Thermal Mechanical Analysis: thermal mechanical measurement) penetration method, is a temperature obtained from the intersection of the TMA curve, and corresponds to the thermal deformation initiation temperature.

After the thus-obtained resin and the optical lens composed of the resin are cured, they may be subjected to an annealing process as required. Furthermore, for purposes of anti-reflection, high hardness grant, wear resistance improvement, anti-fogging property grant or fashionability grant, various known physical or chemical processes such as surface polishing, antistatic process, hard coat process, non-reflective coat process, tinting process, photochromic process (for example, photochromic lens process and the like) and the like may be performed as needed.

Meanwhile, the thus-obtained resin and the optical lens composed of the resin may be used by forming a coating layer on one side or both sides if necessary. Hereinafter, the optical lens will be described with reference to examples. Examples of the coating layer include a primer layer, a hard coat layer, an anti-reflection film layer, an anti-fog coating film layer, an anti-contamination layer, a water-repellent layer and the like. These coating layers may be used singly, or a plurality of coating layers may be multi-layered and used. When the coating layers are formed on either side, the same coating layers or different coating layers may be formed on respective sides.

Known additives may be used to these coating layers together for the improvement in the performance of the lens. Concrete examples of the additive include ultraviolet absorbers for protecting lenses or eyes from ultraviolet rays; infrared ray absorbers for protecting eyes from infrared rays; light stabilizers or anti-oxidants for improving weather resistance of the lens; dyes or pigments for enhancing fashionability of the lens and the like. Further, a photochromic dye and a photochromic pigment, an anti-static agent, or various other additives may be used. Furthermore, for the layer subjected to coating, various leveling agents may be used for the purpose of improving coatability.

A primer layer is usually formed between the hard coat layer to be described below and the optical lens. The primer layer is a coating layer for the purpose of enhancing adhesion between the hard coat layer to be formed thereon and the lens, and impact resistance can also be improved depending on the situation.

As the primer layer, any materials can be used as long as its adhesion to the obtained optical lens is high, but there can be usually used a urethane based resin, an epoxy based resin, a polyester based resin, a melanin based resin, a primer composition having polyvinylacetal as a main component and the like. A proper solvent which does not affect the lens may be used for the primer composition for purpose of adjusting the viscosity of the composition. Of course, a solvent may not be used.

The primer composition can be formed by either a coating method or a dry method. When the coating method is employed, a primer layer is formed by applying the primer composition in a known coating method such as spin coating or dip coating onto the lens and then solidifying the resultant. When the dry method is employed, a primer layer is formed by a known dry method such as CVD method or vacuum.vapor deposition. In forming a primer layer, for the purpose of enhancing adhesion, the surface of the lens may be subjected to pre-treatment such as alkaline treatment, plasma treatment, ultraviolet ray treatment or the like as necessary.

A hard coat layer is a coating layer for the purpose of providing functions such as abrasion resistance, wear resistance, moisture resistance, hot water resistance, heat resistance, weather resistance or the like to the lens surface.

As for the hard coat layer, there are generally used an organosilicon compound having curability, and a hard coating composition containing oxide particles containing one element selected from the element groups of Si, Al, Sn, Sb, Ta, Ce, La, Fe, Zn, W, Zr, In and Ti, and/or particles composed of composite oxide of two or more elements selected from these element groups. Oxide particles and/or particles composed of composite oxides may be used singly, or used in combination of two or more kinds for the hard coating composition.

The hard coating composition preferably contains at least any one of amines, amino acids, metal-acetylacetonate complexes, organic acid metal salts, perchloric acids, salts of perchloric acids, acids, metal chlorides and polyfunctional epoxy compounds in addition to the above components. A proper solvent which does not affect the lens may be added to the hard coating composition. Of course, a solvent may not be used.

The hard coat layer is usually formed by applying the hard coating composition in a known coating method such as spin coating or dip coating onto the lens and then curing. As the curing method, there can be exemplified a curing method by heat curing, energy ray irradiation such as ultraviolet light, visible light or the like. In order to suppress occurrence of interference fringes, the difference between the refractive index of the hard coat layer and that of the lens is preferably in the range of ± 0.1 (plus/minus).

An anti-reflection layer is usually formed on the aforementioned hard coat layer if necessary. There are inorganic and organic anti-reflection layers. In case of the inorganic type, the layer is formed by a dry method such as vacuum vapor deposition, sputtering method, ion plating method, ion beam assisted deposition method, CVD method and the like, using inorganic oxides such as SiO₂, TiO₂ and the like. In case of the organic type, it is formed by a wet method using an organosilicon compound and a composition containing silica-based fine particles having inner cavity.

The anti-reflection layer may be mono-layered and multi-layered. When it is mono-layered, the refractive index of the anti-reflection layer is preferably at least 0.1 or more lower than that of the hard coat layer. Furthermore, for effectively exhibiting anti-reflection functions, it is preferably a multi-layer film anti-reflection film. In that case, low refractive index films and high refractive index films are alternately laminated. Also, in this case, the difference between the refractive index of the low refractive index film and that of the high refractive index film is preferably not less than 0.1. As the high refractive index film, films of ZnO, TiO₂ CeO₂, Sb₂O₅, SnO₂, ZrO₂ Ta₂O₅ and the like can be cited, while as the low refractive index film, films of SiO₂ and the like can be cited.

On the anti-reflection film layer, an anti-fog coating film layer, an anti-contamination layer or a water-repellent layer may be formed, as required. As a method to form an anti-fog coating layer, an anti-contamination layer and a water-repellent layer, its treatment method and treatment materials are not particularly limited as long as anti-reflection functions are not adversely affected, and an anti-fog coating treatment method, an anti-contamination treatment method, a water-repellent treatment method and materials, known in the art, can be used.

For example, in the anti-fog coating method and anti-contamination treatment method, there can be exemplified a method involving covering the surface with a surfactant, a method involving adding a hydrophilic film to the surface to give water absorption, a method involving covering the surface with fine recessed and projected shapes to enhance water absorption, a method involving using photocatalytic activities to give water absorption, a method involving performing a super water-repellent treatment for preventing adhesion of a water droplet, and the like.

Furthermore, as the water-repellent treatment method, there can be exemplified a method involving using a fluorine-containing silane compound or the like for forming a water-repellent treatment layer by vapor deposition or sputtering, a method involving dissolving a fluorine-containing silane compound in a solvent and then coating for forming a water-repellent treatment layer, and the like.

Furthermore, for the resin cured product and optical components obtained by polymerizing the polymerizable composition of the present invention, transparency is excellent, the yellowness index is lowered, and the refractive index (ne) is high exceeding 1.7.

As the optical component according to the present invention, there can be exemplified, for example, various plastic lenses such as a spectacle lens for vision correction, a lens for cameras, a fresnel lens for liquid crystal projectors, a lenticular lens, a contact lens and the like; sealing materials for a light emitting diode (LED); optical waveguides; optical adhesive agents used for joining of an optical lens and an optical waveguide; anti-reflection films used for optical lenses and the like; and transparent coating or transparent substrates used for liquid crystal display device members such as a substrate, a light-guiding plate, a film, a sheet and the like.

In this way, the resin obtained by polymerizing the polymerizable compound of the present invention has high transparency, excellent heat resistance and mechanical strength, and high refractive index (ne) of exceeding 1.7, and it is useful, for example, as a resin used for an optical component such as a plastic lens or the like. Furthermore, the polymerizable composition of the present invention is useful, for example, as a raw material monomer composition for a transparent resin having an extremely high refractive index.

### EXAMPLES

The present invention is now more specifically illustrated below with reference to Production Examples and Examples. However, the present invention is not limited to these Examples.
Incidentally, in the following examples, a glass transition temperature (Tg) is a temperature measured by the TMA penetration method and obtained from the intersection of the TMA curve, and corresponds to the thermal deformation initiation temperature.

### Reference Production Example 1

According to the method as described in Patent Document 3 (Japanese Patent Laid-Open No. 2003-327583), 3-thiethanol was synthesized.

The resulting 3-thiethanol was used to synthesize 3-mercaptothietane. Namely, 190 g of thiourea, 253 g of a 35% hydrochloric acid solution and 250 g of water were introduced into a reactor equipped with a stirrer and a thermometer, and stirred. 156 g of 3-thiethanol was added to the reaction solution dropwise over 1 hour. The resulting solution was stirred and reacted at 30 degrees centigrade for 24 hours, and then 177 g of 24% ammonia water was added dropwise thereto over 1 hour. The solution was further reacted at 30 degrees centigrade for 15 hours and then allowed to stand for taking out an organic layer (under layer) to obtain 134 g of a coarse composition. The resulting coarse composition was distilled under a reduced pressure to collect a fraction with a boiling point of 40 degrees centigrade/106 Pa to obtain a desired product of a colorless transparent liquid, i.e., 3-mercaptothietane.

### Reference Production Example 2

### (Production of compound represented by CMPD. (Compound) No. 1-1 in the above Table 1)

11.15 g (0.105 mole) of 3-mercaptothietane was introduced into 50 g of pure water. Subsequently, 41.2 g (0.103 mole) of a 10% NaOH aqueous solution was introduced dropwise at room temperature over 40 minutes. Then, the reaction solution was heated to 30 degrees centigrade and 65.2 g (corresponding to 0.025 mole of tin tetrachloride) of an aqueous solution of 10% tin tetrachloride was inserted dropwise at the same temperature over 4 hours. After the dropwise addition was completed, the solution was further stirred at the same temperature for 2 hours. 100 ml of chloroform was added to the reaction mixture for separating an organic layer and a water layer. The organic layer was washed with 100 ml of pure water two times and then dried over anhydrous sodium sulfate. The solvent was distilled off from the extract to obtain 13.40 g (Yield: 99%) of a compound represented by the CMPD. No. 1-1 in Table 1.

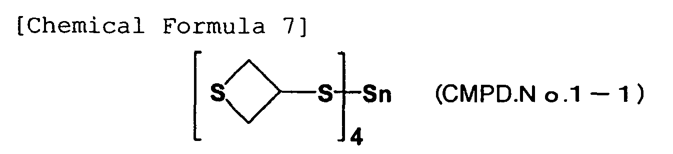

### (Production of polymerizable composition and production of resin cured product by polymerization of the composition)

The physical properties of the resins or optical components (lenses) produced in the following Examples and Comparative Examples of Examples 1 to 4 and Comparative Examples 1 to 3 were evaluated in the following manner.
Appearance: Transparency and existence of optical distortion were confirmed visually or using a microscope.
Refractive index: It was measured at 20 degrees centigrade using a Pulfrich refractometer.
Color tone: Yellowness index (YI) of a flat plate having a thickness of 2 mm was measured by using a spectrophotometer CE-7000A manufactured by GretagMacbeth in accordance with ASTM D1925.

### Example 1

5 mg of PS Violet RC (product name, DyStar Japan Ltd.) as a bluing agent was dissolved in 50 g of the compound represented by CMPD. No. 1-1 in advance to prepare a solution of the compound represented by CMPD. No. 1-1 with a bluing agent concentration of 100 ppm (regulating liquid A).

At 40 degrees centigrade, 90 weight parts of the compound represented by the CMPD. No. 1-1 in Table 1 produced in Reference Production Example 2 and 10 weight parts of the regulating liquid A were weighed in a glass beaker, and adjusted such that 10 ppm of a bluing agent was contained in the monomer. The resulting solution was filtered off using a Teflon (registered trademark) filter without adding a polymerization catalyst and then thoroughly degassed under a reduced pressure of not more than 1.3 kPa until no bubble was observed. The degassed polymerizable composition was injected into a mold composed of a glass mold and a tape. Then, the resultant was put into a heating oven to perform polymerization for 20 hours. While polymerizing, the oven was heated from 60 to 120 degrees centigrade in multiple gradations.

A molded piece of the obtained resin was excellent in transparency and its appearance was good without any distortion. With respect to the color tone, the yellowness index was 6.

### Example 2

5 mg of PS Violet RC (product name, DyStar Japan Ltd.) as a bluing agent was dissolved in 50 g of 3-mercaptothietane in advance to prepare a 3-mercaptothietane solution with a bluing agent concentration of 100 ppm (regulating liquid B).

At 40 degrees centigrade, 95 weight parts of the compound represented by the CMPD. No. 1-1 in Table 1 produced in Reference Production Example 2 and 5 weight parts of the regulating liquid B were weighed in a glass beaker, and adjusted such that 5 ppm of a bluing agent was contained in the monomer. The resulting solution was filtered off using a Teflon (registered trademark) filter without adding a polymerization catalyst and then thoroughly degassed under a reduced pressure of not more than 1.3 kPa until no bubble was observed. The degassed polymerizable composition was injected into a mold composed of a glass mold and a tape. Then, the resultant was put into a heating oven to perform polymerization for 20 hours. While polymerizing, the oven was heated from 60 to 120 degrees centigrade in multiple gradations.

A molded piece of the obtained resin was excellent in transparency and its appearance was good without any distortion. With respect to the color tone, the yellowness index was 5.

### Example 3

5 mg of PS Violet RC (product name, DyStar Japan Ltd.) as a bluing agent was dissolved in 50 g of 4-mercaptomethyl-1,8-dimercapto-3,6-dithiaoctane in advance to prepare a 4-mercaptomethyl-1,8-dimercapto-3,6-dithiaoctane solution with a bluing agent concentration of 100 ppm (regulating liquid C).

At 40 degrees centigrade, 92.5 weight parts of the compound represented by the CMPD. No. 1-1 in Table 1 produced in Reference Production Example 2, 2 weight parts of the regulating liquid C and 5.5 weight parts of 4-mercaptomethyl-1,8-dimercapto-3,6-dithiaoctane were weighed in a glass beaker, and adjusted such that 2 ppm of a bluing agent was contained in the monomer. The resulting solution was filtered off using a Teflon (registered trademark) filter without adding a polymerization catalyst and then thoroughly degassed under a reduced pressure of not more than 1.3 kPa until no bubble was observed. The degassed polymerizable composition was injected into a mold composed of a glass mold and a tape. Then, the resultant was put into a heating oven to perform polymerization for 20 hours. While polymerizing, the oven was heated from 60 to 120 degrees centigrade in multiple gradations.

A molded piece of the obtained resin was excellent in transparency and its appearance was good without any distortion. With respect to the color tone, the yellowness index was 1.

### Example 4

5 mg of PS Blue RR (product name, DyStar Japan Ltd.) as a bluing agent was dissolved in 50 g of 4-mercaptomethyl-1,8-dimercapto-3,6-dithiaoctane in advance to prepare a 4-mercaptomethyl-1,8-dimercapto-3,6-dithiaoctane solution with a bluing agent concentration of 100 ppm (regulating liquid D).

At 40 degrees centigrade, 92.5 weight parts of the compound represented by the CMPD. No. 1-1 in Table 1 produced in Reference Production Example 2, 2 weight parts of the regulating liquid D and 5.5 weight parts of 4-mercaptomethyl-1,8-dimercapto-3,6-dithiaoctane were weighed in a glass beaker, and adjusted such that 2 ppm of a bluing agent was contained in the monomer. The resulting solution was filtered off using a Teflon (registered trademark) filter without adding a polymerization catalyst and then thoroughly degassed under a reduced pressure of not more than 1.3 kPa until no bubble was observed. The degassed polymerizable composition was injected into a mold composed of a glass mold and a tape. Then, the resultant was put into a heating oven to perform polymerization for 20 hours. While polymerizing, the oven was heated from 60 to 120 degrees centigrade in multiple gradations.

A molded piece of the obtained resin was excellent in transparency and its appearance was good without any distortion. With respect to the color tone, the yellowness index was 4.

### Comparative Example 1

At 40 degrees centigrade, 100 weight parts of the compound represented by the CMPD. No. 1-1 in Table 1 produced in Reference Production Example 2 was weighed in a glass beaker. The solution was filtered off using a Teflon (registered trademark) filter without adding a polymerization catalyst and then thoroughly degassed under a reduced pressure of not more than 1.3 kPa until no bubble was observed. The degassed polymerizable composition was injected into a mold composed of a glass mold and a tape. Then, the resultant was put into a heating oven to perform polymerization for 20 hours. While polymerizing, the oven was heated from 60 to 120 degrees centigrade in multiple gradations.

A molded piece of the obtained resin was excellent in transparency and its appearance was good without any distortion. With respect to the color tone, the yellowness index was 38. It was yellow colored as compared to the molded piece with a bluing agent put thereinto.

### Comparative Example 2

At 40 degrees centigrade, 95 weight parts of the compound represented by the CMPD. No. 1-1 in Table 1 produced in Reference Production Example 2 and 5 weight parts of 3-mercaptothietane as a thiol compound were weighed in a glass beaker. The solution was filtered off using a Teflon (registered trademark) filter without adding a polymerization catalyst and then thoroughly degassed under a reduced pressure of not more than 1.3 kPa until no bubble was observed. The degassed polymerizable composition was injected into a mold composed of a glass mold and a tape. Then, the resultant was put into a heating oven to perform polymerization for 20 hours. While polymerizing, the oven was heated from 60 to 120 degrees centigrade in multiple gradations.

A molded piece of the obtained resin was excellent in transparency and its appearance was good without any distortion. However, with respect to the color tone, the yellowness index was 12. It was yellow colored as compared to the molded piece with a bluing agent put thereinto.

### Comparative Example 3

At 40 degrees centigrade, 92.5 weight parts of the compound represented by the CMPD. No. 1-1 in Table 1 produced in Reference Production Example 2 and 7.5 weight parts of 4-mercaptomethyl-1,8-dimercapto-3,6-dithiaoctane as a thiol compound were weighed in a glass beaker. The solution was filtered off using a Teflon (registered trademark) filter without adding a polymerization catalyst and then thoroughly degassed under a reduced pressure of not more than 1.3 kPa until no bubble was observed. The degassed polymerizable composition was injected into a mold composed of a glass mold and a tape. Then, the resultant was put into a heating oven to perform polymerization for 20 hours. While polymerizing, the oven was heated from 60 to 120 degrees centigrade in multiple gradations.

A molded piece of the obtained resin was excellent in transparency and its appearance was good without any distortion. However, with respect to the color tone, the yellowness index was 6. It was yellow colored as compared to the molded piece with a bluing agent put thereinto (Example 4).

Optical physical properties (refractive index, Abbe's number), heat resistance and color tone of the resins produced in Examples 5 to 9 and Comparative Examples 4 and 5 were evaluated in the following test method.
Refractive index (ne) and Abbe's number (νe) : They were measured at 20 degrees centigrade using a Pulfrich refractometer.
Heat resistance: The heat resistance Tg (°C) was measured by the TMA penetration method (a load of 50 g, a pinpoint of 0.5 mmΦ, a heating rate of 10 degree centigrade/min).
Color tone: Using a colorimeter (CR-200) manufactured by Minolta, a resin color tone (YI) value was measured. The resin color tone (YI) value was measured by preparing a flat plate having a thickness of 3 mm.

### Example 5

40 mg of PS Violet RC (product name, DyStar Japan Ltd.) that was a violet based dye as a bluing agent was dissolved in 50 g of 4-mercaptomethyl-1,8-dimercapto-3,6-dithiaoctane in advance to prepare a 4-mercaptomethyl-1,8-dimercapto-3,6-dithiaoctane solution with a bluing agent concentration of 800 ppm (regulating liquid E).

85 weight parts of the compound represented by the CMPD. No. 1-1, 0.13 weight parts of the regulating liquid E, 4.87 weight parts of 4-mercaptomethyl-1,8-dimercapto-3,6-dithiaoctane and 10 weight parts of 3-mercaptothietane were weighed, and adjusted such that 1 ppm of a bluing agent was contained in the monomer. To the resulting solution was added N-methyldicyclohexylamine such that the total concentration became 380 ppm, and the reaction solution was stirred under heating to give a uniform solution. Then, the solution was filtered off using a PTFA filter and then thoroughly degassed under a reduced pressure of not more than 3.9 kPa until no bubble was observed. The degassed polymerizable composition was injected into a mold composed of a glass mold and a tape. Then, the resultant was put into a heating oven to perform polymerization for 46 hours. While polymerizing, the oven was heated from 70 to 130 degrees centigrade in multiple gradations.

A molded piece of the obtained resin was excellent in transparency and its appearance was good without any distortion. The refractive index (ne) was 1.779, while Abbe's number (νe) was 26.4. Tg was 105 degrees centigrade. With respect to the color tone, YI was good, i.e., 5.2.

### Example 6

20 mg of PS Violet RC that was a violet based dye and 20 mg of MLP Red V-1 (product names, DyStar Japan Ltd.) that was a red based dye as bluing agents were dissolved in 50 g of 4-mercaptomethyl-1,8-dimercapto-3,6-dithiaoctane in advance to prepare a 4-mercaptomethyl-1,8-dimercapto-3,6-dithiaoctane solution with a bluing agent concentration of 800 ppm (regulating liquid F).

85 weight parts of the compound represented by the CMPD. No. 1-1, 0.25 weight parts of the regulating liquid F, 4.75 weight parts of 4-mercaptomethyl-1,8-dimercapto-3,6-dithiaoctane and 10 weight parts of 3-mercaptothietane were weighed, and adjusted such that 2 ppm of a bluing agent was contained in the monomer. To the resulting solution was added N-methyldicyclohexylamine such that the total concentration became 380 ppm, and the reaction solution was stirred under heating to give a uniform solution. Then, the solution was filtered off using a PTFA filter and then thoroughly degassed under a reduced pressure of not more than 3.9 kPa until no bubble was observed. The degassed polymerizable composition was injected into a mold composed of a glass mold and a tape. Then, the resultant was put into a heating oven to perform polymerization for 46 hours. While polymerizing, the oven was heated from 70 to 130 degrees centigrade in multiple gradations.

A molded piece of the obtained resin was excellent in transparency and its appearance was good without any distortion. The refractive index (ne) was 1.777, while Abbe's number (νe) was 26.6. Tg was 107 degrees centigrade. With respect to the color tone, YI was good, i.e., 5.1.

### Example 7

85 weight parts of the compound represented by the CMPD. No. 1-1, 0.19 weight parts of the regulating liquid F prepared in Example 6, 4.81 weight parts of 4-mercaptomethyl-1,8-dimercapto-3,6-dithiaoctane and 10 weight parts of 3-mercaptothietane were weighed, and adjusted such that 1.5 ppm of a bluing agent was contained in the monomer. To the resulting solution was added N-methyldicyclohexylamine such that the total concentration became 380 ppm, and the reaction solution was stirred under heating to give a uniform solution. Then, the solution was filtered off using a PTFA filter and then thoroughly degassed under a reduced pressure of not more than 3.9 kPa until no bubble was observed. The degassed polymerizable composition was injected into a mold composed of a glass mold and a tape. Then, the resultant was put into a heating oven to perform polymerization for 46 hours. While polymerizing, the oven was heated from 70 to 130 degrees centigrade in multiple gradations.

A molded piece of the obtained resin was excellent in transparency and its appearance was good without any distortion. The refractive index (ne) was 1.777, while Abbe's number (νe) was 26.5. Tg was 104 degrees centigrade. With respect to the color tone, YI was good, i.e., 7.4.

### Example 8

85 weight parts of the compound represented by the CMPD. No. 1-1, 0.31 weight parts of the regulating liquid F prepared in Example 6, 4.69 weight parts of 4-mercaptomethyl-1,8-dimercapto-3,6-dithiaoctane and 10 weight parts of 3-mercaptothietane were weighed, and adjusted such that 2.5 ppm of a bluing agent was contained in the monomer. To the resulting solution was added N-methyldicyclohexylamine such that the total concentration became 380 ppm, and the reaction solution was stirred under heating to give a uniform solution. Then, the solution was filtered off using a PTFA filter and then thoroughly degassed under a reduced pressure of not more than 3.9 kPa until no bubble was observed. The degassed polymerizable composition was injected into a mold composed of a glass mold and a tape. Then, the resultant was put into a heating oven to perform polymerization for 46 hours. While polymerizing, the oven was heated from 70 to 130 degrees centigrade in multiple gradations.

A molded piece of the obtained resin was excellent in transparency and its appearance was good without any distortion. The refractive index (ne) was 1.779, while Abbe's number (νe) was 26.4. Tg was 106 degrees centigrade. With respect to the color tone, YI was good, i.e., 5.2.

### Example 9

5 mg of PS Violet RC that was a violet based dye and 5 mg of MLP Red V-1 (product names, DyStar Japan Ltd.) that was a red based dye as bluing agents were dissolved in 100 g of bis(2,3-epithiopropyl) disulfide in advance to prepare a bis(2,3-epithiopropyl) disulfide solution with a bluing agent concentration of 100 ppm (regulating liquid G).

86 weight parts of the compound represented by the CMPD. No. 1-1, 3 weight parts of the regulating liquid G, 4 weight parts of bis(2,3-epithiopropyl) disulfide and 7 weight parts of 3-mercaptothietane were heated, mixed and dissolved at 75 degrees centigrade, was filtered off using a PTFA filter and then thoroughly degassed under a reduced pressure of not more than 3.9 kPa until no bubble was observed. Subsequently, the degassed polymerizable composition was injected into a mold composed of a glass mold and a tape, and then the resultant was put into a heating oven to perform polymerization for 46 hours. While polymerizing, the oven was heated from 70 to 130 degrees centigrade in multiple gradations.

A molded piece of the obtained resin was excellent in transparency and its appearance was good without any distortion. The refractive index (ne) was 1.786, while Abbe's number (νe) was 25.5. Tg was 140 degrees centigrade. With respect to the color tone, YI was good, i.e., 7.0.

### Comparative Example 4

85 weight parts of the compound represented by the CMPD. No. 1-1, 10 weight parts of 3-mercaptothietane and 5 weight parts of 4-mercaptomethyl-1,8-dimercapto-3,6-dithiaoctane were weighed. To the resulting solution was added N-methyldicyclohexylamine such that the total concentration became 380 ppm, and the reaction solution was stirred under heating to give a uniform solution. Then, the solution was filtered off using a PTFA filter and then thoroughly degassed under a reduced pressure of not more than 3.9 kPa until no bubble was observed. The degassed polymerizable composition was injected into a mold composed of a glass mold and a tape. Then, the resultant was put into a heating oven to perform polymerization for 46 hours. While polymerizing, the oven was heated from 70 to 130 degrees centigrade in multiple gradations.

A molded piece of the obtained resin was excellent in transparency and its appearance was good without any distortion. The refractive index (ne) was 1.780, while Abbe's number (νe) was 26.3. Tg was 105 degrees centigrade. With respect to the color tone, YI was 12. It was yellow colored as compared to the molded piece with a bluing agent put thereinto.

### Comparative Example 5

86 weight parts of the compound represented by the CMPD. No. 1-1, 7 weight parts of 3-mercaptothietane as a thiol compound and 7 weight parts of bis(2,3-epithiopropyl) disulfide as an episulfide compound were heated, mixed and dissolved at 75 degrees centigrade, was filtered off using a PTFA filter and then thoroughly degassed under a reduced pressure of not more than 3.9 kPa until no bubble was observed. Subsequently, the degassed polymerizable composition was injected into a mold composed of a glass mold and a tape, and then the resultant was put into a heating oven to perform polymerization for 46 hours. While polymerizing, the oven was heated from 70 to 130 degrees centigrade in multiple gradations.

A molded piece of the obtained resin was excellent in transparency and its appearance was good without any distortion. The refractive index (ne) was 1.785, while Abbe's number (νe) was 25.7. Tg was 143 degrees centigrade. With respect to the color tone, YI was 22. It was yellow colored as compared to the molded piece with a bluing agent put thereinto.

## Claims

1. A polymerizable composition containing a compound represented by the general formula (1) below having one or more thietane groups and metal atoms in a molecule, and a bluing agent, 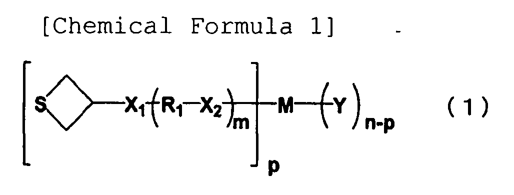 wherein, in the above general formula (1), M represents a metal atom; X₁ and X₂ each independently represent a sulfur atom or an oxygen atom; R₁ represents a divalent organic group; m represents 0 or an integer of not less than 1; p represents an integer of not less than 1 but not more than n; n represents the valence of the metal atom M; Ys each independently represent an inorganic or organic residue; and when n-p is not less than 2, Ys may combine together to form a ring containing the metal atom M.

2. The polymerizable composition as set forth in claim 1, further containing a thiol compound.

3. The polymerizable composition as set forth in claim 2, further containing an epoxy compound and/or an episulfide compound.

4. The polymerizable composition as set forth in claim 3, wherein the total amount of said thiol compound, said epoxy compound and said episulfide compound is not less than 1 but not more than 50 weight parts based on the total 100 weight parts of said compound represented by the general formula (1), said thiol compound, said epoxy compound and said episulfide compound.

5. The polymerizable composition as set forth in claim 1, wherein said bluing agent is a dye.

6. The polymerizable composition as set forth in claim 5, wherein said bluing agent is a dye containing one or two or more dyes selected from blue based dyes and violet based dyes.

7. The polymerizable composition as set forth in claim 6, wherein the content of said bluing agent is in the range of 0.001 to 500 ppm based on the total weight of a polymerizable compound contained in the polymerizable composition.

8. The polymerizable composition as set forth in claim 1, wherein said metal atom is any of atoms belonging to Groups 4, 8, 10, 11, 12, 13, 14 and 15 on the periodic table in the longer form.

9. The polymerizable composition as set forth in claim 8, wherein said metal atom is any of atoms belonging to Groups 4, 12, 13 and 14 on the periodic table in the longer form.

10. The polymerizable composition as set forth in claim 9, wherein said metal atom is a Sn atom.

11. The polymerizable composition as set forth in claim 1, wherein m is 0.

12. The polymerizable composition as set forth in claim 11, wherein X₁ is a sulfur atom.

13. The polymerizable composition as set forth in claim 12, wherein n is p.

14. The polymerizable composition as set forth in claim 13, wherein said metal atom is a Sn atom.

15. The polymerizable composition as set forth in claim 14, further containing a thiol compound.

16. The polymerizable composition as set forth in claim 15, further containing an epoxy compound and/or an episulfide compound.

17. A method for producing a resin comprising a step of subjecting the polymerizable composition as set forth in claim 1 to casting polymerization.

18. A resin obtained by polymerizing the polymerizable composition as set forth in claim 1.

19. An optical component comprising the resin as set forth in claim 18.

20. A lens comprising the resin as set forth in claim 18.
